# EUROPEAN PATENT APPLICATION

(11) **EP 4 535 064 A1**
(43) Date of publication of application: **09.04.2025**
(21) Application number: 23815502.2
(22) Date of filing: 03.03.2023
(51) Int. Cl.: G02B 30/26, G03B 21/00, G03B 21/62, H04N 13/363, H04N 13/398

(54) **IMAGE DISPLAY DEVICE**

(30) Priority: 30.05.2022 JP 2022087506
(71) Applicant: Sony Group Corporation, Tokyo 108-0075 (JP)
(72) Inventor: NAKAMURA, Tomoharu, Tokyo 108-0075 (JP); NAKAHATA, Yuji, Tokyo 108-0075 (JP); YANO, Tomoya, Tokyo 108-0075 (JP); KATO, Noriyuki, Tokyo 108-0075 (JP); KURAMOTO, Koji, Tokyo 108-0075 (JP); TANAKA, Akira, Tokyo 108-0075 (JP); YOSHIMIZU, Yuta, Tokyo 108-0075 (JP); IMAI, Yuriko, Tokyo 108-0075 (JP); KURIHARA, Takayuki, Tokyo 108-0075 (JP)
(74) Representative: D Young & Co LLP
(86) International application number: PCT/JP2023/007979
(87) International publication number: WO 2023/233739

(57) **Abstract**

An image display apparatus (100) according to the present technology includes an irradiation target (12), a rotational mechanism (14), an emitter (11), an optical section (13), and a control section. The irradiation target (12) is arranged at least partially about a specified axis (0) and onto which image light is irradiated, the irradiation target (12) including at least one angle controller that emits the pieces of image light at different emission angles for respective regions that are on the irradiation target (12) and in which the pieces of image light are incident on the irradiation target (12), and/or for respective positions that are on the irradiation target (12) and at which the pieces of image light are incident on the irradiation target (12). The rotational mechanism (14) rotates the irradiation target (12) about the specified axis (0). The emitter (11) emits the image light along the specified axis (0), the emitter (11) being capable of switching between the pieces of image light for at least a period of time shorter than a period of rotation performed by the rotational mechanism (14). The optical section (13) is arranged to face the emitter on the specified axis (0), the optical section (13) controlling an incident angle at which the image light emitted by the emitter (11) is incident on the irradiation target (12). The control section synchronizes display of an image made up by the image light with the rotation of the irradiation target (12).

## Description

### Technical Field

The present technology relates to an image display apparatus that makes it possible to perform stereoscopic display that can be viewed with naked eyes.

### Background Art

Conventionally, a technology that displays a viewpoint image for each viewpoint of a viewer who views a screen to perform stereoscopic display. For example, Patent Literature 1 discloses a display apparatus that displays a stereoscopic image by rotating a flat-plate-shaped screen. The display apparatus includes a ring-shaped polygonal mirror that is arranged about a rotational axis below the flat-plate-shaped screen. An image division is projected onto the polygonal mirror by a projector. The projected image division is reflected off the polygonal mirror to be displayed on the rotated screen. This results in forming a stereoscopic image of which different side faces can be viewed at different viewpoints (for example, paragraphs [0024] and [0025] of the specification and Fig. 1 in Patent Literature 1).

### Citation List

### Patent Literature

Patent Literature 1: Japanese Patent Application Laid-open No. 2006-010852

### Disclosure of Invention

### Technical Problem

When a method for performing stereoscopic display by rotating a flat-plate-shaped screen, as described above, is adopted, there may be a reduction in a degree of transmittance near the rotational axis of the screen, and thus there may be a degradation in image quality. Further, there is a need to provide a rotational mechanism at the center. Thus, for example, a projection distance from a projector may be made larger, and this may result in making an apparatus larger in size.

In view of the circumstances described above, it is an object of the present technology to provide a small image display apparatus that makes it possible to perform stereoscopic display with high quality. Solution to Problem

In order to achieve the object described above, an image display apparatus according to an embodiment of the present technology includes an irradiation target, a rotational mechanism, an emitter, an optical section, and a control section.

The irradiation target is arranged at least partially about a specified axis and onto which image light is irradiated, the irradiation target including at least one angle controller that emits the pieces of image light at different emission angles for respective regions that are on the irradiation target and in which the pieces of image light are incident on the irradiation target, and/or for respective positions that are on the irradiation target and at which the pieces of image light are incident on the irradiation target.

The rotational mechanism rotates the irradiation target about the specified axis.

The emitter emits the image light along the specified axis, the emitter being capable of switching between the pieces of image light for at least a period of time shorter than a period of rotation performed by the rotational mechanism.

The optical section is arranged to face the emitter on the specified axis, the optical section controlling an incident angle at which the image light emitted by the emitter is incident on the irradiation target.

The control section synchronizes display of an image made up by the image light with the rotation of the irradiation target.

In the image display apparatus, image light emitted by the emitter along the specified axis is incident on the irradiation target through the optical section, the irradiation target being arranged at least partially about the specified axis, the irradiation target being rotated about the specified axis. The irradiation target is provided with the angle controller emitting the pieces of image light in different directions for respective regions that are on the irradiation target and in which the pieces of image light are incident on the irradiation target, and/or for respective positions that are on the irradiation target and at which the pieces of image light are incident on the irradiation target. Display of an image made up by the image light is synchronized with the rotation of the irradiation target. Switching between the pieces of image light is performed as appropriate to emit the piece of image light. This results in an image being displayed to be oriented toward various viewpoints. Thus, a center portion including the specified axis is hollow, and the image display apparatus in a small size makes it possible to perform stereoscopic display with high quality.

### Brief Description of Drawings

[Fig. 1] Fig. 1 schematically illustrates an example of a configuration of an image display apparatus according to a first embodiment of the present technology.
[Fig. 2] Fig. 2 schematically illustrates characteristics of an emission angle that is set for a screen.
[Fig. 3] Fig. 3 schematically illustrates characteristics of an angle of diffusion performed by the screen.
[Fig. 4] Fig. 4 is a block diagram illustrating an example of a functional configuration of the image display apparatus.
[Fig. 5] Fig. 5 schematically illustrates an example of image data.
[Fig. 6] Fig. 6 is a schematic diagram used to describe an overview of a stereoscopic-display operation performed by the image display apparatus.
[Fig. 7] Fig. 7 schematically illustrates an example of an operation of an angle controller that displays a viewpoint image.
[Fig. 8] Fig. 8 schematically illustrates an example of an operation a division region that is included in the angle controller.
[Fig. 9] Fig. 9 schematically illustrates examples of configurations of the division regions.
[Fig. 10] Fig. 10 is a schematic diagram used to describe a relationship between the division region and a crosstalk.
[Fig. 11] Fig. 11 schematically illustrates an example of image display performed on the transparent screen including the division region and a non-diffusive region.
[Fig. 12] Fig. 12 schematically illustrates an example of display control performed using the screen illustrated in Fig. 11, the screen including the division region and the non-diffusive region.
[Fig. 13] Fig. 13 schematically illustrates an example of image display performed using a viewpoint image that includes a display region and a non-display region.
[Fig. 14] Fig. 14 schematically illustrates an example of display control using the viewpoint image illustrated in Fig. 13, the viewpoint image 30 including the display region and the non-display region.
[Fig. 15] Fig. 15 schematically illustrates an example of image display performed using the screen and the viewpoint image, where the screen includes the division region and the non-diffusive region, and the viewpoint image includes the display region and the non-display region.
[Fig. 16A] Fig. 16A schematically illustrates an example of image display performed using the screen in which the division regions are formed with no space.
[Fig. 16B] Fig. 16B schematically illustrates an example of image display performed using a screen in which there is a successive change in emission angle.
[Fig. 17] Fig. 17 is a schematic diagram used to describe a method for adjusting a position of a black stripe region.
[Fig. 18] Fig. 18 schematically illustrates an example of a configuration of a cover portion.
[Fig. 19] Fig. 19 schematically illustrates an example of arrangement of a reflective mirror.
[Fig. 20] Fig. 20 schematically illustrates an example of a configuration of cross sections of the screen and the cover portion.
[Fig. 21] Fig. 21 schematically illustrates an example of a configuration of a rotational mechanism.
[Fig. 22] Fig. 22 schematically illustrates an example of a configuration of a rotation-caused-shift reducing mechanism.
[Fig. 23] Fig. 23 schematically illustrates an example of the configuration of the rotation-caused-shift reducing mechanism.
[Fig. 24] Fig. 24 schematically illustrates an example of a configuration of a reflection reduction member.
[Fig. 25] Fig. 25 schematically illustrates an example of a configuration of an emitter.
[Fig. 26] Fig. 26 schematically illustrates examples of configurations of image display apparatuses according to a second embodiment.
[Fig. 27] Fig. 27 schematically illustrates examples of the configuration of the screen according to a third embodiment.
[Fig. 28] Fig. 28 is a schematic diagram used to describe a method for adjusting a position of a black stripe region on the screen provided with a plurality of angle controllers.
[Fig. 29] Fig. 29 schematically illustrates examples of a configuration of a screen for color display according to a fourth embodiment.
[Fig. 30] Fig. 30 schematically illustrates another example of the configuration of the screen for color display.
[Fig. 31] Fig. 31 schematically illustrates an example of a configuration of the emitter according to another embodiment, and an example of a configuration of image data.
[Fig. 32] Fig. 32 schematically illustrates examples of configurations of screens according to other embodiments.
[Fig. 33] Fig. 33 is a schematic diagram used to describe a method for displaying the viewpoint image using a divergence-type screen.
[Fig. 34] Fig. 34 schematically illustrates an example of applying a physical slit that adjusts a diffusion angle.
[Fig. 35] Fig. 35 schematically illustrates examples of division regions having different angle components in the vertical direction.
[Fig. 36] Fig. 36 schematically illustrates another example of the screen for which the emission angle is changed in an up-and-down direction.
[Fig. 37] Fig. 37 is a schematic diagram used to describe how a viewpoint image looks according to a change in upper and lower positions of a viewpoint.
[Fig. 38] Fig. 38 is a perspective view illustrating an example of a configuration of an image display apparatus.
[Fig. 39] Fig. 39 is a plan view of the image display apparatus illustrated in Fig. 38.
[Fig. 40] Fig. 40 is a bottom view of the image display apparatus illustrated in Fig. 38.
[Fig. 41] Fig. 41 is a side view of the image display apparatus illustrated in Fig. 38.
[Fig. 42] Fig. 42 is a perspective view of a screen unit that is provided to the image display apparatus illustrated in Fig. 38.
[Fig. 43] Fig. 43 is a plan view of the screen unit illustrated in Fig. 42.
[Fig. 44] Fig. 44 is a side view of the screen unit illustrated in Fig. 42.
[Fig. 45] Fig. 45 is a perspective view illustrating another example of a configuration of a screen unit.
[Fig. 46] Fig. 46 is a plan view of the screen unit illustrated in Fig. 45.
[Fig. 47] Fig. 47 is a bottom view of the screen unit illustrated in Fig. 45.
[Fig. 48] Fig. 48 is a side view of the screen unit illustrated in Fig. 45.
[Fig. 49] Fig. 49 is a perspective view illustrating another example of a configuration of a screen unit.
[Fig. 50] Fig. 50 is a plan view of the screen unit illustrated in Fig. 49.
[Fig. 51] Fig. 51 is a bottom view of the screen unit illustrated in Fig. 49.
[Fig. 52] Fig. 52 is a side view of the screen unit illustrated in Fig. 49.
[Fig. 53] Fig. 53 is a perspective view illustrating another example of a configuration of an image display apparatus.
[Fig. 54] Fig. 54 is a plan view of the image display apparatus illustrated in Fig. 53.
[Fig. 55] Fig. 55 is a bottom view of the image display apparatus illustrated in Fig. 53.
[Fig. 56] Fig. 56 is a side view of the image display apparatus illustrated in Fig. 53.
[Fig. 57] Fig. 57 is a perspective view of a screen unit that is provided to the image display apparatus illustrated in Fig. 53.
[Fig. 58] Fig. 58 is a plan view of the screen unit illustrated in Fig. 57.
[Fig. 59] Fig. 59 is a side view of the screen unit illustrated in Fig. 57.

### Mode(s) for Carrying Out the Invention

Embodiments according to the present technology will now be described below with reference to the drawings.

### <First Embodiment>

### [Configuration of Image Display Apparatus]

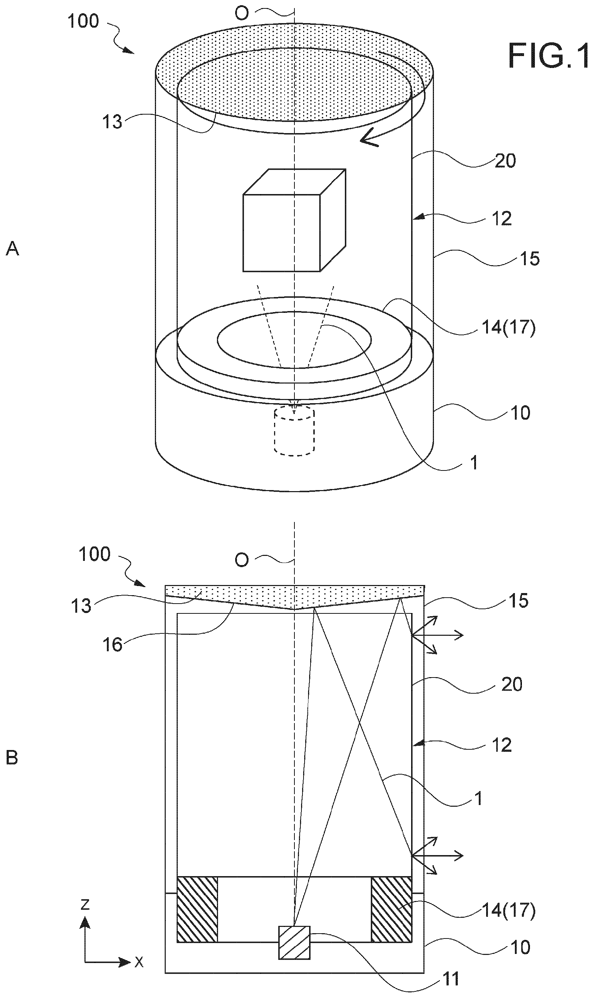

Fig. 1 schematically illustrates an example of a configuration of an image display apparatus according to a first embodiment of the present technology. A of Fig. 1 is a perspective view illustrating an appearance of an image display apparatus 100. B of Fig. 1 is a schematic cross-sectional view illustrating the configuration of the image display apparatus 100.

In the description of the present embodiment, a direction of a plane (an X-Y plane) in which the image display apparatus 100 is arranged is referred to as a horizontal direction, and a direction (a Z direction) vertical to the horizontal direction is referred to as an up-and-down direction. Of course, the present technology can be applied regardless of which orientation the image display apparatus 100 is arranged in.

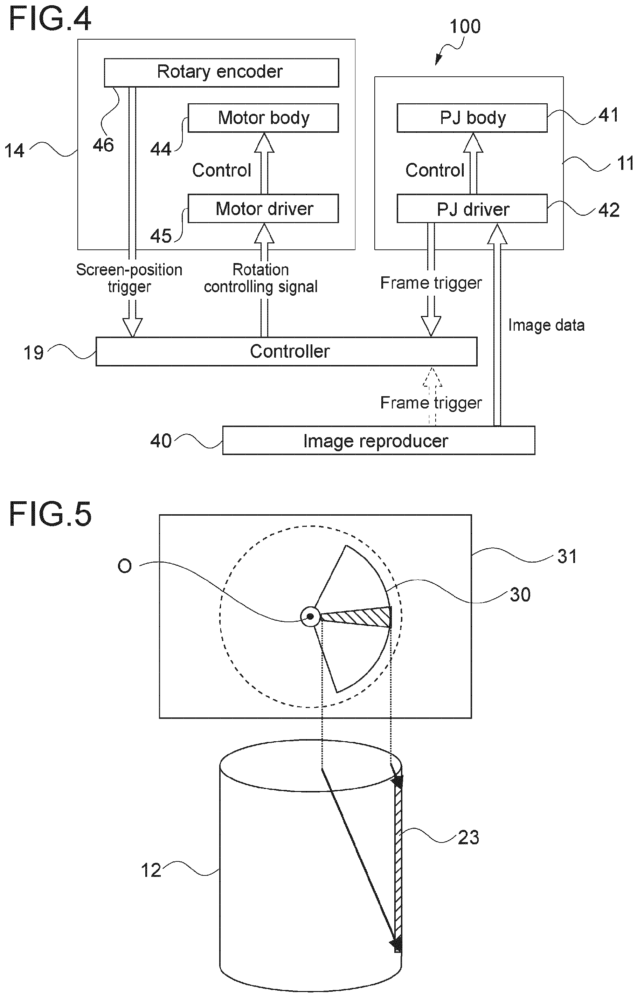

The image display apparatus 100 includes a base 10, an emitter 11, a screen 12, a reflective mirror 13, a rotational mechanism 14, a cover portion 15, and a controller 19 (not illustrated) (refer to Fig. 4).

In the image display apparatus 100, image light 1 that is emitted by the emitter 11 is incident on the screen 12 through the reflective mirror 13, where the screen 12 is rotated by the rotational mechanism 14.

The screen 12 is configured to emit the pieces of incident image light 1 at different emission angles for respective regions that are on the screen 12 and in which the image light 1 is incident on the screen 12 (or for respective positions that are on the screen 12 and at which the image light 1 is incident on the screen 12). Further, in the image display apparatus value 100, the controller 19 synchronizes display of an image made up by the image light 1 with rotation of the screen 12. Such a configuration makes it possible to display an image such that the image is oriented toward various viewpoints individually. A configuration of the screen 12 and an operation of the controller 19 will be described later.

The image display apparatus 100 is an apparatus that displays a viewpoint image for each viewpoint to perform stereoscopic display. Fig. 1 schematically illustrates a cubic image as an example of stereoscopic display formed by viewpoint images.

A configuration of each structural element of the image display apparatus 100 is specifically described below.

The base 10 is provided to a lower portion of the image display apparatus 100. The base 10 holds the emitter 11, the rotational mechanism 14, and the cover portion 15 using any holding mechanism (not illustrated). Further, a power-supply source such as a battery (not illustrated), a speaker, an element that is necessary to operate the image display apparatus 100, and the like are provided to the base 10 as necessary. The base 10 in the form of a cylinder is used in Fig. 1. The form and the like of the base 10 are not limited, and any form such as a form of a rectangular parallelepiped may be used.

The emitter 11 is arranged in a substantially center portion of the base 10 in the form of a cylinder to be oriented upward. Along an optical axis that extends in parallel with the up-and-down direction (the Z direction), the emitter 11 emits the image light 1 making up an image. In the present embodiment, the optical axis O corresponds to a specified axis.

B of Fig. 1 illustrates a cross section of the image display apparatus 100 cut in parallel with a direction of any plane including the optical axis O. The emitter 11 radially emits the image light 1 along the optical axis O. Thus, as illustrated in B of Fig. 1, the emitter 11 emits the image light 1 in a range of a specified angle of view in any plane including the optical axis O. B of Fig. 1 schematically illustrates an inner light path and an outer light path as examples of a light path through which the image light 1 passes, the inner light path being situated close to the optical axis O, the outer light path being situated distant from the optical axis O.

The emitter 11 can switch between the pieces of image light 1 for at least a period of time shorter than a period of rotation performed by the rotational mechanism 14. In other words, the emitter 11 can switch images at least once within one rotation of the screen 12. Typically, the pieces of image light 1 (images) are switched dozens of times to hundreds of times within one rotation of the screen 12. As described above, the screen 12 is a high-speed projector that switches between images at a high frame rate.

For example, a projection apparatus (a projector) that includes a light-emitting element using, for example, a laser diode (LD), a light-emitting diode (LED), or a phosphor light source; and a light modulator using a digital mirror device (DMD) is used as the emitter 11. In other words, a projector that includes a combination of an LD and a DMD, a combination of a LED and a DMD, or a combination of a phosphor light source and a DMD is used. The use of the DMD makes it possible to achieve a high frame rate.

Further, a self-luminous panel that includes an array of, for example, organic LEDs (OLEDs), µLEDs, or vertical-cavity surface-emitting lasers (VCSELs) may be used as the emitter 11. In this case, a projection optical system that projects the image light 1 is provided.

The emitter 11 may be configured to emit the image light 1 of one color, or the pieces of image light 1 corresponding to the respective colors of red, green, and blue.

In the present embodiment, an example in which the emitter 11 emits the image light 1 of one color is primarily described. Further, it is assumed that the emitter 11 includes a single DMD.

Note that the emitter 11 may be formed using a plurality of DMDs. When the image light 1 is in one color, the use of, for example, three DMDs makes it possible to reduce, up to 1/3, the frame rate necessary for each of the DMDs, compared to when a single DMD is used. As described above, the use of a plurality of DMDs makes it possible to reduce burdens imposed on each DMD.

Moreover, any projector that can switch images at a necessary frame rate may be used. For example, a projector that includes a light modulator using, for example, a microelectromechanical system (MEMS), a reflective liquid crystal, or a transmissive liquid crystal may be used.

In addition to this, the emitter 11 includes various optical elements.

For example, a projection lens is provided as a projection optical system. The projection lens is, for example, a lens group including an aspherical lens, and controls an angle of projected light (the image light 1) emitted along the optical axis O. The appropriate configuration of a projection lens also makes it possible to focus light onto an entire surface of the screen 12 through the reflective mirror 13 described later.

Further, the emitter 11 may be provided with a polarization element that controls polarization of the image light 1. An element that performs, for example, linear polarization, radial polarization, or azimuth polarization is used as the polarization element. When, for example, a polarization direction in which light incident on a screen is polarized is controlled as appropriate, this makes it possible to reduce reflectance on the surface of the screen 12, and to increase brightness.

Furthermore, the emitter 11 may be provided with an element such as a narrow-band bandpass filter that controls a wavelength width of a spectrum of the image light 1. As described later, a HOE included in the screen 12 is a highly wavelength-dependent optical element. When, for example, the wavelength width of a spectrum of the image light 1 is made smaller than a wavelength width of a diffraction spectrum of a HOE, this makes it possible to cause most of light to be diffracted by the HOE, and thus to improve the light-use efficiency of the HOE.

The screen 12 is arranged all about the optical axis O. Further, the screen 12 is in the form of a cylinder. In the present embodiment, the screen 12 is provided such that a central axis of the (cylindrical) screen 12 and the optical axis O of the emitter 11 substantially coincide. The diameter, the height, and the like of the screen 12 may be set as appropriate. In the present embodiment, the screen 12 corresponds to an irradiation target.

The screen 12 is, for example, a member obtained by providing an optical function to a transparent base member in the form of a cylinder. Here, an example in which both an inner peripheral surface and an outer peripheral surface of the screen 12 (the transparent base member) are cylindrical surfaces is primarily described. In this case, neither of the inner and outer peripheral surfaces of the screen 12 are tapered. This makes it possible to obtain the screen 12 having an excellent design.

Note that a taper for withdrawing may be formed in at least the inner peripheral surface or the outer peripheral surface of the screen 12. The taper for withdrawing is a taper used to withdraw an injection-molded transparent base member from a die. An angle of the taper for withdrawing is set to, for example, 0.1 degrees to 3 degrees. In this case, this enables mass production using injection-molding. This makes it possible to reduce costs for the apparatus.

Typically, the screen 12 is formed using a holographic optical element (HOE). In other words, the screen 12 is a screen using a holographic optical element (HOE).

The HOE is an optical element that diffracts light using interference fringes. Here, a volume HOE in which interference fringes are recorded in a material included in the HOE is used. Further, for example, a photopolymer (such as a photosensitive material) or a UV curable resin can be used as the material in which interference fringes are recorded. When interference fringes are recorded in such a material as appropriate, this makes it possible to form a HOE that includes a desired optical function.

The screen 12 is formed by, for example, an optical film being bonded to a transparent cylindrical base member, where a HOE is formed in the optical film. In this case, a joint portion of the optical film may be formed in the screen 12. As described later, the screen 12 is rotated. Thus, a viewer hardly feels uncomfortable about the joint portion. The approach of bonding the optical film makes it possible to reduce manufacturing costs for the screen 12.

Further, the screen 12 may be formed by resin being applied to a transparent cylindrical base member, where a HOE is formed in the resin. In this case, the screen 12 without a joint portion can be obtained, and this makes it possible to exhibit a high degree of transparency even in a state in which, for example, the screen 12 is not rotated.

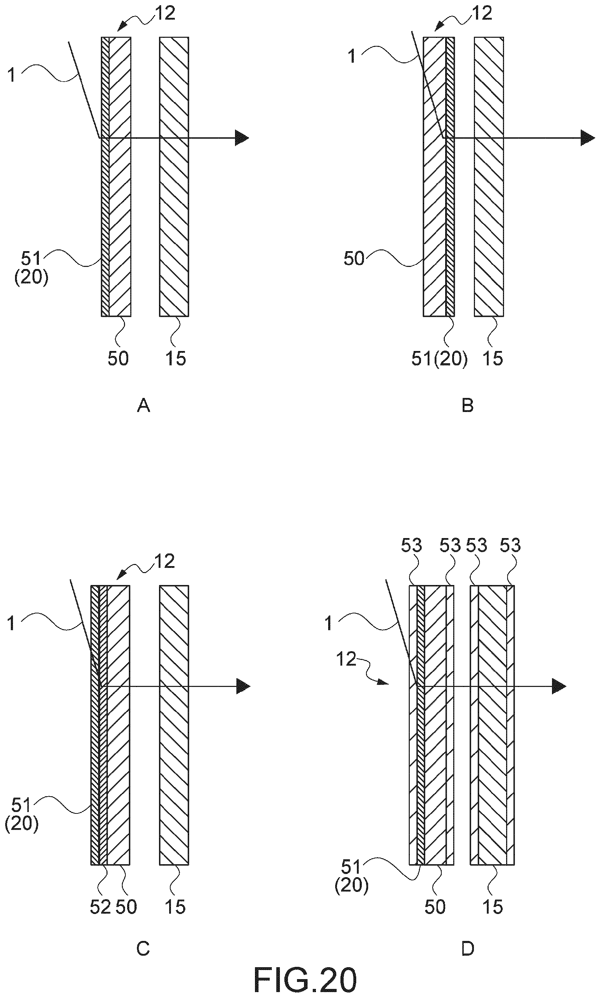

Note that structures of the screen 12 and the cover portion 15 in their thickness direction are simplified in B of Fig. 1. The structures thereof will be specifically described later with reference to, for example, Fig. 20.

When a HOE is formed, for example, reference light and object light are incident from two directions, and interference fringes generated by the reference light and the object light overlapping are recorded in a material such as a photopolymer. Accordingly, a HOE that diffracts light having a wavelength similar to the wavelength of the reference light and being incident on the HOE at an incident angle similar to an angle of incidence of the reference light, and that emits the incident light at an emission angle similar to an angle of emission of the object light, is formed. This makes it possible to provide an optical function of selectively emitting, at a specified emission angle, light having a specified wavelength and being incident at a specified incident angle.

Here, the incident angle is an angle of an incident direction of light (such as a direction of a light path of the image light 1) with respect to a direction of a normal at an incident point on the surface (such as the inner surface of the screen 12) on which the light is incident.

Further, the emission angle is an angle of an emission direction of light with respect to a direction of a normal at an emission point on the surface (such as the outer surface of the screen 12) from which the light is emitted. Note that, in a configuration in which light is diffused to be emitted, as described later, a direction in which the light is emitted with highest intensity is an emission direction at a point of the emission.

Each of the incident angle and the emission angle includes a component of an angle in a horizontal plane (an azimuth component) and a component of an angle with respect to the horizontal plane (an elevation component), with the X-Y plane orthogonal to the optical axis O being the horizontal plane. In the present embodiment, the horizontal plane corresponds to an orthogonal plane.

Note that light incident on a HOE at an angle different from a specified incident angle passes through the HOE with hardly being diffracted using interference fringes. As illustrated in Fig. 1, light that is incident on the inside of the screen 12 from diagonally above at a specified angle is selectively diffracted, and almost all of light that is incident at an angle other than the specified angle passes through the screen 12.

As described above, the screen 12 has light-transmissive properties. Thus, a viewer of the image display apparatus 100 can clearly view, for example, a background that is situated opposite and seen through the screen 12. This makes it possible to provide, for example, stereoscopic display superimposed on the background on the screen 12 with a high degree of transparency.

In the present embodiment, the screen 12 is formed using a transmissive HOE 20. The transmissive HOE 20 is a HOE that diffracts light incident on one of surfaces and that emits the light from another of the surfaces.

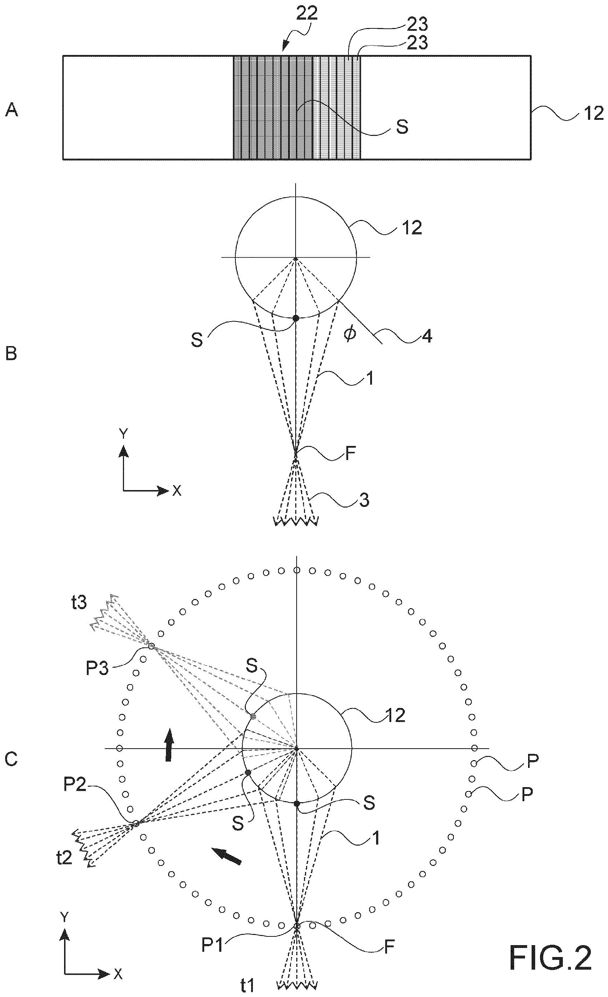

In the present embodiment, a plurality of division regions 23 for which different emission angles are respectively set, is formed in the transmissive HOE 20 (refer to Fig. 2), as described later. Consequently, the screen 12 becomes a light ray controlling HOE screen that controls an angle of emission of the image light 1. Further, the transmissive HOE 20 records therein, for example, interference fringes due to light diffused by a diffusion plate, and diffuses the incident image light 1. The interference fringes are recorded in one transmissive HOE 20.

Note that the screen 12 may be formed by a certain transmissive HOE 20 and another transmissive HOE 20 being arranged in a layered formation such that the certain transmissive HOE 20 is situated outside of the other transmissive HOE 20, where the certain transmissive HOE 20 includes a diffusion function and the division regions 23 are formed in the other transmissive HOE 20.

The transmissive HOE 20 may be hereinafter simply referred to as the screen 12.

The method for providing an optical function of the screen 12 is not limited. For example, a diffractive optical element (DOE) that is different from a HOE may be used. The screen 12 may be formed using, for example, the DOE including a relief hologram in which interference fringes are formed by use of, for example, unevenness of a surface of a material. Further, the screen 12 may be formed using an optical element such as a microlens or Fresnel-lens film that refracts light. Furthermore, the screen 12 or the like that diffuses light using scatterers such as fine particles may be used.

The reflective mirror 13 includes a reflecting surface 16 off which the image light 1 emitted by the emitter 11 is reflected. The reflective mirror 13 is arranged to face the emitter 11 on the optical axis O such that the reflecting surface 16 is oriented toward the emitter 11.

The image light 1 being emitted by the emitter 11 to be incident on the reflecting surface 16 is reflected off the reflective mirror 13 to be headed for the screen 12.

In the present embodiment, the reflective mirror 13 is fixed to an upper end of the cover portion 15 arranged to surround the screen 12, as illustrated in Fig. 1. Note that the reflective mirror 13 may be fixed to the screen 12.

In the present embodiment, the reflecting surface 16 is rotationally symmetric about the optical axis O. For example, the reflecting surface 16 includes a rotation surface obtained by rotating a curve about the optical axis O, the curve being a portion of a parabola. The rotation surface is configured such that a side corresponding to a downwardly curved portion of a parabola (a side of a focal point of a parabola) is a side off which light is reflected (the reflecting surface 16) and such that an axis of the parabola is different from the optical axis O.

In the present embodiment, the reflecting surface 16 includes an apex on the optical axis O. In other words, the reflecting surface 16 is curved outward at a point at which the rotation surface intersects the optical axis O, as viewed from the emitter 11. Further, in a cross section of the reflective mirror 13, a left curve and a right curve that are situated across the optical axis O from each other form a parabola that is curved toward the emitter 11.

Note that the reflective mirror 13 may be configured such that a center portion of the reflective mirror 13 (a tip portion of a mirror) is flat. This enables the tip portion of the reflective mirror 13 to be invisible to the outside of the apparatus.

A specific configuration and the like of the reflective mirror 13 are not limited. For example, any material such as resin including acrylic, glass, or metal may be used as a material of the reflective mirror 13. For example, mirror finishing is performed on a surface of such a material such that roughness on the surface Ra is less than about 0.1 µm. Accordingly, the reflective mirror 13 is formed. Moreover, any material may be used for the reflective mirror 13 according to, for example, the accuracy in processing, or the productivity.

Further, for example, a high-reflectivity coating may be applied to the reflecting surface 16 of the reflective mirror 13 using a thin film of, for example, aluminum or silver. This enables the image light 1 incident on the reflecting surface 16 to be reflected off the reflecting surface 16 with a high degree of efficiency. Further, for example, a protective coating for protecting the reflecting surface 16 may be applied to a surface of the reflecting surface 16 as appropriate using a thin film such as an SiO₂ film or a polymerized film. Moreover, materials or the like of, for example, a high-reflectivity coating and a protective coating are not limited.

In the present embodiment, the reflective mirror 13 serves as an optical section that controls an incident angle at which the image light 1 emitted by the emitter 11 is incident on the screen 12. Specifically, the reflective mirror 13 performs control such that the incident angle at which the image light 1 is incident on the screen 12 is substantially constant.

For example, the image light 1 upwardly radially emitted by the emitter 11 is radially reflected off the reflecting surface 16 of the reflective mirror 13 toward all of the periphery of the screen 12. As described above, the reflecting surface 16 includes a parabola-shaped rotation surface. Thus, the image light 1 reflected off the reflecting surface 16 is incident on the screen 12 at a substantially constant incident angle, as illustrated in B of Fig. 1. In the cross section including the optical axis O, the image light 1 reflected off each of a left portion of the reflecting surface 16 and a right portion of the reflecting surface 16 that are situated across the optical axis O from each other, is emitted in the form of substantially parallel light to be headed for the screen 12, as illustrated in, for example, B of Fig. 1.

As described above, the screen 12 selectively diffracts light incident at a specified incident angle. The image light 1 is reflected off the reflective mirror 13 to be incident on the screen 12 at the incident angle. This enables the image light 1 to be incident on an entire surface of the screen 12. This makes it possible to improve the efficiency in diffraction performed on the entire surface of the screen 12, and thus to perform image display brightly.

As described above, it can be said that the reflective mirror 13 is an angle control mirror that controls an incident angle at which the image light 1 is incident on the screen 12.

The angle of incidence on the screen 12 is set in a range of, for example, between 30 degrees and 85 degrees, inclusive. When the incident angle is larger than or equal to 30 degrees and relatively small, a display range in the height direction is small. This makes it possible to use, for example, the screen 12 having a large diameter (having a small height), or the circumferentially elongated screen 12.

Further, when the incident angle is larger than, for example, 85 degrees, the image light 1 is reflected off the screen 12, and this results in rapidly reducing the efficiency in using light. Thus, a reduction in the efficiency in using the image light 1 can be prevented by setting the incident angle to 85 degrees or lower.

Moreover, a configuration of the reflective mirror 13 is not limited. For example, the reflecting surface is rotationally symmetric, as illustrated in Fig. 1. This makes it possible to perform full 360-degree peripheral display. Further, stereoscopic display can also be performed, with a range in a circumferential direction being narrowed down using a portion of the rotationally symmetric form.

The rotational mechanism 14 is connected to the screen 12 and rotates the screen 12 about the optical axis O. Fig. 1 schematically illustrates a cylindrical rotational member 17 that serves as the rotational mechanism 14. The rotational member 17 is a member that is arranged such that the optical axis O is a central axis of the rotational member 17 and that rotates about the optical axis O. A lower end of the screen 12 is fixed to the rotational member 17. The image light 1 emitted by the emitter 11 passes through an opening of the rotational member 17 to be incident on the reflective mirror 13.

The rotational member 17 is, for example, a cylindrical member, and is provided to the base 10 to be rotatable by a drive section (not illustrated) such as a motor. For example, setting is performed such that the rotational member 17 has an outer diameter similar in size to a diameter of the screen 12 and such that the rotational member 17 has an inner diameter that is sized not to block the image light 1.

In the present embodiment, the emitter 11 and the rotational mechanism 14 are arranged on the same side, as viewed from the screen 12, as illustrated in Fig. 1. Here, the emitter 11 and the rotational mechanism 14 are collectively arranged below the screen 12, and this makes it possible to make a configuration of a portion above the screen 12 simply. This makes it possible to make the apparatus smaller in size, compared to when, for example, the emitter 11 and the rotational mechanism 14 are arranged across the screen 12 from each other.

The cover portion 15 is a cover used to protect the rotated screen 12. The cover portion 15 is arranged to surround the screen, and is formed using a member that has light-transmissive properties. In the example illustrated in Fig. 1, the cylindrical cover portion 15 is used. Setting is performed such that the cover portion 15 has an inner diameter larger than the diameter of the screen 12. A lower end of the cover portion 15 is fixed to the base 10 such that the optical axis O is a central axis of the cover portion 15, and the cover portion 15 surrounds all of the periphery of the screen 12. Further, the reflective mirror 13 described above is fixed to an upper end of the cover portion 15.

The provision of the cover portion 15 results in improving the safety and soundproof properties of the apparatus.

The controller 19 synchronizes display of an image made up by the image light 1 with rotation of the screen 12. For example, images each made up by the image light 1 are switched multiple times within one rotation of the screen 12 to be displayed on the screen 12 in the image display apparatus 100. Images (videos) of a series of images (videos) displayed here respectively correspond to angles of rotation (positions of rotation) of the screen 12. When, for example, the number of times that images are switched within one rotation is N, N kinds of images that correspond to respective rotation angles ωi (i = 1, 2, ..., N) are displayed within one rotation of the screen 12. The controller 19 performs synchronization control such that the N kinds of images are respectively displayed at proper rotation angles.

In the present embodiment, the controller 19 controls the rotational mechanism 14 rotating the screen 12, and synchronizes rotation of the screen 12 with display of an image made up by the image light 1. The control is performed such that viewpoint images are displayed properly to be oriented toward respective viewpoints of a plurality of viewpoints at which the screen 12 is viewed, as described later.

In the present embodiment, the controller 19 corresponds to a control section.

### [Configuration of Screen]

Fig. 2 schematically illustrates characteristics of an emission angle that is set for the screen 12. A of Fig. 2 is a schematic two-dimensional deployment view of the cylindrical screen 12. B of Fig. 2 schematically illustrates the cylindrical screen 12, as viewed in a horizontal plane. C of Fig. 2 schematically illustrates the screen 12 being rotated, as viewed in the horizontal plane.

The characteristics of the emission angle set for the screen 12 are described below.

As illustrated in A of Fig. 2, the screen 12 includes an angle controller 22.

The angle controller 22 is a section that is provided to the screen 12 to control an angle of emission of the image light 1 incident on the screen 12. The angle controller 22 may be formed in a single region on the screen 12 or may be divided to be formed in regions, on the screen 12, that are spaced from each other. In the present embodiment, an example in which the angle controller 22 is formed in a single region without being divided is primarily described.

In A of Fig. 2, a single angle controller 22 is provided to a center portion in the deployment view of the screen 12.

A central position of the angle controller 22 in a circumferential direction of the screen 12 (in a right- and-left direction in the deployment view) is hereinafter referred to as a reference position S of the screen 12. The reference position S is used as a reference for indicating a position on the screen 12.

The angle controller 22 emits the pieces of image light 1 at different emission angles for respective regions that are on the screen 12 and in which the pieces of image light 1 are incident on the screen 12. Here, the different emission angles mean that emission angles at which the pieces of image light 1 incident at the same incident angle are emitted are different. Thus, the angle controller 22 is configured such that the pieces of image light 1 incident on respective regions of the screen 12 at the same incident angle are emitted at different emission angles for the respective regions. A plurality of regions for which different emission angles are set is hereinafter referred to as division regions 23.

When, for example, the pieces of image light 1 passing through the same light path are incident on the screen 12 in different division regions 23 due to rotation of the screen 12, the pieces of image light 1 are emitted at different emission angles. Note that there is no change in emission angle in one division region 23. Thus, the image light 1 reflected off the reflective mirror 13 to be projected on the screen 12 is split by the plurality of division regions 23 and the pieces of image light 1 obtained by the split are emitted at different emission angles.

In the present embodiment, the angle controller 22 includes a plurality of division regions 23 splitting the image light 1 incident on the angle controller 22 through the reflective mirror 13 to respectively emit, at different emission angles, the pieces of image light 1 obtained by the split, as described above.

For example, images (division images) obtained by division to be displayed may be used in combination to display a viewpoint image, the division being performed by a plurality of division regions 23. Further, the division region 23 is a relatively small region. This makes it possible to easily expose an accurate HOE to light (to generate interference fringes) using an optical system small in size.

In the present embodiment, a plurality of division regions 23 is set to extend on the screen 12 in parallel with a direction along the optical axis O, as illustrated in A of Fig. 2. Here, a vertical direction (an up-and-down direction in the deployment view) of the screen 12 corresponds to the direction along the optical axis O on the screen 12. Note that the vertical direction is a direction that is orthogonal to the circumferential direction of the screen 12.

Each of the plurality of division regions 23 is a rectangular region that extends in parallel with the vertical direction of the screen 12. Here, each division region 23 has a length equal in the vertical direction to the screen 12. However, for example, the division region 23 may have a smaller length in the vertical direction than the screen 12.

Further, the respective division regions 23 have equal lengths (widths) in the circumferential direction. However, the widths of the division regions 23 may be set individually. For example, an angle of emission of the image light 1 that is set for the division region 23 corresponding to a wide azimuth has a width appearing to be made smaller. In order to correct such appearance, setting may be performed such that the division region 23 corresponding to a wide emission azimuth angle has a larger width.

Moreover, the method for setting the division region 23 is not limited.

In the present embodiment, emission angles are respectively set for a plurality of division regions 23 such that the emission angles include different components of angles formed in a horizontal plane (the X-Y plane) orthogonal to the optical axis O, as illustrated in B of Fig. 2. As described above, the angle of emission of the image light 1 emitted from the screen 12 includes an azimuth component ϕ that is a component of an angle formed in the horizontal plane, and an elevation component θ that is a component of an angle formed with the horizontal plane. Setting is performed such that the respective division regions 23 have different azimuth components ϕ.

B of Fig. 2 schematically illustrates an emission vector 3 (a light path) in the horizontal plane using a dotted arrow, the emission vector 3 being an emission vector of the image light 1 emitted from the screen 12. Here, an angle, in the horizontal plane, that is formed by a normal vector 4 and the emission vector 3 of the image light 1 corresponds to an azimuth component ϕ of an angle of emission of the image light 1, where the normal vector 4 is a vector of a normal to the screen 12 at an emission position at which the image light 1 is emitted.

B of Fig. 2 illustrates five emission vectors 3, where the emission vector 3 passing through the reference position S is situated in the middle of the five emission vectors 3. Start points of the five emission vectors 3 (emission positions at which the pieces of image light 1 are emitted) are points situated on the division regions 23 different from each other, and azimuth components ϕ corresponding to the five emission vectors 3 are different from each other. Note that, in the present embodiment, elevation components θ of emission angles set for the respective division regions 23 are set to the same value.

As described above, the image light 1 is spilt linearly by a plurality of division regions 23 in parallel with the vertical direction, and the pieces of image light 1 obtained by the split are respectively emitted by the plurality of division regions 23 in different directions in the horizontal plane.

For example, a light path that extends toward the screen 12 is discussed. The light path intersects different division regions 23 successively with rotation of the screen 12. Thus, the pieces of image light 1 obtained by the linear spilt are successively emitted at different emission angles. This makes it possible to easily perform stereoscopic display that can be viewed from all directions covering the complete 360 degrees circumference.

Further, the emission angle is set for each of the plurality of division regions 23 illustrated in B of Fig. 2 such that the pieces of image light 1 emitted from the respective division regions 23 converge in the horizontal plane. In other words, azimuth components ϕ of emission angles in the respective division regions 23 are set such that the emission vectors 3 respectively having their start points in the respective division regions 23 converge. Here, a convergence position F in the horizontal plane is set around the screen 12, and the azimuth components ϕ are set such that the emission vectors 3 coming from the division regions 23 pass through the convergence position F. Note that the convergence position F is, for example, a position in the horizontal plane. For example, a linear region that passes through the convergence position F to extend in parallel with the Z direction is a region to which the pieces of image light 1 emitted from the respective division regions 23 converge.

In B of Fig. 2, the convergence position F is set in a line that passes through the optical axis O and the reference position S in the horizontal plane. Without being limited thereto, the convergence position F may be set at any point at which the pieces of image light coming from the respective division regions 23 can converge. Further, a distance from the optical axis O to the convergence position F is set as appropriate according to, for example, a size of the screen 12 or an expected viewing distance.

As described above, images respectively projected onto a plurality of division regions 23 (the angle controller 22) can be viewed simultaneously when, for example, the screen 12 is seen from the convergence position F in the configuration in which the pieces of image light 1 emitted from the respective division regions 23 converge.

C of Fig. 2 schematically illustrates the screen 12 illustrated in B of Fig. 2 being rotated clockwise. Here, on the assumption that there is a viewpoint P of a viewer who views the screen 12, a plurality of viewpoints P is set around the screen 12.

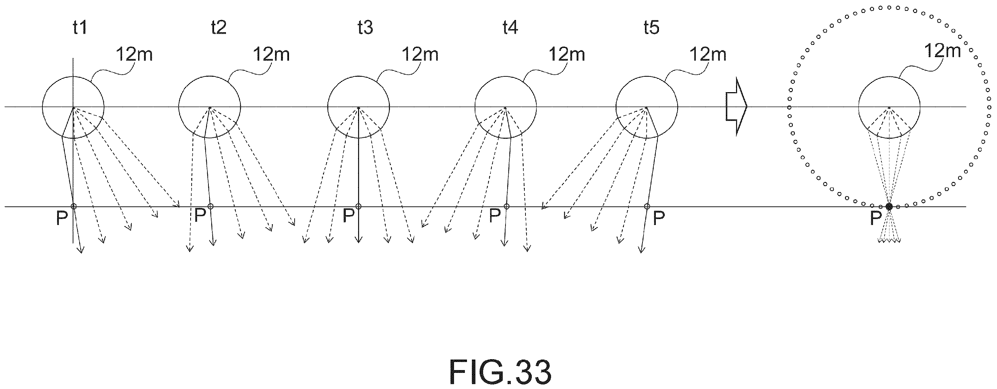

The plurality of viewpoints P is set annularly about the optical axis O. Further, a distance from the optical axis O to the convergence position F is set to be a distance from the optical axis O to each viewpoint P. In other words, each viewpoint P is set to overlap the convergence position F. In this case, a viewpoint image displayed on the screen 12 can be viewed at high resolution at each viewpoint P. Further, when the screen 12 is viewed at a distance to the screen 12 that is different from the distance from the convergence position F to the screen 12, videos (viewpoint images) on the entirety of the screen 12 can also be viewed during one rotation of the screen 12, where the viewable videos (viewpoint images) are viewed in the form of residual images of a plurality of line-shaped videos respectively coming from the division regions 23. This principle is similar to a principle described later with reference to the Fig. 33.

In C of Fig. 2, the reference position S is situated on the lower side in the figure relative to the optical axis O at a time t1. Thus, an image displayed by the angle controller 22 (a plurality of division regions 23) on the screen 12 can be viewed at the time t1 at a viewpoint P1, on the lower side in the figure, that is situated on a line extending toward the reference position S from the optical axis O. Thus, an image displayed at the time t1 is a viewpoint image oriented toward the viewpoint P1.

Likewise, the reference position S is situated on the lower left in the figure relative to the optical axis O at a time t2, and an image is displayed to be oriented toward a viewpoint P2. Thus, the image displayed at the time t2 is a viewpoint image oriented toward the viewpoint P2. Further, the reference position S is situated on the left in the figure relative to the optical axis O at a time t3, and an image is displayed to be oriented toward a viewpoint P3. Thus, the image displayed at the time t3 is a viewpoint image oriented toward the viewpoint P3.

As described above, the screen 12 is rotated, and display-target images are switched at each rotation position (at each rotation timing). Accordingly, different images can be switched to be displayed for a plurality of annularly arranged viewpoints P.

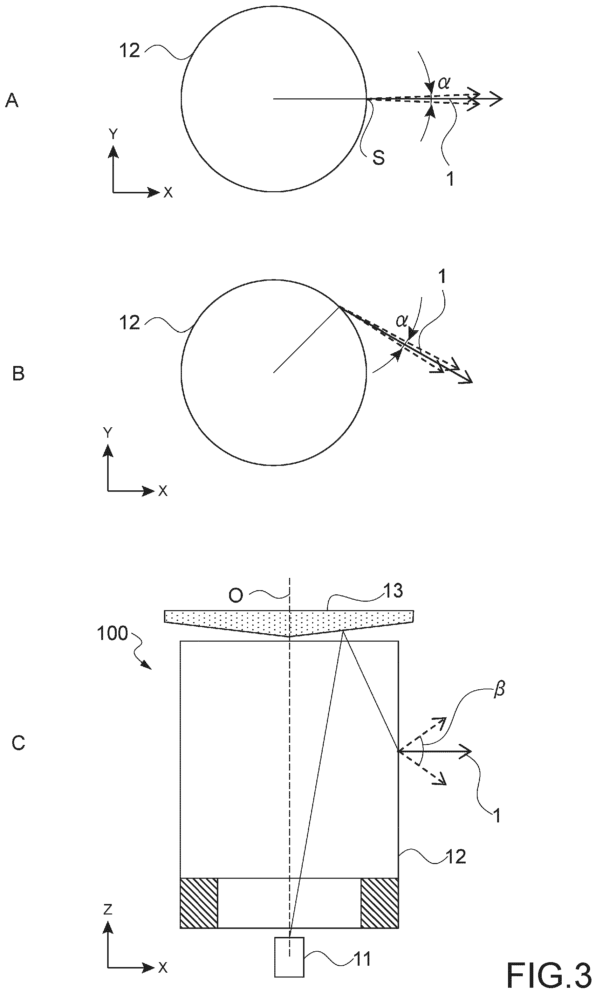

Fig. 3 schematically illustrates characteristics of an angle of diffusion performed by the screen.

Each of the plurality of division regions 23 described above includes a diffusion function of diffusing the image light 1 to emit the diffused image light 1 in order to display an image projected onto the region. In other words, each of the plurality of division regions 23 can diffuse the image light 1 to emit the diffused image light 1 at an emission angle set for the division region 23. For example, each division region 23 diffuses the image light 1 to provide a specified intensity distribution, where the diffusion is performed in directions centered at an emission direction determined on the basis of the emission angle.

The characteristics of an angle of diffusion of the image light 1 that is performed by the division region 23 is described below with reference to Fig. **3****.**

A and B of Fig. 3 are schematic diagrams used to describe a diffusion angle in the horizontal plane. Further, C of Fig. 3 is a diagram used to describe the diffusion angle in a vertical plane that is orthogonal to the horizontal plane. A, B, and C of Fig. 3 each schematically illustrate the image light 1 diffused to be emitted from the division region 23. A solid arrow represents the image light 1 emitted at an emission angle. Further, a dotted arrow represents the image light 1 diffused to be emitted, the diffusion being performed at an angle formed by being centered at a direction corresponding to the emission angle.

With respect to an angle range of an angle at which each of the plurality of division regions 23 diffuses the image light 1 in the present embodiment, an angle range α of the angle formed in the horizontal plane orthogonal to the optical axis O is set smaller than an angle range β of the angle formed with the horizontal plane. Here, the angle range α refers to a range of an azimuth angle at which the image light 1 is diffused, and the angle range β refers to a range of an elevation angle at which the image light 1 is diffused.

A of Fig. 3 illustrates the image light 1 emitted along the horizontal plane from the division region 23 provided at the reference position S. In this case, an azimuth component ϕ of the emission angle is 0 degrees. The image light 1 is diffused at the angle range α to be emitted in parallel with a direction of a normal to the outer peripheral surface of the screen 12 in the horizontal plane. Further, B of Fig. 3 illustrates the image light 1 emitted along the horizontal plane from the division region 23 provided distant from the reference position **S.** An azimuth component ϕ larger than the azimuth component illustrated in A of Fig. 3 is set for this division region. However, a range of an angle at which the image light 1 is diffused in the horizontal plane is similar to the angle range α illustrated in A of Fig. **3****.**

Further, C of Fig. 3 illustrates the image light 1 emitted along a cross section including the optical axis O (the vertical plane orthogonal to the horizontal plane) from the division region 23 provided at the reference position **S.** The image light 1 is diffused at the angle range β larger than the angle range α to be emitted in parallel with a direction of a normal to the outer peripheral surface of the screen 12 in the vertical plane. Note that the angle range β used for diffusion performed in the vertical plane is set for another division region 23 similarly to the case of C of Fig. **3****.** Further, an elevation component of the emission angle is 0 degrees in C of Fig. 3, and the image light 1 is emitted to be headed for the front of the screen 12. The elevation component of the emission angle is not limited thereto, and, for example, the screen 12 emitting the image light 1 upward or downward may be configured as appropriate according to the application.

As described above, the division region 23 includes an anisotropic diffusion function of diffusing the image light 1 at a small angle in the horizontal direction (an azimuth direction) and of diffusing the image light at a large angle in the vertical direction (an elevation direction).

When, for example, the range α of an angle at which the image light 1 is diffused in the horizontal direction is set relatively large, it is conceivable that the image light 1 to be emitted to be oriented toward a certain viewpoint P could be actually emitted to be oriented toward another viewpoint P next to the certain viewpoint **P.** Consequently, a viewpoint image for the certain viewpoint P may be seen at the other viewpoint P, and then a crosstalk in a 3D image perceived by a viewer may occur.

On the other hand, such a crosstalk can be sufficiently avoided by setting the angle range α small in the present embodiment. Further, a range of an elevation angle at which a viewpoint image is viewable can be made larger by setting the angle range β larger than the angle range α. This makes it possible to perform stereoscopic display viewable in a large elevation range while preventing a crosstalk.

A method for setting a distribution of diffused light is not limited. For example, the distribution in the horizontal direction is set to be a top-hat distribution that exhibits a rectangular change in light amount (brightness), or to be a Gaussian distribution. In this case, the angle range α is set to be, for example, a half width of a light amount distribution of diffused light in the horizontal direction. Further, the distribution in the vertical direction may also be set to be the top-hat distribution or the Gaussian distribution.

The distribution of diffused light is set as appropriate such that the occurrence of, for example, a crosstalk or moiré in a 3D image is prevented and such that the brightness in a 3D image is improved.

### [Display Control]

Fig. 4 is a block diagram illustrating an example of a functional configuration of the image display apparatus 100.

The image display apparatus 100 includes an image reproducer 40 in addition to the controller 19 described above. The controller 19 and the image reproducer 40 may be configured using, for example, separate computers (computational apparatuses) or a single computer.

Further, a projector body 41 (a PJ body) and a projector driver 42 (a PJ driver) are provided to the emitter 11. Further, a motor body 44, a motor driver 45, and a rotary encoder 46 are provided to the rotational mechanism 14.

The image reproducer 40 outputs image data of content displayed on the image display apparatus 100. Here, the content displayed on the image display apparatus 100 is stereoscopically displayed content, and includes a moving image (a video) or still image that can be viewed stereoscopically. Thus, the image data is data that includes a plurality of viewpoint images used to perform stereoscopic display.

In the present embodiment, identical viewpoint images can be displayed at the same time, as described with reference to Fig. 2. Thus, image data is data in which various viewpoint images are switched at a high speed at a relatively high frame rate. When, for example, a plurality of viewpoint images displayed within one rotation of the screen 12 is set to be one image set, the image data is data including a plurality of image sets.

The projector body 41 is provided with, for example, a light-emitting element and a light modulator that modulates light emitted by the light-emitting element to generate the image light **1.**

The projector driver 42 operates the projector body 41 (the light modulator) on the basis of image data (a video signal) output by the image reproducer 40. Further, the projector driver 42 outputs a frame trigger. The frame trigger is a signal that indicates a timing at which the projector body 41 displays a viewpoint image (a frame). For example, a signal that indicates a timing at which a viewpoint image at the beginning of an image set is to be displayed, is output as the frame trigger. Note that a corresponding frame trigger may be output for each viewpoint image included in an image set.

The motor body 44 is an electric motor that includes, for example, a rotor and a stator (both are not illustrated) and in which the rotor is rotated relative to the stator fixed to the base 10. The rotational member 17 described with reference to Fig. 1 is connected to the rotor, and the screen 12 is rotated by rotation of the rotor.

The motor driver 45 supplies a drive current to the motor body 44 on the basis of a rotation controlling signal that is output by the controller 19, and rotates the rotor.

The rotary encoder 46 is configured using, for example, a code wheel that indicates a rotation position of the rotor, and an encoder that detects the rotation position by use of the code wheel. The rotary encoder 46 is a sensor that measures the number of rotations (a rotation speed) of and the rotation position of the rotor (the screen 12). The rotary encoder 46 outputs a screen-position trigger. This is a trigger signal that indicates the rotation position for the screen **12.** For example, a signal that indicates a timing at which the screen 12 passes by a preset rotation position (such as an origin position at which the rotation angle is 0 degrees) is output as the screen-position trigger. For example, the screen-position trigger is used to control a phase of a rotation. Moreover, a spacing trigger that indicates spacing with which the screen 12 is rotated may be output. For example, the spacing trigger is output with every specified angular spacing (for example, **0.2** degrees) to be used for speed control.

The controller 19 synchronizes display of a viewpoint image made up by the image light 1 with rotation of the screen 12 such that viewpoint images can be viewed at respectively corresponding viewpoints P of a plurality of viewpoints P set around the screen **12.** This is control performed to precisely synchronize a series of viewpoint images with the rotating screen 12 at a high speed, where the emitter 11 switches between the pieces of image light 1 to display the series of viewpoint images. This makes it possible to display a proper viewpoint image for each one of a plurality of viewpoints P.

In the present embodiment, the rotational mechanism 14 is controlled using a rotation controlling signal such that an angle of rotation of the rotating screen 12 upon displaying a viewpoint image is an angle corresponding to the viewpoint image.

As illustrated in Fig. 4, the controller 19 reads a frame trigger that is supplied by the projector driver 42 as well as a screen-position trigger and a spacing trigger that are supplied by the rotary encoder 46. Further, on the basis of these triggers, the controller 19 generates a rotation controlling signal that controls, for example, a speed and a phase of a rotational motion of the motor body 44.

Note that a frame trigger may be output not from the projector driver 42, but from the image reproducer 40. Fig. 4 schematically illustrates, using a dotted arrow, a frame trigger that is output by the image reproducer 40. Further, each of the projector driver 42 and the image reproducer 40 outputs a frame trigger, and a rotation controlling signal may be generated using both of the two frame triggers.

Fig. 5 schematically illustrates an example of image data.

Fig. 5 schematically illustrates, in an upper portion, image data 31 that includes a viewpoint image 30 that is projected by the projector body 41 at a certain timing. The image data 31 is a two-dimensional image (a frame image) that is displayed in a frame, and the center of the image data 31 coincides with a position at which the optical axis O intersects the image data 31. Note that actual image data 31 is video data that includes a plurality of frame images.

Further, Fig. 5 schematically illustrates, in a lower portion, the viewpoint image 30 being projected onto the rotating screen 12 through the reflective mirror 13.

For example, the viewpoint image 30 is projected onto the entirety of the angle controller 22 provided to a portion of the screen 12. In this case, the viewpoint image 30 as viewed in a two-dimensional plane is a circular-sector-shaped image, as illustrated in Fig. 5. Note that Fig. 5 illustrates a hatched region that is a portion projected onto the division region 23 including the reference position **S.**

Note that the position of the division region 23 is moved when the screen 12 is rotated. Thus, in order to project the viewpoint image 30 onto the moved division region 23, there is a need to change the position of the viewpoint image 30 in the image data 31. Specifically, the circular-sector-shaped viewpoint image 30 is rotated around the center of the image data 31. Further, when the screen 12 is rotated, there is a change in a viewpoint P for which an image is displayed by the division region 23.

For example, it is assumed that the total number of a plurality of annularly arranged viewpoints P is **N.** In this case, the image data 31 is data in which N viewpoint images 30 respectively corresponding to N viewpoints P are switched successively. Further, the rotation position of each viewpoint image 30 is shifted with a viewpoint pitch set correspondingly to the plurality of viewpoints P.

The controller 19 specifies, using a frame trigger, a timing of displaying a reference frame (such as the viewpoint image 30 at the beginning of a set of images displayed within one rotation). Further, the rotation position for the screen 12 is specified using a screen-position trigger. For example, rotation of the screen 12 is controlled using the information described above, such that a proper viewpoint image 30 is projected at a proper position on the screen 12.

### [Stereoscopic Display]

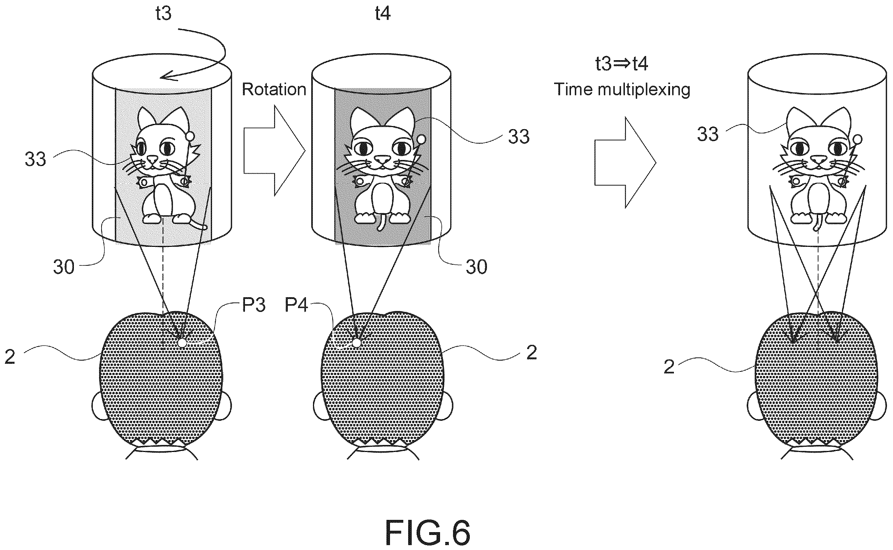

Fig. 6 is a schematic diagram used to describe an overview of a stereoscopic-display operation performed by the image display apparatus. Here, Fig. 6 schematically illustrates the viewpoint images 30 being displayed on the screen 12, where the viewpoint images 30 are respectively obtained when a character that is 3D content 33 is viewed at a right viewpoint and when the character that is the 3D content 33 is viewed at a left viewpoint.

In Fig. 6, at a time t3, a viewpoint P3 at which the viewpoint image 30 can be viewed coincides with a position (a direction) of a right eye of a viewer 2 who is viewing the screen 12. Here, a right-eye viewpoint image 30 is displayed by the image reproducer 40 and the emitter 11. Thus, the viewer 2 can view the right-eye viewpoint image 30 with his/her right eye at the time t3.

Thereafter, the screen 12 is rotated. At a time t4, a viewpoint P4 at which the viewpoint image 30 can be viewed coincides with a position (a direction) of a left eye of the viewer 2. Here, a left-eye viewpoint image 30 is displayed by the image reproducer 40 and the emitter 11. Thus, the viewer 2 can view the left-eye viewpoint image 30 with his/her left eye at the time t4.

A period between the time t3 and the time t4 is short, and an image viewed by the viewer 2 during this period is perceived as a residual image. Thus, the viewer 2 perceives an image obtained by performing time multiplexing with respect to the time t3 and the time t4. In other words, the viewer 2 perceives, at the time t4, a residual image of the right-eye viewpoint image 30 together with the left-eye viewpoint image 30 displayed at present. This makes it possible to stereoscopically perceive the 3D content 33 displayed as the viewpoint image 30.

An example in which the respective viewpoint images 30 are displayed by the angle controller 22 (a plurality of division regions 23) is described in detail.

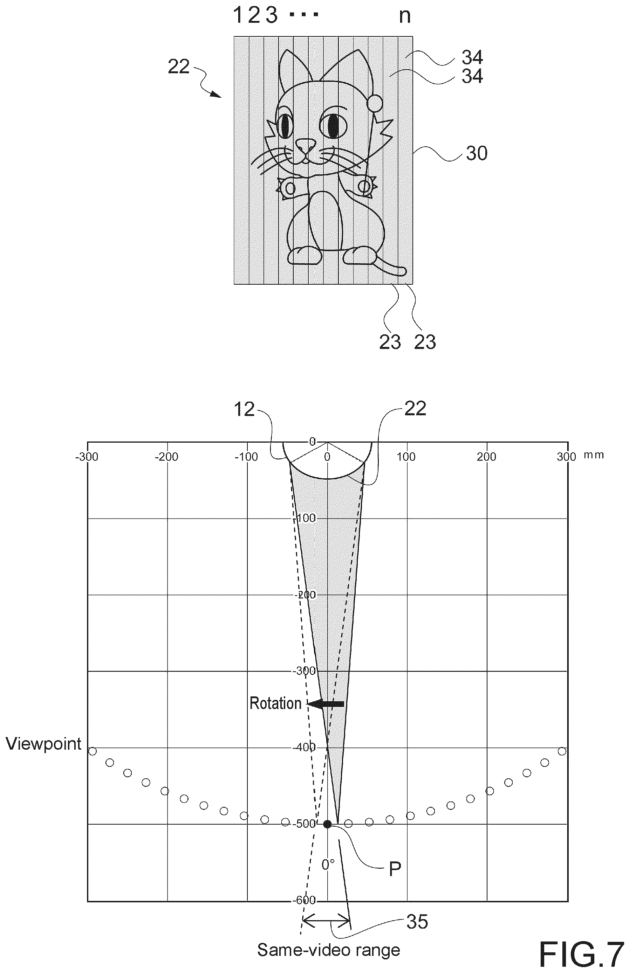

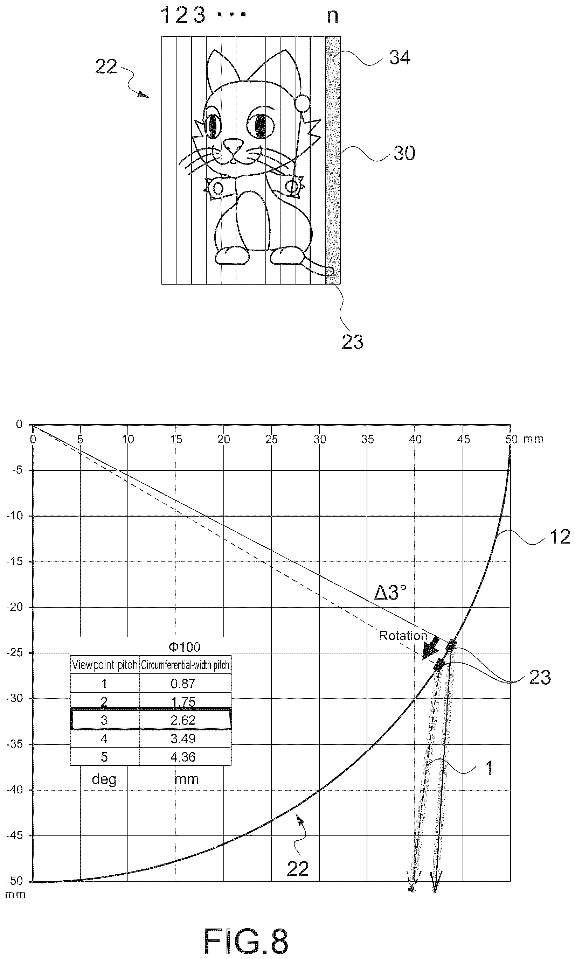

Fig. 7 schematically illustrates an example of an operation of the angle controller displaying a viewpoint image. Fig. 8 schematically illustrates an example of an operation of the division region included in the angle controller. Figs. 7 and 8 illustrate an example in which viewpoints P of a plurality of viewpoints P are set annularly about the optical axis O with a viewpoint pitch of 3 degrees. Here, the viewpoint images 30 are switched every time the screen 12 is rotated 3 degrees. It is assumed that, in the following description, a line extending downward in the figure, as viewed from the screen 12, is defined as an azimuth angle of 0 degrees and that the angle becomes larger clockwise.

Further, Figs. 7 and 8 illustrate an example of a configuration in which the screen 12 has a diameter of 100 mm and a distance from the optical axis O to each viewpoint P (a convergence position) is 500 mm. Of course, a size of the screen 12 and a position of the viewpoint P are not limited, and designing may be performed discretionarily.

Fig. 7 illustrates, in an upper portion, the viewpoint image 30 being displayed by the angle controller 22 to be oriented toward a viewpoint P corresponding to the azimuth angle of 0 degrees. This viewpoint image 30 is displayed by the image light 1 being diffused by each of the plurality of division regions 23 included in the angle controller 22 and by the diffused image light 1 being emitted to be oriented toward the viewpoint P corresponding to the azimuth angle of 0 degrees.

The plurality of division regions 23 is hereinafter referred to as a first division region 23, a second division region 23, ..., and an n-th division region 23 from the left in the figure. Further, an image projected onto each division region 23 is referred to as a division image 34 of the viewpoint image 30.

Further, Fig. 7 illustrates, in a lower portion, a rotation range in which the viewpoint image 30 is displayed to be oriented toward the viewpoint P corresponding to the azimuth angle of 0 degrees. This range is a same-video range 35 in which the same viewpoint image 30 is projected onto the angle controller 22 and displayed on the angle controller 22.

As illustrated in Fig. 7, the same-video range 35 is a range formed between a certain angular position and another angular position, the certain angular position being situated midway between a target viewpoint P and an adjacent viewpoint P situated on one of sides of the target viewpoint P, the other angular position being situated midway between the target viewpoint P and an adjacent viewpoint P situated on another of the sides of the target viewpoint P. When, for example, the viewpoint pitch is a pitch of 3 degrees, a viewpoint P situated just before the viewpoint P corresponding to the azimuth angle of 0 degrees is a point corresponding to an azimuth angle of -3 degrees (357 degrees). Further, a viewpoint P situated just after the viewpoint P corresponding to the azimuth angle of 0 degrees is a point corresponding to an azimuth angle of +3 degrees (357 degrees). Thus, the same-video range 35 for the viewpoint P corresponding to the azimuth angle of 0 degrees is a range of between a point corresponding to an azimuth angle of -1.5 degrees (358.5 degrees) and a point corresponding to an azimuth angle of +1.5 degrees.

Fig. 8 schematically illustrates the image light 1 diffused to be emitted from the n-th division region 23 being a rightmost division region 23 in the plurality of division regions 23 included in the angle controller 22. This division region 23 is a region that displays thereon a rightmost division image 34 in the viewpoint image 30.

The same division image 34 is displayed on each division region 23 while the screen 12 is passing by the same-video range 35. When, for example, the viewpoint pitch is a pitch of 3 degrees and the screen 12 has a diameter of 100 mm, a length of a range in which the same division image 34 is displayed is 2.62 mm on the circumference of the screen 12. When the screen 12 has passed by this range length, the division image 34 being included in the viewpoint image 30 and corresponding to a next viewpoint P is displayed on each division region 23.

### [Frame Rate]

A frame rate used to perform 3D display is described here. A table indicated below is a table in which examples of frame rates used to switch the viewpoint images 30 are given.

It is assumed that, here, a projector that includes a single DMD element is used as the emitter 11 to perform one-bit grayscale image display in one color, with a viewable azimuth range being 360 degrees.

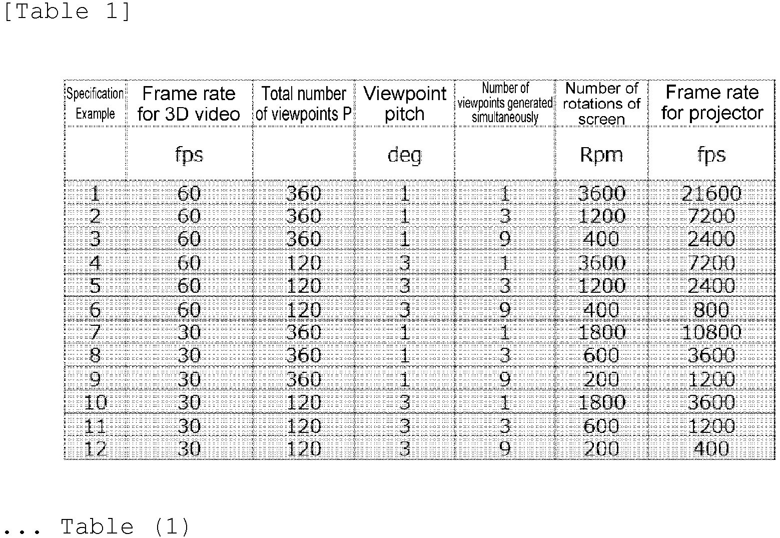

Specification Examples 1 to 12 are given in Table (1) indicated above.

A frame rate for a 3D image (fps) is a frame rate used to display 3D content. This is a frame rate at which, for example, switching to the viewpoint image 30 corresponding to a certain viewpoint P is performed to display the viewpoint image 30 corresponding to the certain viewpoint P when the screen 12 is viewed at the certain viewpoint P. Essentially, the viewpoint images 30 as viewed at a certain viewpoint P are switched once within one rotation of the screen 12. In this case, the frame rate for a 3D image can also be a period of rotation of the screen.

The total number of viewpoints P is the number of a plurality of circularly arranged viewpoints P.

A viewpoint pitch (deg) is a pitch set correspondingly to the plurality of circularly arranged viewpoints. A value obtained by dividing a value corresponding to all of the periphery (360 degrees) by the total number of viewpoints P, corresponds to the viewpoint pitch.

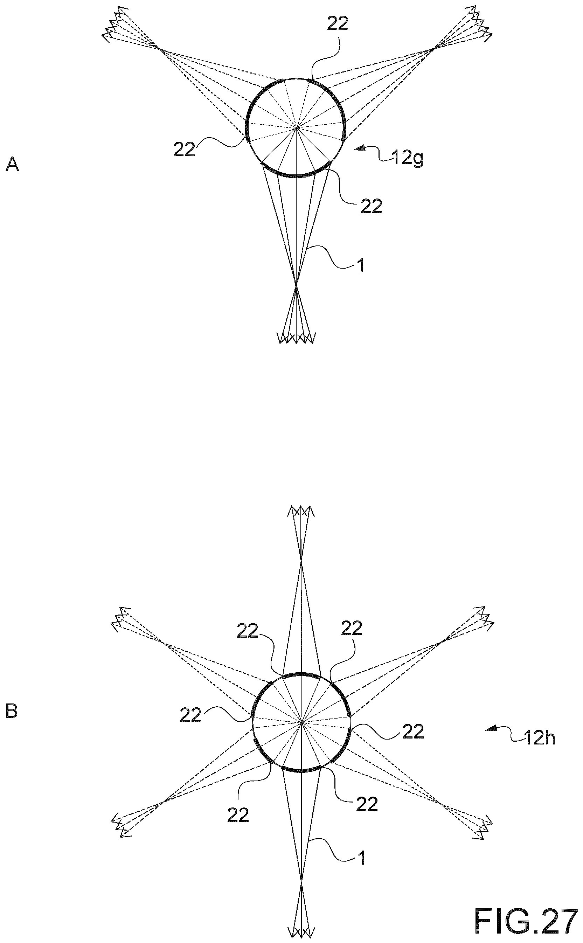

The number of viewpoints generated simultaneously is the number of viewpoints at which display can be performed at the same timing on the screen 12. In the present embodiment, the angle controller 22 illustrated in Fig. 2 is provided to form the screen 12 of which the number of viewpoints generated simultaneously is one. Note that the screen 12 of which the number of viewpoints generated simultaneously is at least two, is a screen provided with a plurality of angle controllers 22 (refer to Fig. 27).

The number of rotations of a screen (Rpm) is the number of times that the screen 12 is rotated by the rotational mechanism 14.

A frame rate for a projector is a frame rate that is necessary when the emitter 11 actually switches the viewpoint images 30.

When, for example, the frame rate for a 3D image is constant, as given in Table 1, the number of rotations of a screen and the frame rate for a projector are determined according to the total number of viewpoints P (the viewpoint pitch) and the number of viewpoints generated simultaneously.

When, for example, it is assumed that there are N viewpoints P and when the number of viewpoints generated simultaneously is one, the viewpoint image 30 is displayed once for each viewpoint P within one rotation of the screen 12. Thus, the number of rotations of the screen 12 per second (Rpm/60) is equal to a value of the frame rate for a 3D image (fps). Further, the frame rate for a projector exhibits a value obtained by multiplying a value of the frame rate for a 3D image (fps) by the total number N of viewpoints P. For example, it is assumed that the frame rate for a 3D image is set to 60 fps, the viewpoint pitch is a pitch of 3 degrees, and the number of viewpoints generated simultaneously is one (Specification Example 4 in Table 1). In this case, the number of rotations of a screen is obtained as indicated below: 60 sec × 60 fps = 3600 rpm. Further, the total number N of viewpoints P is 120, and the frame rate for a projector is obtained as indicated below: 60 fps × 120 = 7200 fps.

Furthermore, when, for example, it is assumed that there are N viewpoints P and the number of viewpoints generated simultaneously is M, the viewpoint image 30 can be displayed to be oriented toward each viewpoint P M times within one rotation of the screen 12. Thus, the number of rotations of the screen 12 per second is a value obtained by dividing the value of the frame rate for a 3D image (fps) by M. Further, the frame rate for a projector exhibits a value obtained by dividing the value of the frame rate for a 3D image (fps) by M and by multiplying, by the total number N of viewpoints P, a value obtained by the division. For example, it is assumed that the frame rate for a 3D image is set to 60 fps, the viewpoint pitch is a pitch of 3 degrees, and the number of viewpoints generated simultaneously is three (Specification Example 5 in Table 1). In this case, the number of rotations of a screen is obtained as indicated below: 60 sec × (60 fps / 3) = 1200rpm. Further, the total number N of viewpoints P is 120, and the frame rate for a projector is obtained as indicated below: (60 fps / 3) × 120 = 2400 fps.

As described above, the number of rotations of the screen 12 and the frame rate for a projector, which is necessary for the emitter 11, are determined according to the frame rate for a 3D image, which is used to perform 3D display; the viewpoint pitch (the total number N of viewpoints P); and the number of viewpoints generated simultaneously. Note that the specification examples described above are merely examples, and the frame rate for a 3D image, the viewpoint pitch, and the like may be set as appropriate according to the application of the image display apparatus 100.

### [Division Region and Crosstalk]

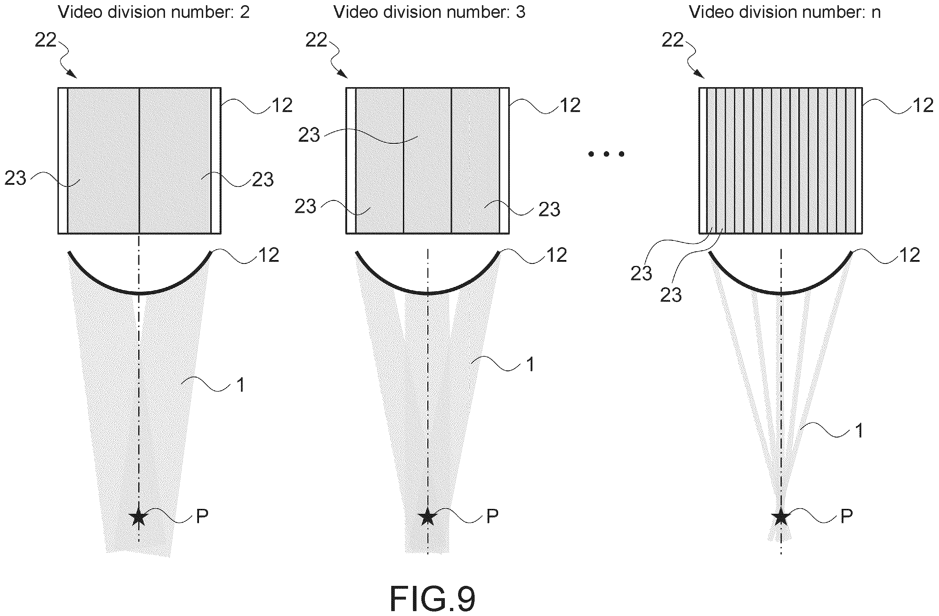

Fig. 9 schematically illustrates examples of configurations of the division regions 23. The number of division regions 23 provided to the angle controller 22, that is, the division number into which an image projected onto the screen 12 is divided (the video division number) is described below. It is assumed that, here, a region that is used as the angle controller 22 remains unchanged.

For example, Fig. 9 illustrates the angle controller 22 for which the video division number is set to two. In this case, two division regions 23 are provided, and the image light 1 is emitted from each division region 23 to be headed for a viewpoint P. Likewise, in the case of the angle controller 22 for which the video division number is set to three, the image light 1 is emitted from each of the three division regions 23 to be headed for a viewpoint P. Further, in the case of the angle controller 22 for which the video division number is set to n (here n > 3), the image light 1 is emitted from each of the n division regions 23 to be headed for a viewpoint P.

As illustrated in Fig. 9, a circumferential length (a width in a right-and-left direction in the figure) that is set for one division region 23 becomes smaller as the video division number (the number of division regions 23) is increased. Thus, the image light 1 emitted from each division region 23 to be headed for a viewpoint P has a smaller width. This means that a range in which the division image 34 displayed on each division region 23 can be viewed becomes smaller as the video division number is increased.

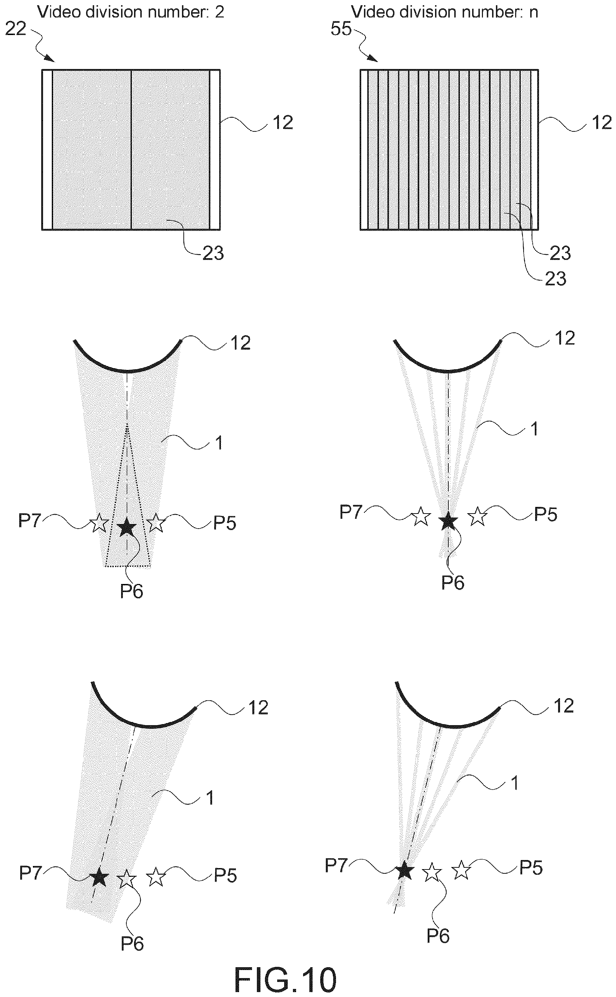

Fig. 10 is a schematic diagram used to describe a relationship between the division region and a crosstalk.

When, for example, the video division number is two (when two division regions 23 are formed), as illustrated in an upper portion on the left in Fig. 10, the image light 1 emitted from each division region 23 has a width half of a width of the viewpoint image 30. In this state, the viewpoint image 30 for P6 is visible not only at a central viewpoint P6 for which the viewpoint image 30 is supposed to be displayed, but also at adjacent viewpoints P5 and P7 situated on the two sides of the central viewpoint P6, as illustrated in a middle portion on the left in the figure. In this case, a crosstalk may occur at each of the viewpoints P5 and P7 due to the viewpoint image 30 for the viewpoint P6 being seen, and this may result in a degradation in the image quality.

Further, the screen 12 for which the video division number is two is rotated to switch from the viewpoint image 30 for the viewpoint P6 to the viewpoint image 30 for the viewpoint P7 in a lower portion on the left in Fig. 10. In this case, the viewpoint image 30 for the viewpoint P7 is also visible at the viewpoint P6, and a crosstalk may occur at the viewpoint P6 due to the viewpoint image 30 for the viewpoint P7 being seen.

When the video division number is small and the image light 1 emitted from the division region 23 has a large width, as described above, a crosstalk may easily occur depending on the viewpoint pitch.

On the other hand, when the video division number is n (when n division regions 23 are formed), as illustrated in an upper portion on the right in Fig. 10, the image light 1 emitted from each division region 23 has a width having a size obtained by dividing a width of the viewpoint image 30 by n. Consequently, the image light 1 in this case has a sufficiently smaller width, compared to when the video division number is two.

Thus, the image light 1 is only emitted to be oriented toward the central viewpoint P6 for which the viewpoint image 30 is supposed to be displayed, and the viewpoint image 30 for P6 is not visible at the adjacent viewpoints P5 and P7 situated on the two sides of the viewpoint P6, as illustrated in a middle portion on the right in the figure. Further, it is assumed that the screen 12 for which the video division number is n is rotated to switch from the viewpoint image 30 for the viewpoint P6 to the viewpoint image 30 for the viewpoint P7, as illustrated in a lower portion on the right in Fig. 10. In this case, the viewpoint image 30 for the viewpoint P7 is also not visible at the viewpoint P6 since the image light 1 has a sufficiently small width.

As described above, if the number of division regions 23 (the video division number) is larger, the image light 1 emitted from each division region 23, that is, a line-shaped image (the division image 34) obtained by light being concentrated onto the viewpoint P has a smaller width. Consequently, a crosstalk is reduced, and this makes it possible to perform image display with high image quality. Moreover, according to, for example, the size or the application of the image display apparatus 100, the minimum video division number or the like may be set in a range in which the level of crosstalk is acceptable.

### [Image Display Using Black Stripe Region]

As a method for reducing the above-described crosstalk between viewpoints P, the inventors have invented a method for forming a strip-shaped region between the division images 34 displayed on the respective division regions 23, where an image is not displayed on the strip-shaped region. Here, the region on which an image is not displayed can be considered a black region that does not emit the image light 1 on a transparent screen 12. The region on which an image is not displayed is hereinafter referred to as a black stripe region.

The method performed using the black stripe region is particularly effective when the viewpoint pitch is relatively small. When, conversely, the viewpoint pitch is sufficiently large, a crosstalk between viewpoints P does not easily occur. Thus, there is a possibility that image display will be performed properly without using a black stripe region. In this case, the image quality is not affected by a black stripe region. When the image display apparatus 100 is formed, an imagequality balance affected by a crosstalk, a moiré, or a degradation in resolution is preferably verified for each region provided on the basis of a viewpoint pitch to determine an angle of diffusion performed by a HOE or whether to provide a black stripe region.

The method performed using the black stripe region is specifically described below.

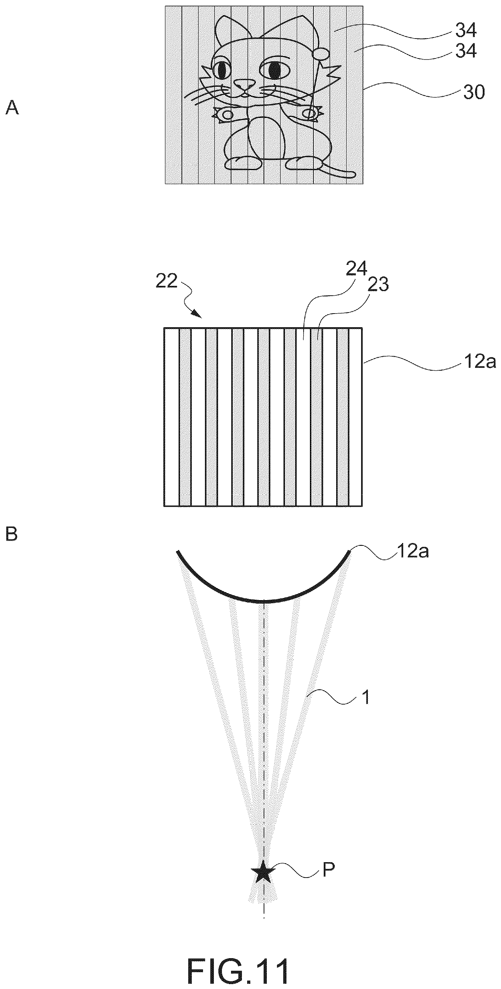

Fig. 11 schematically illustrates an example of image display performed on the transparent screen 12 including the division region and a non-diffusive region. A method for providing a black stripe region in a structure of the transparent screen 12 is described below with reference to Fig. 11.

A and B of Fig. 11 schematically illustrate the viewpoint image 30 and the structure of the screen 12. In the viewpoint image 30 illustrated in A of Fig. 11, a region on which an image can be displayed is indicated in the form of a gray region.

Further, the transparent screen 12 illustrated in B of Fig. 11 is provided with a plurality of division regions 23 and a plurality of non-diffusive regions 24. Here, the non-diffusive region 24 is a region that is formed between the division regions 23 adjacent to each other and that does not diffuse the image light 1. In other words, it can also be said that the non-diffusive region 24 is a transparent region for the image light 1, and is a space provided between the division regions 23.

In Fig. 11, the non-diffusive region 24 serves as a black stripe region.

On the transparent screen 12 illustrated in B of Fig. 11, the division region 23 on which an image can be displayed by the image light 1 being diffused is indicated in the form of a gray region. Further, the non-diffusive region 24 on which an image is not displayed is indicated in the form of a white region.

For example, interference fringes used to serve as a HOE are not formed in the non-diffusive region 24. Thus, the image light 1 incident on the non-diffusive region 24 passes through the transparent screen 12 without being diffracted, and is not emitted at a specified emission angle or diffused.

The viewpoint image 30 in which an image can be displayed in all of the regions is projected onto the screen 12a, as illustrated in A of Fig. 11. In this case, an image is not displayed on the non-diffusive region 24. Thus, with respect to an image displayed on the screen 12a, the image light 1 emitted from each division region 23 has a smaller width than the division image 34 included in the viewpoint image 30. This results in sufficiently reducing a crosstalk between viewpoints P.

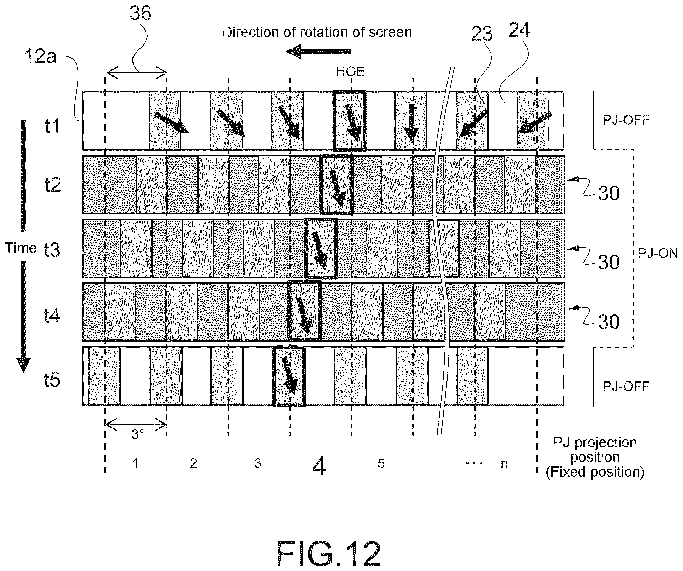

Fig. 12 schematically illustrates an example of display control performed using the screen illustrated in Fig. 11, the screen including the division region and the non-diffusive region. The screen 12a in which the non-diffusive region 24 is provided between the division regions 23 makes it possible to reduce a crosstalk that occurs at the time of changing viewpoints P. Display control performed using the screen 12a at the time of changing viewpoints P is described below with reference to Fig. 12.

Fig. 12 schematically illustrates, in the form of a strip-shaped region, the screen 12 passing by a projection position onto which the image light 1 is projected by the emitter 11 (a PJ projection position). Further, a dark gray region corresponds to a region onto which the image light 1 is projected, and a light gray region corresponds to the division regions 23 provided to the screen 12. Note that, when the region onto which the image light 1 is projected and the division region 23 overlap each other, the division region 23 is laid on the region onto which the image light 1 is projected. Further, the figure schematically illustrates, using a thick arrow, an emission vector of the image light 1 in each division region 23.

It is assumed that, here, the screen 12 is rotated to be shifted from the right to the left in the figure. Further, Fig. 12 illustrates states of the screen 12 at times t1, t2, t3, t4, and t5 from the top.

In the example illustrated in Fig. 12, switching between an on state and an off state with respect to display of an image made up by the image light 1 is performed according to a positional relationship between a projection range 36 and the division region 23. Here, the projection range 36 is a range corresponding to the projection position onto which the image light 1 is projected (the PJ projection position), the projection position being represented by the screen being divided circumferentially with a viewpoint pitch. The projection range 36 is a fixed range independent of rotation of the screen 12. In Fig. 12, the viewpoint pitch is set to 3 degrees, and a range obtained by the screen being divided using a dotted line is the projection range 36. An image formed by arranging the division images 34 projected onto the respective projection ranges 36 is the viewpoint image 30 displayed on the same-video range 35 for a viewpoint **P.**

A timing of switching between an on state and an off state with respect to display of an image made up by the image light 1 is described using, as an example, the division region 23 (hereinafter referred to as a target division region 23) passing through the fourth projection range 36 from the time t1 to the time t5.

For example, at the time t1, the target division region 23 overlaps a border between the projection ranges 36, and is situated between the fifth projection range 36 and the fourth projection range 36. When, for example, the viewpoint image 30 is projected in this state, the image light 1 emitted from the target division region 23 is emitted to be headed for the same-video range 35 for a viewpoint P toward which the viewpoint image 30 is displayed to be oriented just before the time t1. This results in the occurrence of a crosstalk. Thus, display of an image made up by the image light 1 is set to be off at the time t1 (PJ-OFF).

At the time t2, the target division region 23 has passed by the border between the fifth projection range 36 and the fourth projection range 36 and is situated in the fourth projection range 36. Thus, when the viewpoint image 30 is projected in this state, the image light 1 emitted from the target division region 23 is not emitted to be headed for the same-video range 35 for a viewpoint P by which the image light 1 has passed most recently. This results in no occurrence of a crosstalk. Thus, display of an image made up by the image light 1 is set to be on at the time t2 (PJ-OFF). Further, the target division region 23 is also situated in the fourth projection range 36 at the time t3 and at the time t4. Thus, image display is set to be on.

Note that it can also be said that a period from the time t2 to the time t4 is a period for which the border between the projection ranges 36 and the non-diffusive region 24 on which an image is not displayed overlap each other.

The target division region 23 is moved, and then the target division region 23 overlaps a border between the fourth projection range 36 and the third projection range 36 at the time t5. When, for example, the next viewpoint image 30 is projected in this state, the image light 1 emitted from the target division region 23 is emitted to be headed for the same-video range 35 for a viewpoint P toward which the viewpoint image 30 is displayed to be oriented. This results in the occurrence of a crosstalk. Thus, display of an image made up by the image light 1 is set to be off at the time t5 (PJ-OFF).

As described above, in Fig. 12, display of an image made up by the image light 1 is set to be off when a border between the projection ranges 36 and the target division region 23 overlap each other, each projection range 36 being obtained by division being performed with an angle pitch set correspondingly to a plurality of viewpoints P (a viewpoint pitch). Display of an image made up by the image light 1 is set to be on when the border between the projection ranges 36 and the non-diffusive region 24 overlap each other.

This makes it possible to reduce a crosstalk that occurs at the time of changing viewpoints P, and thus to perform stereoscopic display with high quality.

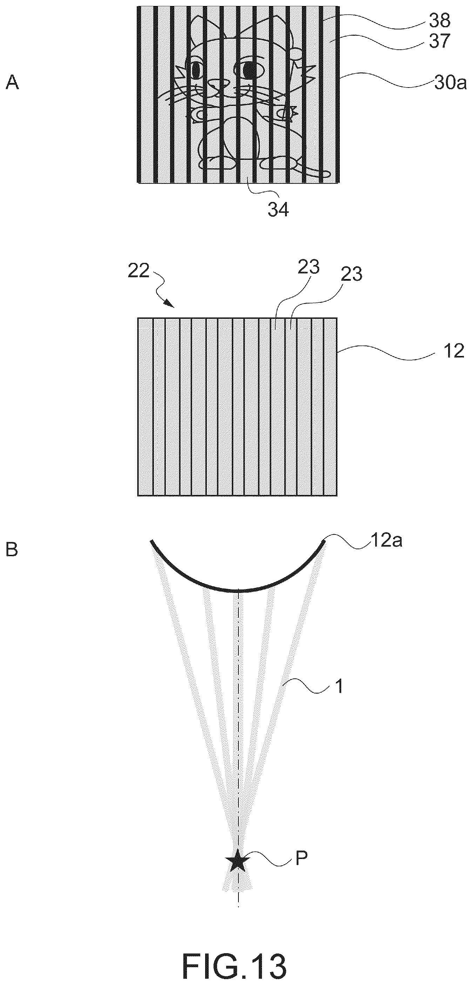

Fig. 13 schematically illustrates an example of image display performed using the viewpoint image 30 including a display region and a non-display region. A method for providing a black stripe region in the viewpoint image 30 is described below with reference to Fig. 13.

A and B of Fig. 13 schematically illustrate the viewpoint image 30 and a structure of the screen 12.

In a viewpoint image 30a illustrated in A of Fig. 13, a region (a display region 37) on which an image is displayed is indicated in the form of a gray region. Further, a region (a non-display region 38) on which no image is displayed is indicated in the form of a black region. Furthermore, in the viewpoint image 30a, the display region 37 and the non-display region 38 are set in a single region provided on the basis of a viewpoint pitch. As described above, the viewpoint image 30a illustrated in A of Fig. 13 is an image in which the display region 37 and the non-display region 38 are set in a region provided on the basis of an angle pitch set correspondingly to a plurality of viewpoints (a region provided on the basis of a viewpoint pitch), where an image is displayed on the display region 37 and no image is displayed on the non-display region 38. In Fig. 13, the non-display region 38 serves as a black stripe region.

Note that the division regions 23 of a plurality of division regions 23 are formed on the screen 12 illustrated in B of Fig. 13 with no space.

For example, the formation of the division regions with no space makes it possible to display an image on all of the regions on the screen 12 illustrated in B of Fig. 13. The viewpoint image 30a including the non-display region 38 in the form of a stripe is projected onto such a screen 12. In this case, the image light 1 emitted from each division region 23 has a smaller width than the division region 23 with respect to an image displayed on the screen 12, since no image is displayed on the non-display region 38. This results in sufficiently reduce a crosstalk between viewpoints P.

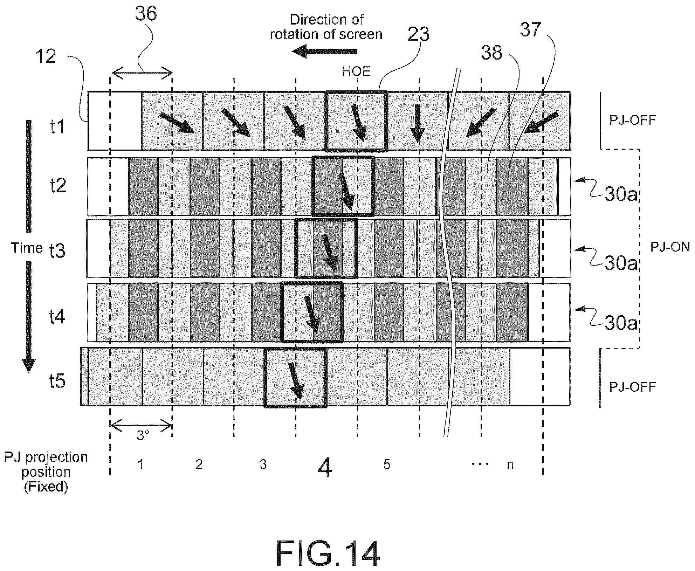

Fig. 14 schematically illustrates an example of display control using the viewpoint image 30a illustrated in Fig. 13, the viewpoint image 30a including the display region 37 and the non-display region 38. The use of the viewpoint image 30a in which the non-display region 38 is situated between the display regions 37 makes it possible to reduce a crosstalk that occurs at the time of changing viewpoints P. Display control performed using the viewpoint image 30a at the time of changing viewpoints P is described below with reference to Fig. 14.

In Fig. 14, a dark gray region corresponds to in the viewpoint image 30a. Note that a region situated between the display regions 37 corresponds to the non-display region 38. Further, a light gray region corresponds to the division region 23 provided to the screen 12. Note that, when the display regions 37 and the division region 23 overlap each other, the display regions 37 is laid on the division region 23. Further, the figure schematically illustrates, using a thick arrow, an emission vector of the image light 1 in each division region 23.

In the example illustrated in Fig. 14, switching between an on state and an off state with respect to display of an image made up by the image light 1 is performed according to a positional relationship between the display regions 37 provided with a viewpoint pitch and the division region 23.

A timing of switching between an on state and an off state with respect to display of an image made up by the image light 1 is described using, as an example, the division region 23 (hereinafter referred to as a target division region 23) passing through the fourth projection range 36 from the time t1 to the time t5.

For example, at the time t1, the target division region 23 overlaps a border between the display regions 37 and the non-display region 38. When, for example, the viewpoint image 30 is projected in this state, the target division region 23 overlaps the display region 37 projected onto the fourth projection range 36 and the display region 37 projected onto the fifth projection range 36. Consequently, the image light 1 is emitted from the target division region 23 to be headed for the same-video range 35 for a viewpoint P toward which the viewpoint image 30 is displayed to be oriented just before the time t1. This results in the occurrence of a crosstalk. Thus, display of an image made up by the image light 1 is set to be off at the time t1 (PJ-OFF).

At the time t2, the target division region 23 has passed by a border of the display region 37 projected onto the fifth projection range 36, and only the display region 37 projected onto the fourth projection range 36 is situated in the target division region 23. Thus, when the viewpoint image 30 is projected in this state, the image light 1 emitted from the target division region 23 is not emitted to be headed for the same-video range 35 for a viewpoint P by which the image light 1 has passed most recently. This results in no occurrence of a crosstalk. Thus, display of an image made up by the image light 1 is set to be on at the time t2 (PJ-OFF). Further, the display region 37 projected onto the fourth projection range 36 is also situated in the target division region 23 at the time t3 and at the time t4. Thus, image display is set to be on.

Note that it can also be said that a period from the time t2 to the time t4 is a period for which the target division region 23 does not overlap any borders of the display regions 37.

The target division region 23 is moved, and then the target division region 23 overlaps, at the time t5, the display region 37 projected onto the fourth projection range 36 and the display region 37 projected onto the third projection range 36. When, for example, the next viewpoint image 30 is projected in this state, the image light 1 emitted from the target division region 23 is emitted to be headed for the same-video range 35 for a viewpoint P toward which the viewpoint image 30 is displayed to be oriented. This results in the occurrence of a crosstalk. Thus, display of an image made up by the image light 1 is set to be off at the time t5 (PJ-OFF).

As described above, in Fig. 14, display of an image made up by the image light 1 is set to be off when a border of the target division region 23 and the display region 37 overlap each other, and display of an image made up by the image light 1 is set to be on when the border of the target division region 23 and the display region 37 do not overlap each other.

This makes it possible to reduce, just by performing image processing on the viewpoint image 30, a crosstalk that occurs at the time of changing viewpoints P, and thus to easily perform stereoscopic display with high quality.

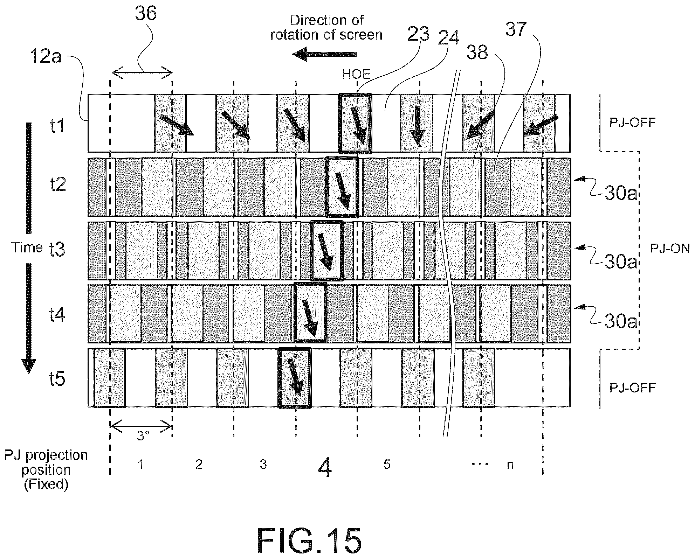

Fig. 15 schematically illustrates an example of image display performed using the screen 12a and the viewpoint image 30a, where the screen 12a includes the division region and the non-diffusive region, and the viewpoint image 30a includes the display region and the non-display region. In Fig. 15, the screen 12a being illustrated in Fig. 11 and including the non-diffusive region 24, and the viewpoint image 30a being illustrated in Fig. 13 and including the non-display region 38 are used. Here, the division region 23 is indicated in the form of a light gray region, and the display region 37 is indicated in the form of a dark gray region.

In the example illustrated in Fig. 15, display of an image made up by the image light 1 is set to be off when the border between the projection ranges 36 and the target division region 23 overlap each other, and display of an image made up by the image light 1 is set to be on when the border between the projection ranges 36 and the non-diffusive region 24 overlap each other. This results in preventing the image light 1 from being emitted from one target division region 23 overlapping the projection ranges 36 adjacent to each other. This makes it possible to reduce a crosstalk. Further, a crosstalk can be sufficiently reduced even if a timing at which image display is turned on or off is slightly off, since the non-display region 38 is provided to the viewpoint image 30a.

Further, for example, display of an image made up by the image light 1 may be set to be off when the border of the target division region 23 and the display region 37 overlap each other, and display of an image made up by the image light 1 may be set to be on when the border of the target division region 23 and the display region 37 do not overlap each other. This results in preventing the image light 1 from being emitted from one target division region 23 overlapping the display regions 37 adjacent to each other. This makes it possible to reduce a crosstalk.

Further, a crosstalk can be sufficiently reduced even if the non-display region 38 has a small width, since the non-diffusive region 24 is provided to the screen 12a. This makes it possible to make the width of the display region 37 larger, and thus to reduce, for example, a degradation in image quality that is caused due to a black stripe region becoming noticeable.

### [Image Display Performed Without Using Black Stripe Region]

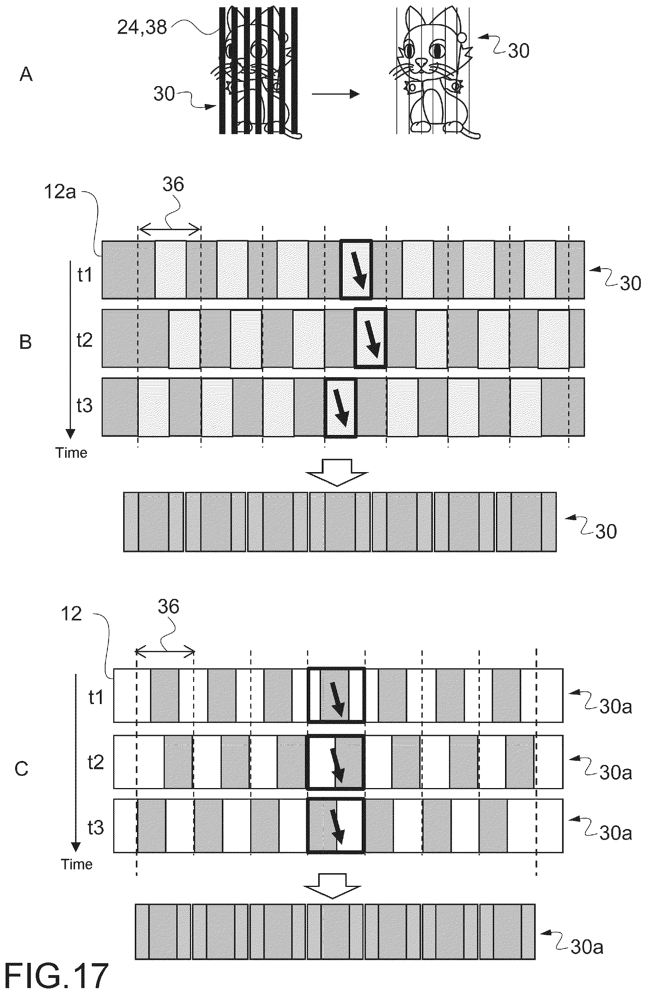

A crosstalk can be reduced when the non-diffusive region 24 or non-display region 38 serving as a black stripe region is provided, as described above. On the other hand, a stripe region on which no image is displayed may become noticeable by providing a black stripe region (refer to A of Fig. 17). Thus, the black stripe region does not necessarily have to be provided.

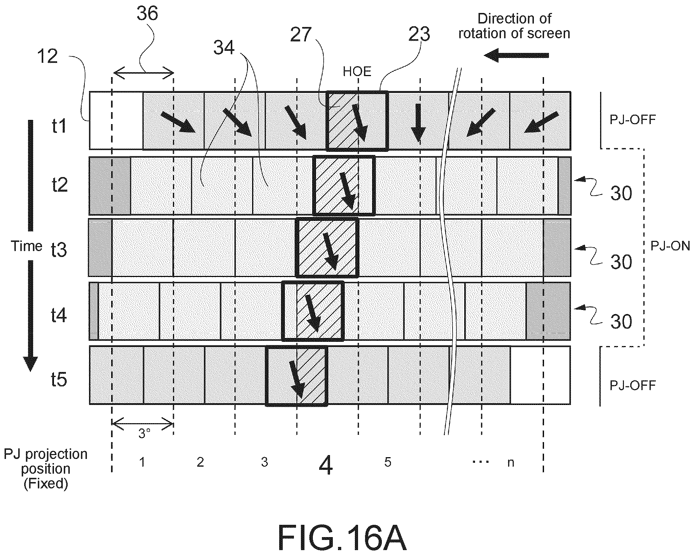

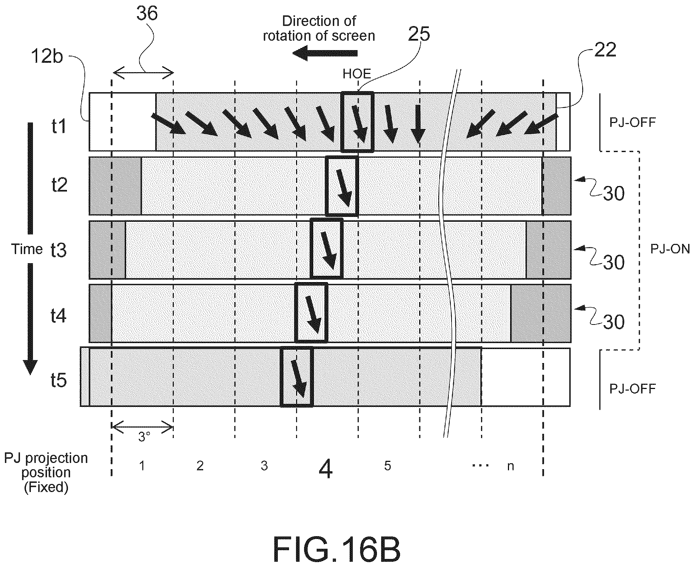

Figs. 16A and 16B schematically illustrate examples of image display performed without using a black stripe region.

Fig. 16A schematically illustrates an example of image display performed using the screen 12 in which the division regions 23 are formed with no space. The screen 12 illustrated in Fig. 16A has a configuration similar to the configuration of, for example, the screen 12 illustrated in B of Fig. 13, and is a screen in which emission angles are discretely set for the respective division regions 23 formed with no space. Further, the viewpoint image 30 projected onto the screen 12 in Fig. 16A has a configuration similar to the configuration of, for example, the viewpoint image 30 illustrated in A of Fig. 11, and is an image obtained by the division images 34 of a plurality of division images 34 being arranged with no space. In Fig. 16A, image display is performed without the non-diffusive region 24 being provided to the screen 12 or without the non-display region 38 being provided to the viewpoint image 30, as described above.

When the screen 12 is rotated, the division regions 23 are moved circumferentially (to the left in Fig. 16A). Here, image display is set to be on when a portion of the division region 23 that overlaps one projection range 36 has an area of which the proportion is greater than or equal to a specified threshold, and image display is set to be off in the other cases. The proportion of the area of a portion of the division region 23 that overlaps one projection range 36 may be hereinafter simply referred to as an area proportion.

A region, in the division region 23, that overlaps a single projection range 36 is referred to as an overlap region 27. Fig. 16A schematically illustrates a hatched region as the overlap region 27 formed in the division region 23 overlapping the fourth projection range 36. The area proportion described above is, for example, a proportion (S1/S0) of the area S1 to the area S0 in the division region 23.

Typically, the specified threshold is set to a value greater than or equal to 0.5 and less than or equal to 1, that is, a value greater than or equal to 50% and less than or equal to 100%. When, for example, the specified threshold is 0.6, an image corresponding to a portion occupying 60% or more of the division image 34 projected onto the projection range 36 (the overlap region 27) is displayed at a proper position.

For example, at the time t1, the target division region 23 overlaps the fourth projection range 36, and there is an increase in the area of the overlap region 27. At this point, the area proportion is less than the specified threshold. When the viewpoint image 30 is projected in this state, a relatively large amount of the image light 1 is emitted to be headed for the same-video range 35 for a viewpoint P toward which the viewpoint image 30 has been displayed to be oriented most recently. This results in the occurrence of a crosstalk. Thus, display of an image made up by the image light 1 is set to be off at the time t1 (PJ-OFF).

At the times t2 to t4, the area proportion of the overlap region 27 to the target division region 23 is greater than the specified threshold. Thus, display of an image made up by the image light 1 is set to be on (PJ-ON). In this case, the proportion of a portion, in the division image 34, that is displayed at a proper position is greater than or equal to the specified threshold. Note that the image light 1 corresponding to the other portion of the division image 34 may be emitted to be headed for the same-video range 35 for a viewpoint P toward which the viewpoint image 30 has been displayed to be oriented most recently, or may be emitted to be headed for the same-video range 35 for a viewpoint P toward which the viewpoint image 30 is subsequently displayed to be oriented. However, the percentage of the image light 1 in such a case is relatively small. As described above, the image light 1 leaked into the other same-video ranges 35 at each of the times t2 to t4 is less easily viewed as a crosstalk.

Further, after the time t3, the target division region 23 overlaps the fifth projection range 36, and the area of the overlap region 27 is reduced. Furthermore, the area proportion is less than the specified threshold at the time t5. In this case, a relatively large amount of the image light 1 is emitted to be headed for the same-video range 35 for a viewpoint P toward which the viewpoint image 30 is subsequently displayed to be oriented. This may result in the occurrence of a crosstalk. Thus, display of an image made up by the image light 1 is set to be off at the time t5 (PJ-OFF).

As described above, switching between an on state and an off state with respect to image display is performed at a proper timing, and this makes it possible to reduce a crosstalk even when the non-diffusive region 24 or non-display region 38 serving as a black stripe region is not provided.

Note that control to switch between an on state and an off state with respect to image display is not necessarily have to be performed. Depending on, for example, spacing of viewpoints P (a viewpoint pitch) or the size of the screen 12, a crosstalk may be sufficiently small without image display being turned off. In such a case, for example, control to switch the viewpoint images 30 at a time at which the area proportion of the overlap region 27 to the division region 23 exceeds 50% may be performed in a state in which image display remains on.

When the method illustrated in Fig. 16A is applied, a 3D image is displayed without using the non-diffusive region 24 or non-display region 38 serving as a black stripe region. This makes it possible to prevent the resolution of a 3D image from being reduced due to a black line in the form of a stripe. This results in being able to perform stereoscopic display at high resolution with high quality.

Fig. 16B schematically illustrates an example of image display performed using a screen in which there is a successive change in emission angle. The screen 12 in which an emission angle is set for each division region 23 has been primarily described above. On the other hand, the angle controller 22 provided to a screen 12b illustrated in Fig. 16B causes the pieces of image light 1 to be emitted at different emission angles for the respective positions at which the pieces of image light 1 are incident on the screen 12b. Specifically, in the case of the angle controller 22 of the screen 12b, setting is performed such that the emission angle is changed successively. As described above, the emission angle is changed not for each region but for each position in the case of the screen 12b.

A HOE that is included in the screen 12b is formed by changing a path of object light irradiated onto the screen 12b using, for example, a lens or a curved mirror. For example, the path of the object light passing through, for example, a lens is changed successively for each position on the screen 12. This makes it possible to form a HOE in which there is a successive change in emission angle for each position. Further, an HOE can be exposed to light on the entirety of the angle controller 22. This makes it possible to shorten the time necessary for a light-exposure process.

Switching between an on state and an off state with respect to image display is performed at a proper timing, and this also makes it possible to reduce a crosstalk even when such a screen 12b is used.

In the example illustrated in Fig. 16B, a virtual division region (a virtual division region 25) that has a smaller width than the projection range 36 according to the viewpoint pitch. For example, the width of the virtual division region 25 is set less than or equal to a value corresponding to an angle of diffusion performed in the horizontal plane. Display of an image made up by the image light 1 is set to be off when the virtual division region 25 overlaps the border between the projection ranges 36, and display of an image made up by the image light 1 is set to be on when the virtual division region 25 does not overlaps the border between the projection ranges 36.

For example, at the time t1, the virtual division region 25 illustrated in Fig. 16B overlaps the border between the projection ranges 36 and is situated between the fifth projection range 36 and the fourth projection range 36. When the viewpoint image 30 is projected in this state, a crosstalk occurs. Thus, display of an image made up by the image light 1 is set to be off at the time t1 (PJ-OFF).

At the times t2 to t4, the virtual division region 25 is situated in the fourth projection range 36. Thus, image display is set to be on (PJ-ON).

Further, the virtual division region 25 overlaps the border between the fourth projection range 36 and the third projection range 36 at the time t5. When the next viewpoint image 30 is projected in this state, a crosstalk occurs. Thus, display of an image made up by the image light 1 is set to be off at the time t5 (PJ-OFF).

The use of the method illustrated in Fig. 16B also makes it possible to reduce a crosstalk and thus to perform stereoscopic display with high quality even when the screen 12b in which there is a successive change in emission angle is used, as described above. Further, a black stripe region is not used, as in the case of Fig. 16A. This makes it possible to prevent the resolution of a 3D image from being reduced due to a black line in the form of a stripe.

### [Adjustment of Position of Black Stripe Region]

Fig. 17 is a schematic diagram used to describe a method for adjusting a position of a black stripe region.

A of Fig. 17 schematically illustrates, on the right, the viewpoint image 30 displayed when a position of a black stripe region (the non-diffusive region 24 or the non-display region 38) is fixed, with the black stripe region being highlighted. For example, the black stripe region is a region on no image is displayed on the screen 12. Thus, an image with a stripe, as illustrated on the right in A of Fig. 17, may be displayed at a reduced resolution.

Here, a method for preventing such a reduction in resolution is described.

B of Fig. 17 illustrates an example in which the viewpoint image 30 with no space is projected onto the screen 12a in which the division regions 23 are separated from each other by the non-diffusive region 24. In this case, for example, a timing at which the viewpoint image 30 is displayed, or rotation of the screen 12 is controlled to change a relative position of the division region 23 in the projection range 36. B of Fig. 17 schematically illustrates states of the screen 12 at times t1, t2, and t3, where the screen 12 is shifted by the period of rotation of the screen 12.

For example, at the time t1, the viewpoint image 30 is displayed (image display is turned on) in a state in which the division region 23 is situated in a middle portion of the projection range 36. Further, at the time t2, the viewpoint image 30 is displayed in a state in which the division region 23 is in contact with a right border of the projection range 36. Furthermore, at the time t3, the viewpoint image 30 is displayed in a state in which the division region 23 is in contact with a left border of the projection range 36. As described above, the relative position of the division region 23 in the projection range 36 is changed every time the screen 12 is rotated. This results in displaying the images at the times t1, t2, and t3 successively in each projection range 36, as illustrated in a lower portion of B of Fig. 17. This makes it possible to perform image display with a reduced variation in brightness in general with a high degree of resolution provided to an entire region in the projection range 36.

Further, C of Fig. 17 illustrates an example in which the viewpoint image 30a including the non-display region 38 is displayed on the screen 12 in which the division regions 23 are formed with no space. In this case, for example, a position of the display region 37 (the non-display region 38) in the viewpoint image 30a, or a timing at which the viewpoint image 30a is displayed is changed to change a relative position of the display region 37 (the non-display region 38) in the projection range 36.

For example, at the time t1, the viewpoint image 30 is displayed (image display is turned on) in a state in which the display region 37 is situated in the middle portion of the projection range 36. Further, at the time t2, the viewpoint image 30 is displayed in a state in which the display region 37 is in contact with the right border of the projection range 36. Furthermore, at the time t3, the viewpoint image 30 is displayed in a state in which the display region 37 is in contact with the left border of the projection range 36. This makes it possible to perform image display with a reduced variation in brightness in general with a high degree of resolution provided to an entire region in the projection range 36, as in the case of Fig. 17.

As described above, a position of the non-diffusive region 24 or non-display region 38 serving as a black stripe region is shifted, that is, a timing (a position) at which black is inserted into the viewpoint image 30 is off. Consequently, a region on which an image is displayed is made larger, and this makes it possible to improve the resolution.

### [Example of Configuration of Each Structural Element]

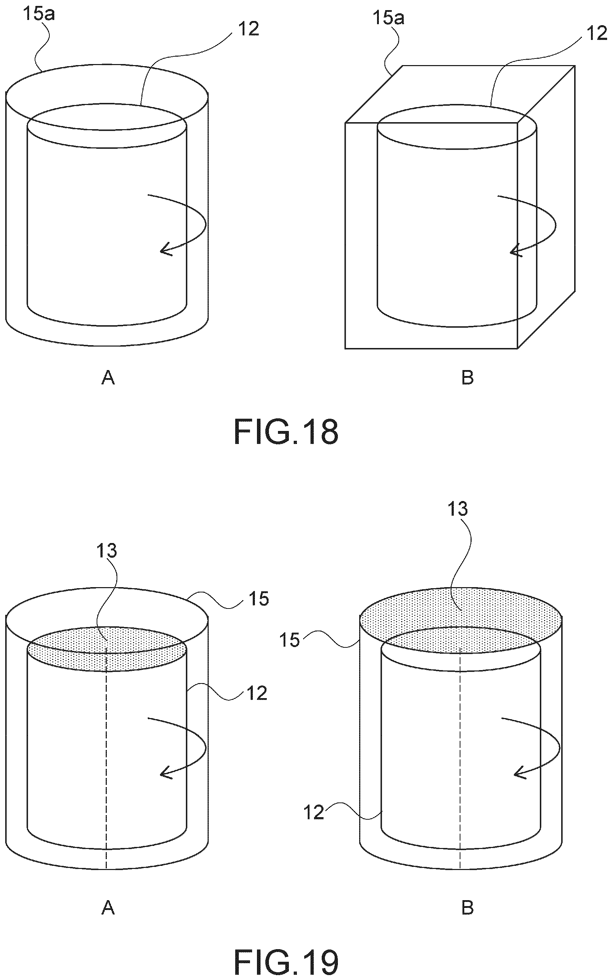

Fig. 18 schematically illustrates an example of a configuration of the cover portion.

For example, the cover portion 15a having a cylindrical shape is used, as illustrated in A of Fig. 18. In this case, the diameter and the thickness of the cover portion 15a are set such that the cover portion 15a fits the screen 12 arranged inside of the cover portion 15a. This enables the cover portion 15a and the screen 12 to exhibit an appearance of oneness. Further, the entirety of the apparatus including the screen 12 has a cylindrical shape, and this makes it possible to provide an excellent design.

Note that the image light 1 emitted from the screen 12 may be refracted by passing through the cylindrical cover portion 15a. This results in a shift of an azimuth component of an emission angle (an emission azimuth angle) of the image light 1 that is set for the screen 12. For example, the image light 1 has a smaller emission azimuth angle after passing through the cover portion 15a, compared with an original emission azimuth angle. In consideration of the refraction due to the cover portion 15a, the emission azimuth angle set for the screen 12 is corrected such that no shift is caused due to the refraction.

Further, the cover portion 15b having a rectangular-parallelepiped shape may be used, as illustrated in B of Fig. 18. In this case, the cover portion 15b may be a member formed by boding transparent wall surface portions, or, for example, structure members that support respective sides may be provided.

Moreover, the shape of the cover portion 15 is not limited, and, for example, the cover portion 15 having a dome shape or the cover portion 15 having a polygonal-prism shape may be used.

Fig. 19 schematically illustrates an example of arrangement of the reflective mirror 13.

For example, the reflective mirror 13 may be fixed to the screen 12, as illustrated in A of Fig. 19. In this case, for example, the cover portion 15 can be easily removed since the cover portion 15 is not included in an optical system used to cause the image light 1 to be incident on the screen 12. This makes it possible to obtain an apparatus of which the maintenance can be carried out simply and easily.

Further, the reflective mirror 13 may be fixed to the cover portion 15, as illustrated in B of Fig. 19. This is a configuration similar to the configuration illustrated in Fig. 1. In this case, only the screen 12 is rotated without the reflective mirror 13 being rotated. For example, a position of incidence of the image light 1 on the screen 12 may be shifted when a position of the reflective mirror 13 is shifted by being rotated. When the reflective mirror 13 is provided not to the screen 12 but to the cover portion 15, this results in preventing the position of the reflective mirror 13 from being shifted due to being rotated. As described above, there is a reduction in the sensitivity to a rotation-caused shift of the screen 12. This makes it possible to prevent a degradation in image quality that is caused due to the rotation-caused shift.

Moreover, the method for arranging the reflective mirror 13 is not limited, and the reflective mirror 13 may be fixed to, for example, a structure member other than the cover portion 15 and the screen 12.

Fig. 20 schematically illustrates an example of a configuration of cross sections of the screen and the cover portion.

For example, the screen 12 is formed by boding, to a transparent base member 50, an optical film 51 that serves as the transmissive HOE 20. A resin material such as acrylic resin (PMMA), polycarbonate resin (PC), polystyrene resin (PS), or cycloolefin polymer (COP) is used as the transparent base member 50. Further, the transparent base member 50 may be formed using, for example, glass.

Here, cross sections of the screen 12 and the cover portion 15 are described, with the left side in the figure being an inner side of the screen 12 (the side of the optical axis O).

In A of Fig. 20, the optical film 51 is bonded to an inner side of the transparent base member 50. This makes it possible to prevent the optical film 51 from being brought into contact with the cover portion 15 to be damaged, or to prevent the optical film from getting dirty upon handling.

Further, in B of Fig. 20, the optical film 51 is bonded to an outer side of the transparent base member 50. In this case, the manufacturing processes are simpler, compared to when the optical film 51 is bonded to the inner side of the transparent base member 50. This makes it possible to reduce manufacturing costs.

In C of Fig. 20, the optical film 51 is bonded to the transparent base member 50 through an optical clear adhesive (an OCA 52). Here, the OCA 52 is bonded to the inner side of the transparent base member 50, and the optical film 51 is bonded to the OCA 52. Note that the optical film 51 may be bonded to the outer side of the transparent base member 50 through the OCA 52. The use of an OCA results in improving the reliability in bonding of the transparent base member 50 and the optical film 51.

In D of Fig. 20, an antireflective film (an AR film 53) is provided. In the example illustrated in Fig. 20, the AR film 53 is bonded to each of the inner side of the transparent base member 50, the outer side of the transparent base member 50, an inner side of the cover portion 15, and an outer side of the cover portion 15. Note that the AR film 53 is bonded to the inner side of the transparent base member 50 through the optical film 51. Of course, the AR film 53 may be bonded to the outer side of the transparent base member 50 through the optical film 51.

The use of the AR film 53 makes it possible to prevent the occurrence of, for example, a ghost that is observed by reflection of, for example, external light. Further, there is a reduction in the image light 1 being reflected before being diffracted by the HOE. This makes it possible to improve the brightness of an image.

Note that a joint portion may be formed when the AR film 53 is bonded. For example, the joint portion of the AR film 53 indicates a position situated ahead of or behind a 3D image, and makes it possible to cause a user to more strongly feel that a 3D image is displayed on the inner side of the cover portion 15.

Further, instead of the AR film 53, an AR coat may be formed using, for example, dip coating. In this case, an AR coat with no joint portion can be provided, and this makes it possible to improve the transparency.

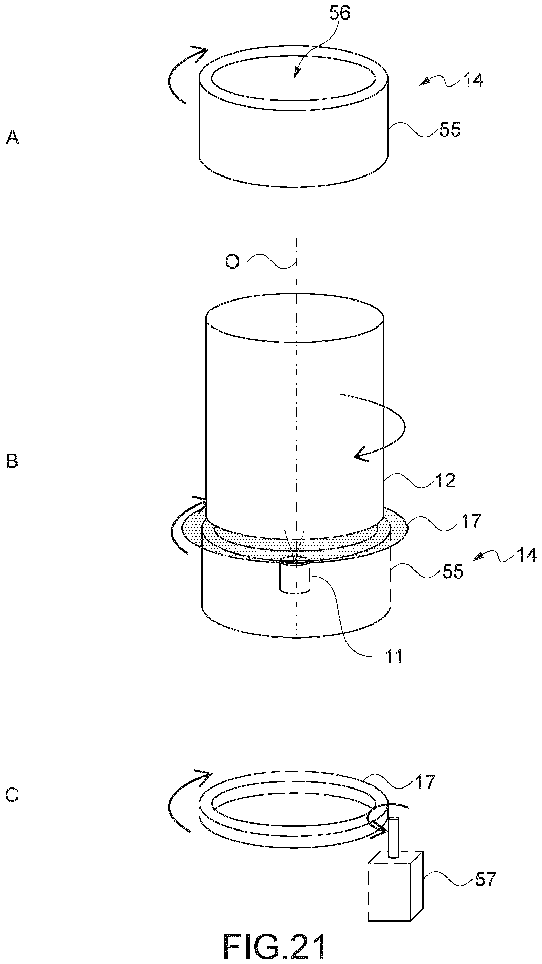

Fig. 21 schematically illustrates an example of a configuration of the rotational mechanism.

In A of Fig. 21 and B of Fig. 20, a hollow motor 55 is used as a motor of the rotational mechanism 14. As illustrated in A of Fig. 21, the hollow motor 55 is a motor that is hollow in a portion through which a rotational axis passes. The screen 12 is fixed to the hollow motor 55 through the rotational member 17 (a coupling member) described with reference to Fig. 1. As described above, the rotational mechanism 14 includes a hollow motor that rotates about a specified axis.

Further, at least a portion of the emitter 11 is arranged in an opening 56 of the hollow motor 55 when the hollow motor 55 is used, as illustrated in B of Fig. 21. For example, a projection lens of the emitter 11 is arranged in the opening 56 of the hollow motor 55. Of course, the projector body may be accommodated therein. This results in an increase in the efficiency in using a space, and in being able to provide the image display apparatus 100 being small in size.

For example, a brushless DC motor, an AC servomotor, or a stepping motor may be used as the hollow motor 55. Further, when the hollow motor 55 is used, a force is not locally applied upon rotating the screen 12. This makes it possible to sufficiently reduce noise caused upon rotation. Further, the screen 12 and the hollow motor 55 can be directly fixed to each other through the rotational member 17. This makes it possible to improve the reliability, compared to when the screen 12 is rotated using machine parts.

Note that the rotational mechanism 14 may be formed without using the hollow motor 55.

For example, a configuration in which the rotational member 17 and the screen 12a are rotated using a belt and a gear that are connected to a motor 57, may be used, as illustrated in C of Fig. 21. In this case, the motor 57 having a typical rotational axis can be used, and this makes it possible to reduce costs for the apparatus. Any motor (such as a brushless DC motor, an AC servomotor, or a stepping motor) having a rotational axis is used as the motor 57.

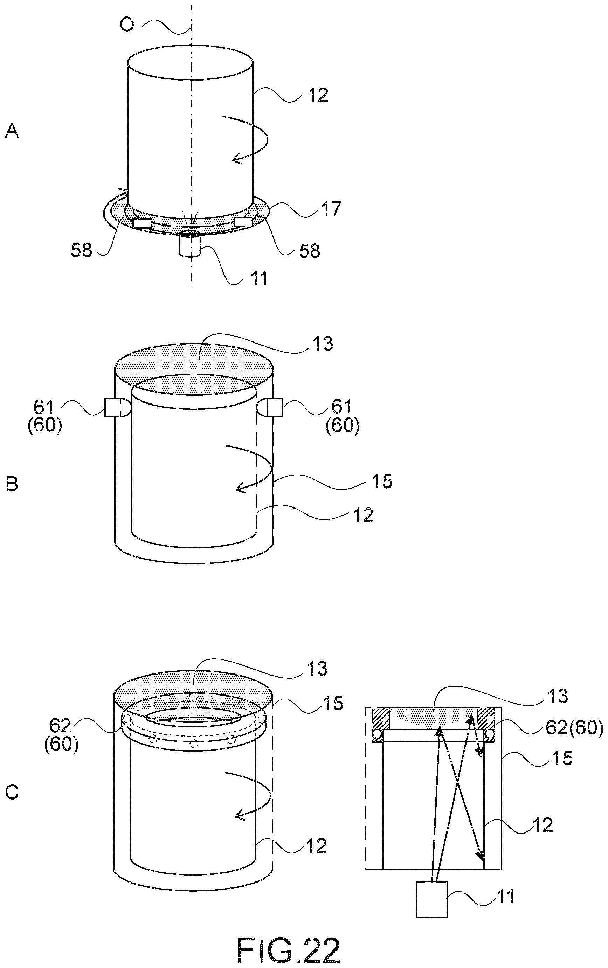

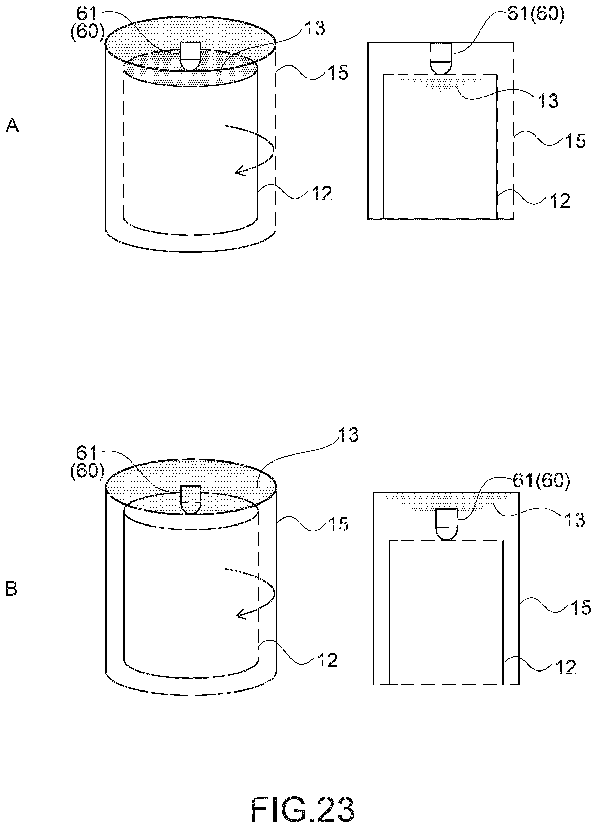

Figs. 22 and 23 schematically illustrate examples of a configuration of a rotation-caused-shift reducing mechanism.

A of Fig. 22 schematically illustrates an example in which a weight 58 for adjusting eccentricity is added in order to reduce a rotation-caused shift. In this case, the screen 12 is rotated, and the weight 58 is arranged such that vibrations of the screen 12 are made weaker. For example, such an alignment of rotation is performed for each apparatus upon shipment from a factory.

In B of Fig. 22, a ball screw 61 that includes a bearing ball is provided as a rotation-caused-shift reducing mechanism 60 to hold an upper portion of a side surface of the screen 12. Here, the ball screw 61 is provided to each of two right and left portions. However, the ball screw 61 is typically provided to each of at least three portions. For example, each ball screw 61 is arranged on the cover portion 15 together with the reflective mirror 13. This makes it possible to reduce a lateral shift that is caused in the upper portion of the screen 12.

In C of Fig. 22, a hollow cap 62 that includes a plurality of bearings is provided as the rotation-caused-shift reducing mechanism 60 to hold an upper end of the screen 12. The hollow cap 62 can be fitted into the upper end of the screen 12, and a bearing mechanism is arranged in a portion of the hollow cap 62 that is in contact with the screen 12. Further, the hollow cap 62 is a member of which the entirety has a circular shape, and the hollow cap 62 is hollow in a center portion of the hollow cap 62.

For example, the reflective mirror 13 and the hollow cap 62 are fixed to a top surface of the cover portion 15. The image light 1 emitted from the emitter 11 passes through the hollow portion of the hollow cap 62 to be incident on the reflective mirror 13, and the image light 1 reflected off the reflective mirror 13 passes through the hollow portion of the hollow cap 62 again to be incident on the screen 12.

The use of such a hollow cap 62 makes it possible to make the upper portion of the screen 12 stable with certainty, and thus to sufficiently reduce a rotation-caused shift.

In A of Fig. 23, a single ball screw 61 is provided to a center portion of the top surface of the cover portion 15 (a point of intersection of the cover portion 15 with the optical axis O) as the rotation-caused-shift reducing mechanism 60. In this configuration, the reflective mirror 13 is connected to the upper end of the screen 12, and a surface of the reflective mirror 13 that is situated opposite to the reflecting surface of the reflective mirror 13 is held by the ball screw 61. When the screen 12 is held at a position corresponding to a rotational axis (the optical axis O), as described above, this makes it possible to effectively reduce a rotation-caused shift of the screen 12 even with a small number of ball screws 61. Further, noise can be reduced since there are a small number of ball screws 61.

In B of Fig. 23, a single ball screw 61 is provided to a center portion of the reflective mirror 13 fixed to the top surface of the cover portion 15 (a point of intersection of the reflective mirror 13 with the optical axis O) as the rotation-caused-shift reducing mechanism 60. In this case, the screen 12 is provided with a member, such as a light-transmissive top-surface portion, that can receive the ball screw 61.

For example, the image light 1 passing in a light path situated closed to the optical axis O is often not used for image display. Thus, image display is not greatly affected when the ball screw 61 is provided to the center portion of the reflective mirror 13. Such a configuration also makes it possible to hold the screen 12 at a position corresponding to a rotational axis (the optical axis 0), and thus to sufficiently reduce a rotation-caused shift of the screen 12.

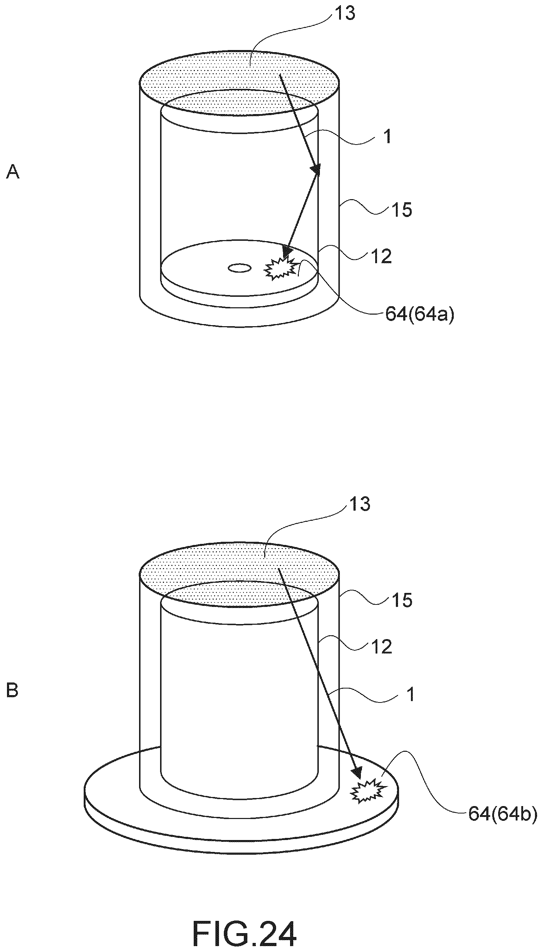

Fig. 24 schematically illustrates an example of a configuration of a reflection reduction member. A and B of Fig. 24 schematically illustrate examples of configurations of a reflection reduction member 64 that reduces reflection of the image light 1 emitted by the emitter 11.

In A of Fig. 24, a circular reflection reduction member 64a of which a center portion is open is arranged in a lower end of the screen 12. This member is a member that is rotated with the screen 12, and may be, for example, the rotational member 17 described with reference to Fig. 1 or a member that is attached to the rotational member 17. For example, a member formed by bonding a reflection reduction film to a black base member, or a member to which, for example, reflection reduction coating is applied is used as the reflection reduction member 64a. As illustrated in A of Fig. 24, the image light 1 reflected off the inside of the screen 12 is incident on the reflection reduction member 64a. When such image light 1 is made less noticeable, this results in a reduction in noise of reflected light.

In B of Fig. 24, a circular reflection reduction member 64b having a larger diameter than the cover portion 15 is attached to a lower end of the cover portion 15. This member is fixed to the cover portion 15, and is not rotated. As in the case of the reflection reduction member 64a, the reflection reduction member 64b is formed using, for example, a reflection reduction film or reflection reduction coating. For example, the image light 1 (0th order light) passing through the screen 12 is incident on the reflection reduction member 64b, as illustrated in B of Fig. 24. When such image light 1 is made less noticeable, this results in a reduction in noise of reflected light.

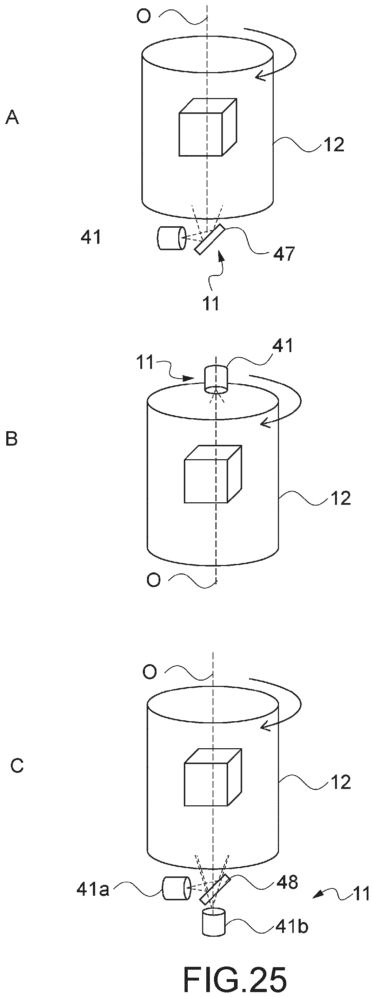

Fig. 25 schematically illustrates examples of configurations of the emitter 11. A to C of Fig. 25 each schematically illustrate the projector body 41 and various optical systems in the emitter 11.

In A of Fig. 25, the emitter 11 includes the projector body 41 emitting the image light 1, and a mirror 47 off which the image light 1 emitted by the projector body 41 is reflected. Typically, the mirror 47 is a flat mirror. The mirror 47 is arranged below the screen 12, and changes an orientation of the image light 1 emitted by the projector body 41 similarly arranged below the screen 12.

In A of Fig. 25, the horizontally emitted image light 1 is reflected vertically. The image light 1 reflected off the mirror 47 is incident on the reflective mirror 13 (not illustrated) provided above the screen 12, and is reflected off the reflective mirror 13 to be incident on the screen 12.

A position and an orientation of the projector body 41 can be changed by using the mirror 47, as described above. For example, the projector body 41 is arranged in a laterally long state in A of Fig. 25. This makes it possible to make the apparatus (for example, the base) thinner.

In B of Fig. 25, the emitter 11 (the projector body 41) is arranged above the screen 12. In this case, the image light 1 emitted by the projector body 41 passes through the screen 12 to be incident on the reflective mirror 13 (not illustrated) arranged below the screen 12, and is reflected off the reflective mirror 13 to be incident on the screen 12.

As described above, the emitter 11 may be arranged not only below the screen 12 but also above the screen 12. This enables the screen 12 to be oriented toward a viewer even when, for example, the image display apparatus 100 is arranged on a ceiling. This results in improving a degree of freedom in placement.

In C of Fig. 25, the emitter 11 is formed using two projector bodies 41a and 41b, and a beam splitter 48 (BS) that combines the pieces of image light 1 respectively emitted by the two projector bodies 41a and 41b. The beam splitter 48 may be formed using, for example, a prism, or a semitransparent mirror or the like may be used for the beam splitter 48.

The beam splitter 48 being inclined at an angle of 45 degrees is arranged below the screen 12 on the optical axis O. The projector body 41a emits the image light 1 from below along the optical axis O to be headed for the beam splitter 48. Further, the projector body 41b emits the image light 1 sideways to be headed for the beam splitter 48. Consequently, the pieces of image light 1 emitted by the projector bodies 41a and 41b are combined to be emitted by the beam splitter 48 along the optical axis O. This makes it possible to improve the brightness of an image displayed on the screen 12.

As described above, in the image display apparatus 100 according to the present embodiment, the image light 1 emitted by the emitter 11 along the optical axis O is incident on the screen 12 through the reflective mirror 13, the screen 12 being arranged all about the optical axis O, the screen 12 being rotated about the optical axis O. The screen 12 is provided with the angle controller 22 emitting the pieces of image light 1 in different directions for respective regions that are on the screen 12 and in which the pieces of image light 1 are incident on the screen 12, and/or for respective positions that are on the screen 12 and at which the pieces of image light 1 are incident on the screen 12. A position and a timing at which the image light 1 is incident on the screen 12 are controlled. Switching between the pieces of image light 1 is performed as appropriate to emit the piece of image light 1. This results in an image being displayed to be oriented toward various viewpoints P. Thus, a center portion including the specified axis is hollow, and the image display apparatus 100 in a small size makes it possible to perform stereoscopic display with high quality.

For example, an image is projected onto the reflective mirror 13 including an angle control function from the emitter 11 serving as a high-speed projector, and the image light 1 reflected off the reflective mirror 13 is incident on the screen 12. The image (the image light 1) projected onto the screen 12 is divided into vertically extending line-shaped images, and the line-shaped images obtained by the division are horizontally emitted in different directions. The screen 12 is rotated by the hollowly formed rotational mechanism 14 at a high speed to be synchronized with the image projected by the emitter 11. This makes it possible to generate a large number of viewpoints P all around the screen 12 in a range of 360 degrees. This makes it possible to view a 3D image with naked eyes from all directions, where the 3D image has binocular parallax and motion parallax. This results in being able to provide a practical transparent 360-degree glasses-free 3D display.

Further, in the image display apparatus 100, the emitter 11 serving as a high-speed projector and the hollowly formed rotational mechanism 14 are arranged on the same side, as viewed from the screen 12. Furthermore, the reflective mirror 13 is arranged across the screen 12 from the emitter 11 and the rotational mechanism 14. Moreover, the rotational axis of the rotational mechanism 14 coincides with the optical axis O of the emitter 11.

When a projection system in which the optical axis O coincides with the rotational axis is provided, as described above, this makes it possible to make the apparatus smaller in size. Further, the emitter 11 can be provided using a space formed due to the rotational mechanism 14 being hollow. This enables the emitter 11 to get closer to the cylindrical screen. Accordingly, the body size can be significantly made smaller by the projection distance being made smaller.

The configuration described above is important to make the base accommodating the emitter 11 and the rotational mechanism 14 small in size. On the other hand, the screen 12 can also be designed to be relatively large in size. In the image display apparatus 100, the screen 12 is large in size relative to the body, as described above. Thus, a video becomes large in size. Further, there is no structure in the screen 12. This makes it possible to perform highly transparent stereoscopic display with high image quality. Furthermore, light projected at an angle near the optical axis O can also be used to perform image display since the screen 12 is hollow. This makes it possible to display a large video at high resolution. Moreover, the efficiency in using the image light 1 can be sufficiently improved since the large area can be used to perform image display.

Further, the image display apparatus 100 has a configuration in which a video emitted by the emitter 11 is displayed by being reflected off the reflective mirror 13 arranged above. Thus, a source of the video is not visible to the viewer 2. This makes it possible to perform video display clearly.

Furthermore, the screen 12 can also be formed only using a single HOE. This makes it possible to improve the efficiency in using the image light 1, compared to when HOEs of a plurality of HOEs overlap.

Moreover, the use of a single emitter 11 (a high-speed projector) makes it possible to perform full 360-degree peripheral display, and thus to reduce costs for the apparatus.

### <Second Embodiment>

An image display apparatus according to a second embodiment of the present technology is described. In the following description, descriptions of a configuration and an operation that are similar to those of the image display apparatus 100 described in the embodiment above are omitted or simplified.

The example in which the cylindrical screen is used has been primarily described in the embodiment above. The shape of the screen 12 is not limited. In the present embodiment, the screen 12 having a shape other than a cylindrical shape is described.

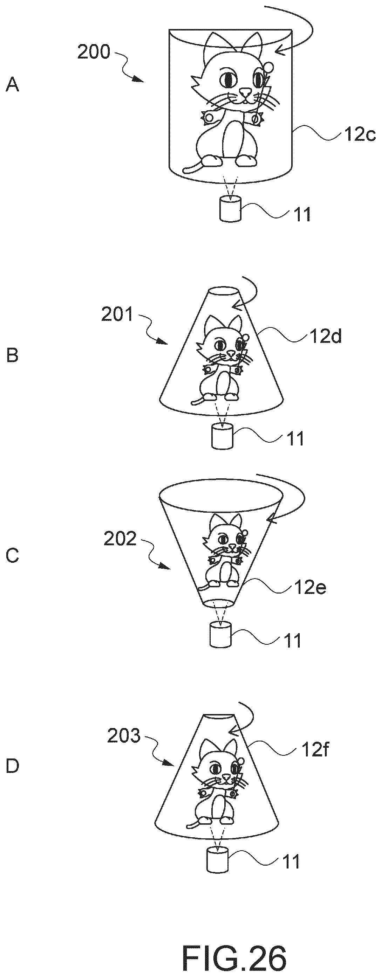

Fig. 26 schematically illustrates examples of configurations of image display apparatuses according to a second embodiment.

A, B, C, and D of Fig. 26 respectively schematically illustrate an image display apparatus 200, an image display apparatus 201, an image display apparatus 202, and an image display apparatus 203 that each include the screen 12 having a shape other than cylindrical shape.

A semicylindrical screen 12c is used in the image display apparatus 200 illustrated in A of Fig. 26. For example, the emitter 11 is arranged below the screen 12c, and the reflective mirror 13 (not illustrated) is arranged above the screen 12c. As described above, the screen 12c is rotated about a central axis of a cylinder even when the screen 12c has a semicylindrical shape. This makes it possible to perform stereoscopic display in all directions covering the complete 360 degrees circumference.

A screen 12d in the form of a truncated cone that becomes wider downwardly, is used in the image display apparatus 201 illustrated in B of Fig. 26. For example, the emitter 11 is arranged below the screen 12d, and the reflective mirror 13 (not illustrated) is arranged above the screen 12d. Note that, when the screen 12d is used, an incident angle at which the image light 1 emitted from the emitter 11 is incident on the screen 12d may be controlled using, for example, a lens (such as a wide-angle conversion lens) instead of the reflective mirror 13. In this case, a lens through which the image light 1 passes serves as an optical section that controls an angle of incidence of image light on an irradiation target.

A screen 12e in the form of a truncated cone that becomes wider upwardly, is used in the image display apparatus 202 illustrated in C of Fig. 26.

A screen 12f in the form of a truncated semi-cone obtained by a truncated cone that becomes wider downwardly being cut along a plane including a central axis of the truncated cone, is used in the image display apparatus 203 illustrated in D of Fig. 26. Of course, a screen in the form of a truncated semi-cone obtained by a truncated cone that becomes wider upwardly being cut along a plane including a central axis of the truncated cone, may be used. In this case, the screen 12f is rotated about the central axis of the truncated cone, as in the case of A of Fig. 26. This makes it possible to perform stereoscopic display in all directions covering the complete 360 degrees circumference.

As described above, a side surface of a screen on which the viewpoint image 30 is displayed is favorably a curved surface obtained by performing rotation about a rotational axis of the screen. This makes it possible to display the viewpoint image 30 at the same position when the screen is rotated, and thus to perform stereoscopic display that brings a less uncomfortable feeling. Moreover, the shape of the screen 12 is not limited, and may be set discretionarily according to the application or the design of the image display apparatus.

### <Third Embodiment>

The example in which a single angle controller 22 is provided to the screen 12 has been primarily described in the embodiments above. The number of angle controllers 22 provided to the screen 12 is not limited. In the present embodiment, the screen 12 includes a plurality of angle controllers 22.

Fig. 27 schematically illustrates examples of the configuration of the screen 12 according to a third embodiment.

A and B of Fig. 27 are schematic plan views of screens 12g and 12h in the horizontal plane, the screens 12g and 12h each including a plurality of angle controllers 22.

In the present embodiment, the angle controller 22 is a converging angle controller 22 that converges, on the convergence position F, the pieces of image light 1 respectively emitted from a plurality of division regions 23. Thus, one angle controller 22 can display the entirety of one viewpoint image 30 at the same time. The provision of a plurality of such angle controllers 22 makes it possible to display a plurality of viewpoint images 30 on one screen 12 at the same time. In other words, this results in there being a plurality of viewpoints P toward which image display can be performed to be oriented at the same time (the number of viewpoints generated simultaneously).

The screen 12g illustrated in A of Fig. 27 is provided with three angle controllers 22. Here, the angle controllers 22 having the same circumferential width are arranged about the optical axis O with an azimuth pitch of 120 degrees. Each angle controller 22 has a width less than or equal to 1/3 of the length of the outer peripheral surface of the screen 12, and the angle controllers 22 adjacent to each other do not overlap each other.

Such a configuration makes it possible to display three viewpoint images 30 on the screen 12g at the same time, and the number of viewpoints generated simultaneously is three.

The screen 12h illustrated in B of Fig. 27 is provided with six angle controllers 22. Here, the angle controllers 22 having the same circumferential width are arranged about the optical axis O with an azimuth pitch of 60 degrees. Each angle controller 22 has a width less than or equal to 1/6 of the length of the outer peripheral surface of the screen 12, and the angle controllers 22 adjacent to each other do not overlap each other.

Such a configuration makes it possible to display six viewpoint images 30 on the screen 12h at the same time, and the number of viewpoints generated simultaneously is six.

In each of the examples illustrated in A and B of Fig. 27, the angle controllers 22 having the same width are provided to one screen 12. This means that images displayed by the respective angle controllers 22 have equal plane sizes. Without being limited thereto, the angle controllers 22 may have different sizes. For example, both the angle controller 22 having a large size and the angle controller 22 having a small size may be arranged. In this case, for example, the angle controllers 22 can be used selectively, such as displaying a background using the angle controller 22 having a large size, and displaying a character using the angle controller 22 having a small size.

Moreover, the sizes of a plurality of angle controllers 22 may be set discretionarily according to, for example, the application of the apparatus or details of content.

Further, a configuration in which a plurality of angle controllers 22 is formed on one optical film 51 (a HOE) or the angle controllers 22 respectively formed on separate optical films 51 are bonded to the screen 12, may also be adopted.

As described above, an increase in the number of angle controllers 22 enables, for example, the viewpoint image 30 to be displayed to be oriented toward one viewpoint P multiple times within one rotation of the screen 12. Thus, when, for example, the frame rate for a 3D image is constant, the number of rotations of a screen can be reduced due to there being a plurality of angle controllers 22. Consequently, switching for each region provided on the basis of a viewpoint pitch is performed slowly, and this also makes it possible to reduce a frame rate for a projector.

With respect to the screen 12 including three angle controllers 22, each of the number of rotations of a screen and frame rate for a projector when the number of viewpoints generated simultaneously is three, is decreased to 1/3, compared to when the number of viewpoints generated simultaneously is one, as given in, for example, Table (1) described above. Likewise, when the number of viewpoints generated simultaneously is nine, each of the number of rotations of a screen and a frame rate for a projector is decreased to 1/9.

In consideration of such a relationship, the inventors have discussed a minimum frame rate for a projector that is necessary for the emitter 11, and have found out that the following are conditions that make it possible to perform practical stereoscopic display.

First, the frame rate for a 3D image is set to 30 fps, the viewpoint pitch is set to 3 degrees, and the number of viewpoints generated simultaneously is set to nine, with a video range being 360 degrees. In this case, the number of rotations of a screen is 200 Rpm, and the frame rate for a projector is 240 fps. Under the conditions, stereoscopic display can be viewed from all directions with a small viewpoint pitch, although the display size is relatively small.

Thus, the emitter 11 can favorably switch between the viewpoint images 30 at a frame rate for a projector that is at least greater than or equal to 240 fps. When the frame rate for a projector is greater than or equal to 240 fps, this makes it possible to perform stereoscopic display with a larger display size, or to provide a higher frame rate for a 3D image.

Further, a reduction in a frame rate for a projector (the number of rotations of a screen) results in one viewpoint image 30 being displayed for a longer period of time. Consequently, a bright viewpoint image 30 is seen, and this makes it possible to improve the brightness of stereoscopic display. Note that there is an increase in the number of rotations of the viewpoint image 30 displayed for each unit time when the number of rotations of a screen is not reduced. This also makes it possible to improve the brightness.

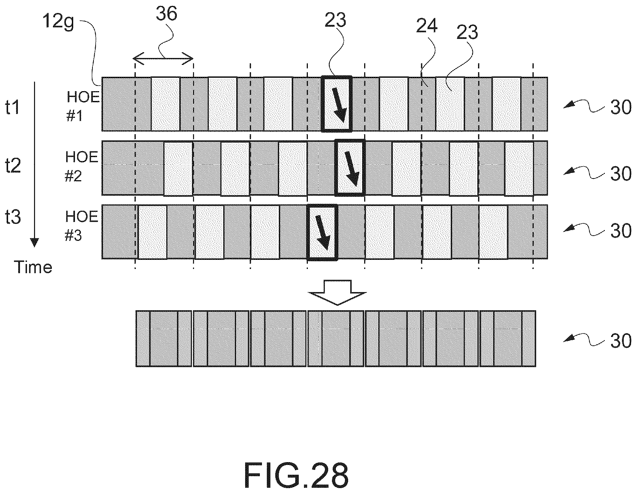

Fig. 28 is a schematic diagram used to describe a method for adjusting a position of a black stripe region on the screen provided with a plurality of angle controllers.

In the first embodiment, the method for preventing a reduction in resolution that is caused by using a black stripe region (such as the non-diffusive region 24 and the non-display region 38) that reduces a crosstalk, has been described with reference to Fig. 17. The approach of reducing a crosstalk using a black stripe region (refer to, for example, Figs. 11 to 15) is also effective when a plurality of angle controllers 22 is provided. On the other hand, a black stripe region is noticeable when the black stripe region is used by being fixed. This may result in an image with stripes at a decreased resolution.

It is assumed that, here, (the non-diffusive regions 24) respectively corresponding to black stripe regions are respectively provided to a plurality of angle controllers 22 to form spaced division regions 23 of a plurality of division regions 23 in each of the plurality of angle controllers 22. In this case, positions of the non-diffusive regions 24 formed in the respective angle controllers 22 are shifted from each other, and this makes it possible to prevent a reduction in resolution.

In the example illustrated in Fig. 28, three angle controllers 22 (HOEs #1, #2, and #3 in the figure) are provided, and positions of the non-diffusive regions 24 on the respective angle controllers 22 are shifted from each other. Here, the state in which the positions of the non-diffusive regions 24 are shifted from each other means that, for example, the positions of the non-diffusive regions 24 on the respective angle controllers 22 do not overlap each other in the respective angle controllers.

Fig. 28 schematically illustrates the screen 12 at each of times t1, t2, and t3 shifted by 1/3 of the period of rotation of the screen 12.

For example, at the time t1, the viewpoint image 30 is displayed, with the division region 23 being situated in a center portion of the projection range 36 (image display is turned on). Further, at the time t2, the viewpoint image 30 is displayed, with the division region 23 being in contact with a right border of the projection range 36. Furthermore, at the time t3, the viewpoint image 30 is displayed, with the division region 23 being in contact with a left border of the projection range 36. As described above, there is a change in a relative position of the division region 23 in the projection range 36 with respect to three angle controllers 22. This results in successively displaying images at the times t1, t2, and t3 in the respective projection ranges 36, as illustrated in a lower portion in Fig. 28. This makes it possible to perform image display with a reduced variation in brightness in general with a high degree of resolution provided to an entire region in the projection range 36.

As described above, when the number of viewpoints generated simultaneously is at least two, positions of the division region 23 separated from each other by a space (the non-diffusive region 24) are shifted from each other. This enables displays of the images to complement each other.

### <Fourth Embodiment>

The screen 12 for which the image light 1 in one color is used, has been primarily described in the embodiments above. Without being limited thereto, the screen 12 performing color display may be used.

For example, an HOE included in the screen 12 is typically an optical element having excellent wavelength selective properties, and becomes transparent relative to light of a wavelength away from an associated wavelength. Thus, the angle controllers 22 of a plurality of angle controllers 22 respectively corresponding to red, green, and blue are respectively provided. This makes it possible to successively display the viewpoint images 30 of red, green, and blue by time division. This makes it possible to perform color display using residual images of the viewpoint images 30 of red, green, and blue.

In the present embodiment, the screen 12 is provided with a plurality of angle controllers 22, and the plurality of angle controllers includes an angle controller 22R for red light, an angle controller 22G for green light, and an angle controller 22B for blue light. Regions for the angle controllers 22R, 22G, and 22B are typically regions having the same shape and the same size. Note that the angle controllers 22R, 22G, and 22B may be regions having different shapes and different sizes.

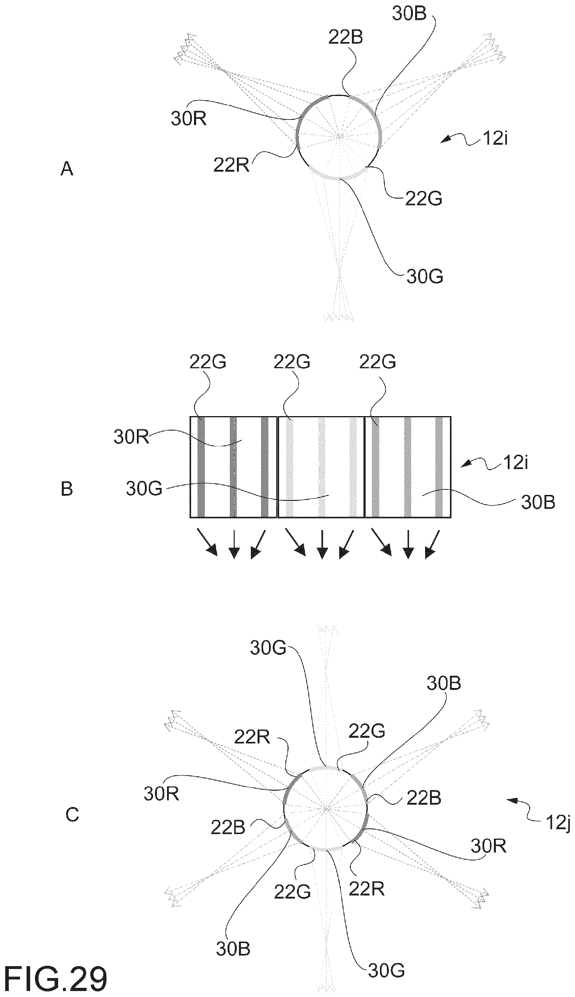

Fig. 29 schematically illustrates examples of configurations of screens for color display according to a fourth embodiment. A and C of Fig. 29 are schematic plan views of respective screens 12i and 12j in the horizontal plane, the screens 12i and 12j each including the angle controllers 22R, 22G, and 22B for the respective colors of red, green, and blue. Note that B of Fig. 29 is a schematic deployment view of the screen 12i illustrated in A of Fig. 29, and schematically illustrates vectors of emissions from the angle controllers 22R, 22G, and 22B.

The screens 12i and 12j each include the angle controllers 22 of a convergence type, and are screens respectively obtained by giving colors to the screens 12g and 12h described with reference to Fig. 27.

The screen 12i illustrated in A and B of Fig. 29 is provided with three angle controllers 22R, 22G, and 22B. Here, the angle controllers 22 having the same circumferential width are arranged about the optical axis O with an azimuth pitch of 120 degrees. Further, each angle controller 22 has a width less than or equal to 1/3 of the length of the outer peripheral surface of the screen 12, and the angle controllers 22 adjacent to each other do not overlap each other.

A of Fig. 29 illustrates the angle controller 22R for red light in an upper-left portion in the figure, the angle controller 22G for green light in a lower portion in the figure, and the angle controller 22B for blue light in an upper-right portion in the figure. Such a configuration enables the screen 12i to simultaneously display thereon viewpoint images 30R, 30G, and 30B for the respective colors of red, green, and blue.

Further, the rotation of the screen 12i makes it possible to successively display the viewpoint images 30R, 30G, and 30B by time division to be oriented toward a single viewpoint P. Consequently, the viewpoint image 30 displayed in full color can be displayed to be oriented toward any viewpoint P within one rotation of the screen 12i. Thus, the number of viewpoints generated simultaneously with respect to the viewpoint image 30 displayed on the screen 12i in full color is equivalent to one.

The screen 12j illustrated in C of Fig. 29 is provided with six angle controllers in total that are two angle controllers 22R, two angle controllers 22G, and two angle controllers 22B. Here, the angle controllers 22 having the same circumferential width are arranged about the optical axis O with an azimuth pitch of 60 degrees. Further, each angle controller 22 has a width less than or equal to 1/6 of the length of the outer peripheral surface of the screen 12, and the angle controllers 22 adjacent to each other do not overlap each other.

C of Fig. 29 illustrates the angle controllers 22R for red light in upper-left and lowerright portions in the figure, the angle controllers 22G for green light in upper and lower portions in the figure, and the angle controllers 22B for blue light in upper-right and lower-left portions in the figure. Such a configuration enables the screen 12j to simultaneously display thereon viewpoint images 30R, 30G, and 30B for the respective colors of red, green, and blue in a state in which the viewpoint images 30R are oriented opposite, the viewpoint images 30G are oriented opposite, and the viewpoint images 30B are oriented opposite.

Further, the viewpoint image 30 in full color can be displayed to be oriented toward any viewpoint P twice within one rotation of the screen 12j. Thus, the number of viewpoints generated simultaneously with respect to the viewpoint image 30 displayed on the screen 12j in full color is equivalent to two.

Further, the order of arranging the three angle controllers 22R, 22G, and 22B is not limited. The order in which the angle controllers of the same color are not arranged in a row such as "red, green, blue, red, green, blue", as illustrated in C of Fig. 28, or the order in which the angle controllers of the same color are arranged in a row such as "red, red, green, green, blue, blue" may be used.

Here, a configuration of the emitter 11 that projects the viewpoint images 30R, 30G, and 30B of red, green, and blue is described. The example in which the emitter 11 projects the viewpoint images 30R, 30G, and 30B of red, green, and blue separately has been primarily described above. For example, the emitter 11 includes three light sources that respectively emit respective pieces of light of red, green, and blue, and three light modulators that respectively correspond to the respective pieces of light of red, green, and blue; and pieces of image light 1 of red, green, and blue that are modulated by the respective light modulator are emitted along a shared optical axis. Accordingly, the projection described above is performed.

The configuration of the emitter 11 is not limited to the above-described configuration in which a light source and a light modulator are provided for each of the colors of red, green, and blue.

The emitter 11 may include a white-light source that emits white light. In this case, the emitter 11 may be a projector that includes a single light modulator that modulates white light. Further, the viewpoint images 30R, 30G, and 30B are, for example, grayscale images in which gradation is set for each pixel.

As described above, a HOE included in a screen (the screens 12i and 12j in Fig. 29) has wavelength selective properties that are properties of selectively diffracting light of a specified wavelength and causing light of a wavelength other than the specified wavelength to be transmitted through the HOE. In other words, the HOE only diffracts light of a corresponding one of the colors, as a color filter does. Thus, even when a grayscale image is projected onto the angle controller 22R for red light, red light is selectively diffracted, and a red image can be displayed. Likewise, a green image is displayed when a grayscale image is projected onto the angle controller 22G for green light, and a blue image is displayed when a grayscale image is projected onto the angle controller 22B for blue light.

As described above, the use of the wavelength selective properties of a HOE makes it possible to easily perform color display using a white-light source. Further, there is no need to provide light sources of red, green, and blue when a white-light source is used. This makes it possible to make the emitter 11 smaller in size and to reduce costs for the emitter 11. Further, it is also sufficient if only a single light modulator is provided in the configuration described above. This makes it possible to sufficiently reduce costs for the apparatus. Note that light from a white-light source may be split into pieces of light of the colors of red, green, and blue, and three light modulators corresponding to the pieces of light of the respective colors may be provided. As described above, the use of a white-light source makes it possible to share a light source, and thus to reduce costs for the apparatus.

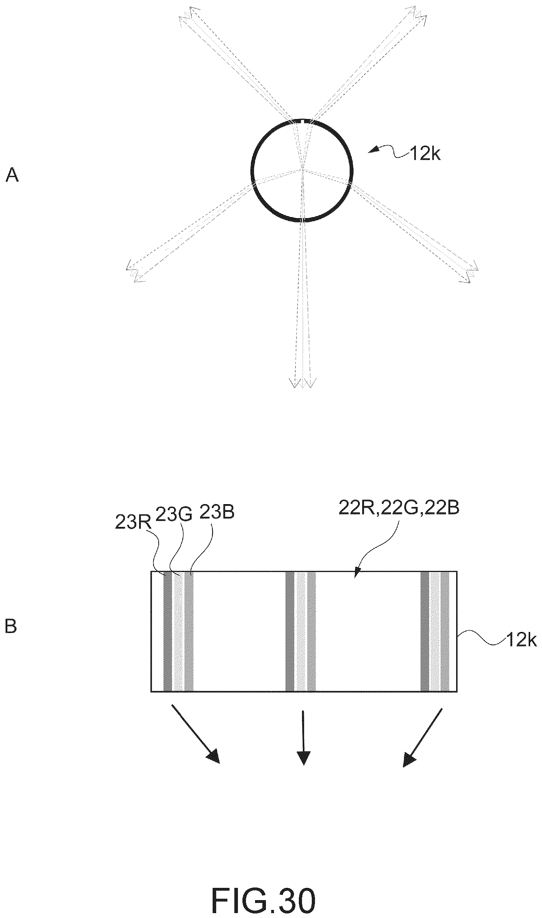

Fig. 30 schematically illustrates another example of the configuration of the screen for color display. In a screen 12k illustrated in A of Fig. 30, the division regions 23 respectively corresponding to red, green, and blue are successively arranged at the same angle. In other words, a division region 23R for red light, a division region 23G for green light, and a division region 23B for blue light are arranged adjacently. Thus, the angle controllers 22R, 22G, and 22B for pieces of light of the respective colors are formed on all of the peripheral surface of the screen 12 such that the angle controllers 22R, 22G, and 22B are situated to be shifted from each other.

A of Fig. 30 is a schematic plan view of the screen 12k in the horizontal plane. B of Fig. 29 is a schematic deployment view of the screen 12k illustrated in A of Fig. 29, and schematically illustrates vectors of emissions from the angle controllers 22R, 22G, and 22B.

The emission vector is set for each position, and is set to be converged at a specified convergence position, as seen from the deployment view in B of Fig. 29.

The rotation of the screen 12k results in, for example, displaying the viewpoint images 30R, 30G, and 30B in the form of divided stripes from one of sides in this order. Consequently, the viewpoint images 30 displayed in full color can be displayed by time division to be oriented toward any viewpoint P within one rotation of the screen 12k. Thus, the number of viewpoints generated simultaneously with respect to the viewpoint image 30 displayed on the screen 12k in full color is equivalent to one.

When the division regions 23R, 23G, and 23B respectively corresponding to red, green, and blue are successively arranged at the same angle, as described above, this results in reducing a crosstalk related to pieces of light of the colors for a single viewpoint P. In other words, this results in pieces of light of the colors for another viewpoint not being easily mixed. Note that, favorably, spaces (the non-diffusive regions 24) are also provided between the successively arranged division regions 23R, 23G, and 23B. This makes it possible to keep a ratio of pieces of light of the colors of red, green, and blue properly for each viewpoint, and thus to display a clear color image.

Moreover, the method for providing the screen 12 for color display is not limited. For example, a film in which only an HOE corresponding to red is formed, a film in which only an HOE corresponding to green is formed, and a film in which only an HOE corresponding to blue is formed may be arranged in a layered formation to form the screen 12. In this case, the respective division regions corresponding to red, green, and blue may overlap each other. A display range in which a viewpoint image is displayed can be set large by arranging the films corresponding to the respective colors in a layered formation.

### <Other Embodiments>

The present technology is not limited to the embodiments described above, and can achieve various other embodiments.

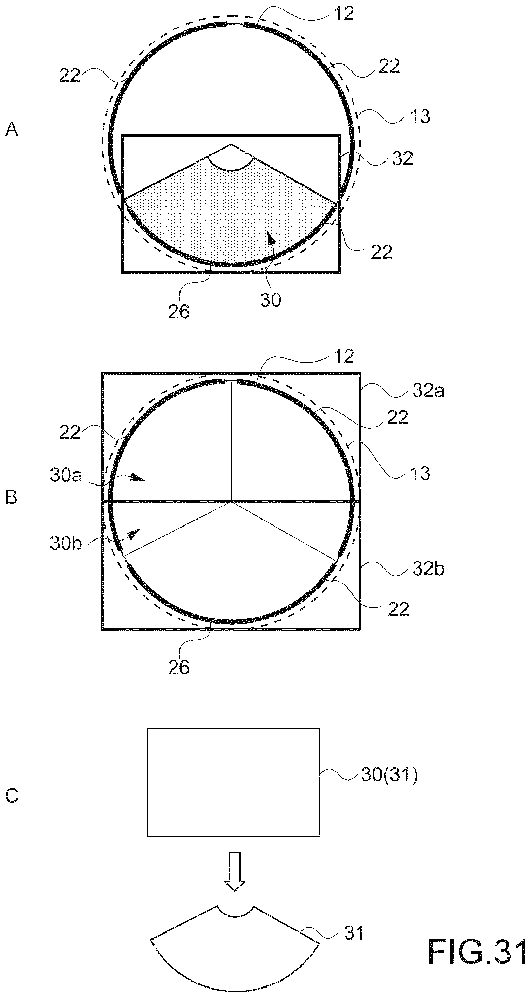

Fig. 31 schematically illustrates an example of a configuration of the emitter 11 according to another embodiment, and an example of a configuration of image data. The configuration in which the viewpoint image 30 is displayed on the screen 12 in all directions has been primarily described in the embodiments described above. When, for example, the screen 12 is viewed only from one direction or a viewing is performed at a determined position, there is no need to display the viewpoint image 30 in all directions. In this case, image display may be performed only in a partial angular range on the screen 12.

A of Fig. 31 illustrates an example in which a display range 26 in which the viewpoint image 30 is displayed is limited by causing display pixels to get close to each other. Here, the viewpoint image 30 is displayed to be oriented toward the display range 26 on the screen 12 in a lower portion in the figure. In this case, the viewpoint image 30 projected by the emitter 11 (not illustrated) onto the reflective mirror 13 indicated in the form of a dotted region, does not necessarily have to be an image formed about the optical axis O, and setting can be performed such that the image light 1 can be projected onto the display range 26 on the screen 12, as illustrated in A of Fig. 31. Here, an image obtained by a circular-sector-shaped viewpoint image 30 used to be displayed in the display range 26 being made largest in a frame 32 (a display region in image data 31), is formed and emitted to be headed for the reflective mirror 13.

When the viewpoint image 30 is projected, an axis of emission performed by the emitter 11 is shifted from the optical axis O such that, for example, the image is moved to be situated on one of sides of the screen 12. Specifically, there is a method for shifting the emission axis using a projection lens for a light modulator (a modulation panel) such as a DMD. In this case, for example, the above-described reflective mirror 13 having a rotational reflecting surface may be used with no change. Further, when the viewpoint image 30 is emitted about the optical axis O, display pixels can also be moved to be situated on one of sides of the screen 12 using a freeform surface mirror.

In A of Fig. 31, the viewpoint image 30 for the limited display range 26 can be made largest in a frame, as described above. This makes it possible to improve the resolution of image display performed on the screen 12.

Further, image display can be performed in full color by performing driving by time division for red, green, and blue, and by forming HOEs for the respective colors. When, for example, the angle controllers 22 are provided to equally divide all of the periphery of the screen 12 into three, as illustrated in A of Fig. 31, the angle controllers 22 are the angle controller 22R for red light, the angle controller 22G for green, and the angle controller 22B for blue, respectively. Further, in a state of being shifted from the optical axis O, the viewpoint images 30R, 30G, and 30B respectively corresponding to the respective colors of red, green, and blue are respectively projected onto the angle controllers 22R, 22G, and 22B by time division from the emitter 11. This makes it possible to perform stereoscopic display in full color at high resolution.

In B of Fig. 31, the emitter 11 including a plurality of projector units (projector bodies) emits the viewpoint image 30. The projector unit is configured such that the time-division driving to project the viewpoint image 30 by time division can be performed. A plurality of such projector units shifted from the optical axis O in different directions is arranged for a single projection lens, and this makes it possible to increase an angular range for display in which display can be performed at high resolution.

Here, two projector units, and a projection lens that causes the viewpoint image 30 emitted from each projector unit to be shifted from the optical axis O are provided. A viewpoint image 30a is projected onto an irradiation range (a frame 32a) of one of the projector units, and a viewpoint image 30b is projected onto an irradiation range (a frame 32b) of another of the projector units. Further, the frame 32a is shifted to cover half the reflective mirror 13 in an upper portion in the figure, and the frame 32b is shifted to cover half the reflective mirror 13 in a lower portion in the figure. Furthermore, the frame 32a and the frame 32b are each set to be circumscribed to a semicircle corresponding to half the reflective mirror 13 in a plan view. This makes it possible to perform display all around the screen 12 at high resolution.

Note that the frame 32a (the frame 32b) does not necessarily have to be circumscribed to a semicircle corresponding to half the reflective mirror 13. For example, the frame 32a (the frame 32b) may be set to partially cover the semicircle, as illustrated in A of Fig. 31. Further, the frame 32a and the frame 32b may overlap each other, or may be sized to be larger than those illustrated in B of Fig. 31.

C of Fig. 31 illustrates an example in which an optical system that deforms a rectangular frame in a circular-sector shape is used. It is assumed that, here, the emitter 11 is provided with a projection optical system (such as a projection lens). C of Fig. 31 illustrates, in an upper portion, a rectangular viewpoint image 30 incident on the projection optical system. C of Fig. 31 illustrates, in a lower portion, the viewpoint image 30 deformed by the projection optical system. An image is deformed by a projection optical system in advance, as described above, and this makes it possible to resolve a difference in resolution between upper and lower portions of the screen 12 when the image is projected onto the screen 12.

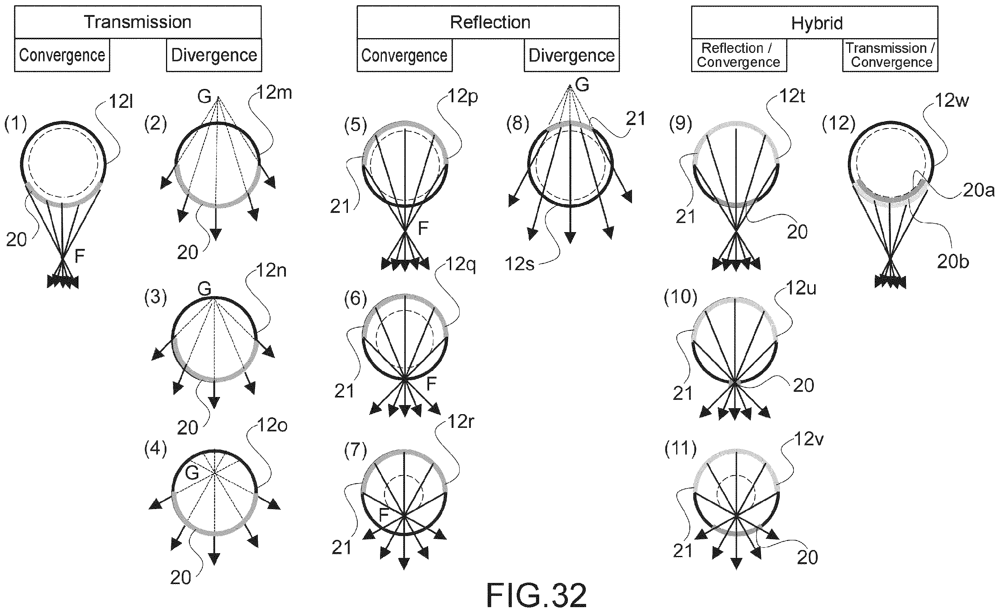

Fig. 32 schematically illustrates examples of configurations of screens according to other embodiments. Fig. 32 illustrates groups of the screen 12 using an HOE. Here, Fig. 32 illustrates a group ((1) to (4)) of the screen 12 using the transmissive HOE 20, a group ((5) to (8)) of the screen 12 using a reflective HOE 21, and a hybrid-type group ((9) to (12)) of the screen 12 using two kinds of HOEs.

Further, Fig. 32 illustrates a convergence-type screen 12 and a divergence-type screen 12 that are included in each of the group using the transmissive HOE 20 and the group using the reflective HOE 21. Note that HOEs in the two groups each include a diffusion function. Furthermore, Fig. 32 illustrates a convergence-type screen 12 using the reflective HOE 21 and a convergence-type screen 12 using the transmissive HOE 20 that are included in the hybrid-type group.

A screen 12l in (1) of Fig. 32 converges the image light 1 at the convergence position F using the transmissive HOE 20. The screen 12l is the same type of screen as the screen 12 described with reference to, for example, Fig. 2, and is the screen 12 on which the entirety of the viewpoint image 30 can be displayed at the same time.

Each of screens 12m, 12n, and 12o in (2), (3), and (4) of Fig. 32 diverges the image light 1 using the transmissive HOE 20. As described later, the viewpoint images 30 can be displayed by time division even on the divergence-type screen 12. A side on which the image light 1 is emitted in a state in which the screen 12 is stationary is hereinafter referred to as a side of a front surface of the screen 12, and the opposite side is hereinafter referred to as a side of a back surface of the screen 12. The front surface of each screen 12 illustrated in Fig. 32 is situated on a lower side in the figure, and the back surface of each screen 12 illustrated in Fig. 32 is situated on an upper side in the figure.

The screens 12m, 12n, and 12o are respectively provided with the angle controllers 22 of the same size on the sides of the respective front surfaces. Further, for the screen 12m, a start-point position G that corresponds to a start point from which the image light 1 is diverged is set on the side of the back surface of the screen 12m. For the screen 12n, the start-point position G is set on a portion of the screen 12n that is situated on the side of the back surface of the screen 12n. For the screen 12o, the start-point position G is set inside of the screen 12o. Further, an angle range of an angle of the image light 1 is larger if the start-point position G is situated closer to the center of the screen 12, the angle range expanding around the start-point position G.

Each of screens 12p, 12q, and 12r in (5), (6), and (7) of Fig. 32 converges the image light 1 using the reflective HOE 21. The screens 12p, 12q, and 12r are respectively provided with the angle controllers 22 of the same size on the sides of the respective back surfaces. These angle controllers 22 are reflective angle controllers, and each of the angle controllers 22 controls a direction of reflection of incident light when the incident light is reflected off the angle controller 22. Further, for the screen 12p, the convergence position F of convergence of the image light 1 is set on the side of the front surface of the screen 12p. For the screen 12q, the convergence position F is set on a portion of the screen 12q that is situated on the side of the front surface of the screen 12q. For the screen 12r, the convergence position F is set inside of the screen 12r. Further, an angle at which the image light 1 is bent to be headed for the convergence position F from the angle controller 22 is larger if the convergence position F is situated closer to the center of the screen 12.

A screen 12s in (8) of Fig. 32 diverges the image light 1 using the reflective HOE 21, with the start-point position G being a start point of the divergence. Here, the start-point position G is set on the side of the back surface of the screen 12s, and the image light 1 reflected off the angle controller 22 is emitted to be diverged with no change.

Each of screens 12t, 12u, and 12v in (9), (10), and (11) of Fig. 32 converges the image light 1 using the reflective HOE 21. The screens 12t, 12u, and 12v are respectively provided with the angle controllers 22 of the same size on the sides of the respective front surfaces. Further, for the screen 12p, the convergence position F of convergence of the image light 1 is set on the side of the front surface of the screen 12p. For the screen 12q, the convergence position F is set on a portion of the screen 12q that is situated on the side of the front surface of the screen 12q. For the screen 12r, the convergence position F is set inside of the screen 12r.

Note that the reflective HOE 21 of each of the screens 12t, 12u, and 12v includes no diffusion function. Thus, the transmissive HOE 20 including an anisotropically diffusing function is arranged in a portion on the front surface of the screen, where the reflective HOE 21 passes through the portion on the front surface of the screen. Consequently, an image is displayed on the transmissive HOE 20 situated on the front surface of the screen 12 when each of the screens 12t, 12u, and 12v is adopted.

A screen 12w in (12) of Fig. 32 converges the image light 1 using a transmissive HOE 20a. The transmissive HOE 20a converging the image light 1 includes no diffusion function. Thus, a transmissive HOE 20b that includes an anisotropically diffusing function is bonded to an outer side of the transmissive HOE 20a. The functions of convergence and diffusion may be provided by using the two transmissive HOEs 20a and 20b, as described above.

Moreover, the method for forming the screen 12 using the transmissive HOE 20 or the reflective HOE 21 is not limited.

Fig. 33 is a schematic diagram used to describe a method for displaying the viewpoint image 30 using the divergence-type screen 12.

In the present disclosure, emission angles can be respectively set for a plurality of division regions 23 included in the angle controller 22, such that the image light 1 emitted from each of the plurality of division regions 23 is converged or diverged in the horizontal plane, as described above.

Here, the method for displaying the viewpoint image 30 is described using, as an example, a diverging screen 12m illustrated in (2) in Fig. 32, where the screen 12m uses the transmissive HOEs 20 and for which emission angles are set such that the image light 1 is diverged.

Fig. 33 schematically illustrates, on the left, a state in which the screen 12m is rotated, where there are five light paths of the pieces of image light 1 transmitted through the screen 12m to be diverged.

For example, the image light 1 passing through the leftmost light path in the figure passes by a viewpoint P at a time t1. Likewise, the image light 1 passing through the second light path from the left in the figure passes by the viewpoint P at a time t2, the image light 1 passing through the third light path from the left in the figure passes by the viewpoint P at a time t3, the image light 1 passing through the fourth light path from the left in the figure passes by the viewpoint P at a time t4, and the image light 1 passing through the fifth light path from the left in the figure passes by the viewpoint P at a time t5. Each piece of image light 1 emitted from a corresponding one of the division regions 23 of the angle controller 22 to be diverged passes by a certain viewpoint P due to rotation of screen 12 at least once within one rotation of the screen 12, as described above.

Fig. 33 schematically illustrates, on the right, simultaneously displaying the light paths of the pieces of image light 1 respectively passing by the viewpoint P at the times t1 to t5. When the light paths of the pieces of image light 1 passing by the viewpoint P overlap, as illustrated in the figure, the light paths similar to light paths obtained when the viewpoint image 30 displayed on the screen 12 is converged at the viewpoint P (refer to B of Fig. 2). The use of such a configuration makes it possible to display the viewpoint image 30 by time division.

Specifically, a division image 34 is displayed at a time t1 on the division region 23 passing through the leftmost light path in the figure, where the division image 34 is included in the viewpoint image 30 corresponding to the viewpoint P and corresponds to the division region 23 passing through the leftmost light path in the figure. Further, the division image 34 is displayed at a time t2 on the division region 23 corresponding to the second light path from the left in the figure, where the division image 34 is included in the viewpoint image 30 corresponding to the viewpoint P and corresponds to the division region 23 corresponding to the second light path from the left in the figure. The division image 34 is displayed at a time t3 on the division region 23 corresponding to the third light path from the left in the figure, where the division image 34 is included in the viewpoint image 30 corresponding to the viewpoint P and corresponds to the division region 23 corresponding to the third light path from the left in the figure. The division image 34 is displayed at a time t4 on the division region 23 corresponding to the fourth light path from the left in the figure, where the division image 34 is included in the viewpoint image 30 corresponding to the viewpoint P and corresponds to the division region 23 corresponding to the fourth light path from the left in the figure. The division image 34 is displayed at a time t5 on the division region 23 corresponding to the fifth light path from the left in the figure, where the division image 34 is included in the viewpoint image 30 corresponding to the viewpoint P and corresponds to the division region 23 corresponding to the fifth light path from the left in the figure. This enables the viewpoint image 30 corresponding to a certain viewpoint P to be displayed by time division to be oriented toward the certain viewpoint P. The viewer 2 can perceive the entirety of the viewpoint image 30 by use of residual images of a plurality of division images 34 (line-shaped videos) even when the viewpoint image 30 is displayed by time division, as described above.

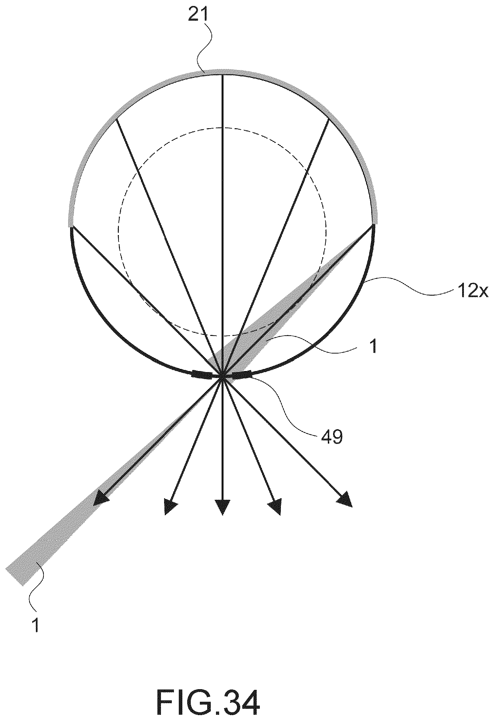

Fig. 34 schematically illustrates an example of applying a physical slit that adjusts a diffusion angle.

Here, an example of applying a physical slit to the screen 12 enabling the image light 1 to be converged on the screen 12, as in the case of (6) of Fig. 32, is described.

A screen 12x illustrated in Fig. 34 is provided with the reflective HOE 21 on the side of the back surface of the screen 12x (the upper side in the figure). The image light 1 reflected off the reflective HOE 21 is first converged on a portion situated on the front surface of the screen. Thereafter, the image light 1 is emitted to be diverged.

A physical slit 49 is provided at a convergence position situated on the side of the front surface. Here, the physical slit 49 is a longitudinally long slit that is provided vertically, where light passes through the center of the slit to block the light by portions on two sides of the slit. The provision of the physical slit 49 makes it possible to perform adjustment such that, for example, diffused light diffused by the reflective HOE 21 is distributed more narrowly.

Fig. 34 schematically illustrates a gray region that indicates a distribution of diffusion of the image light 1 emitted from a right end of the reflective HOE 21. The diffusion distribution is wider than a slit width of the physical slit 49. Thus, only a component that is included in the image light 1 emitted from the right end of the reflective HOE 21 and can pass through the physical slit 49, passes through the physical slit 49, and the other components are blocked by the blocking portions on the two sides.

This makes it possible to make a width of a beam in the horizontal plane narrower. Consequently, image display with a sufficiently reduced crosstalk can be performed even when, for example, the reflective HOE 21 serving as a reflective diffusion screen has been manufactured with a low degree of accuracy.

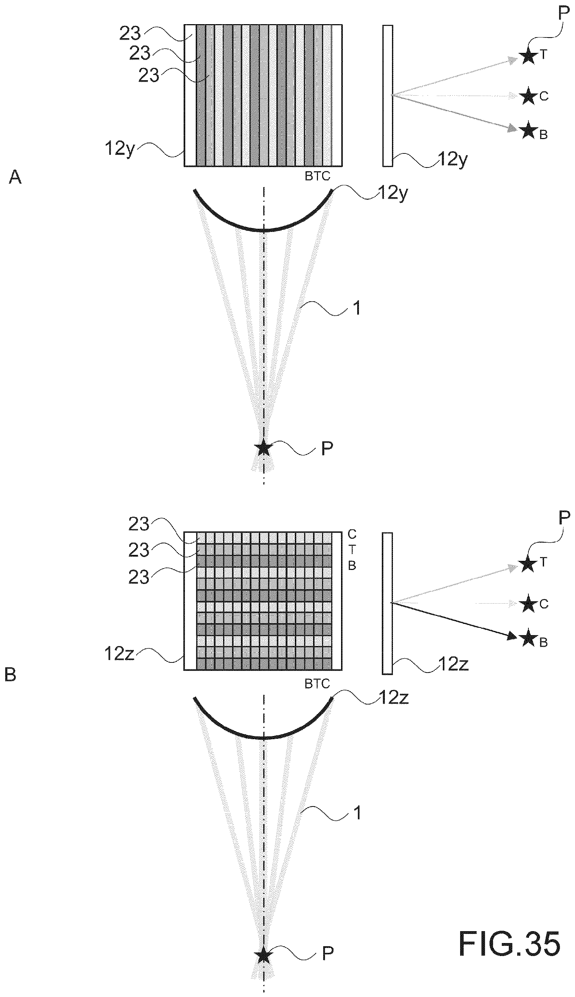

Fig. 35 schematically illustrates examples of division regions having different angle components in the vertical direction.

The example in which emission angles are set for a plurality of division regions 23 such that components of angles formed in the horizontal plane (azimuth components) are different from each other and such that a component of an angle formed with the horizontal plane (an elevation component) is fixed, has been described in the embodiments above. For example, different elevation components may be set for the emission angles to form the screen 12 for which the emission angle is also changed in the up-and-down direction.

A strip-shaped division region 23 that extends longitudinally is provided to a screen 12y illustrated in A of Fig. 35. Here, the emission angles are set for a set of three consecutive division regions 23.

For example, all of azimuth components of emission angles set for the three division regions included in the set are set to the same value. On the other hand, elevation components of the emission angles are set to different values. Here, an elevation component T (Top) oriented diagonally upward relative to the horizontal plane, an elevation component C (Center) parallel to the horizontal plane, and an elevation component B (Bottom) oriented diagonally downward relative to the horizontal plane are respectively set for the three division regions in the set. In the example illustrated in A of Fig. 35, the elevation components B, T, and C are set from the left in this order.

Note that setting is performed such that the azimuth component of the emission angle differs depending on the set of division regions. For example, the convergence-type screen 12y enabling the image light 1 to be converged in the horizontal plane is provided using the set of three division regions.

It can also be said that the screen 12y displays thereon a horizontally situated video such that the video is oriented toward vertically situated viewpoints, as described above. This makes it possible to display the viewpoint image 30 such that the viewpoint image 30 is also oriented toward a viewpoint P at which the screen 12y is viewed from above or below. This makes it possible to provide motion parallax in the up-and-down direction, and thus to provide a natural stereo image.

A screen 12z B of Fig. 35 is provided with a plurality of division regions 23 arranged in a grid obtained by division being performed circumferentially and longitudinally.

In this configuration, the azimuth component of the emission angle differs depending on the longitudinally extending line. Thus, the division regions included in the same longitudinally extending line have the same azimuth component of the emission angle, whereas the division regions included in different longitudinally extending lines have different azimuth components.

Further, setting is performed such that switching between the elevation components of the emission angles is performed periodically for each laterally extending line. Here, the elevation component of the emission angle is set for each laterally extending line in order of C, T, B from the top of the screen 12z.

It can also be said that videos obtained by dividing a vertically situated video are displayed on the screen 12z to be oriented toward vertically situated viewpoints, as described above. In this configuration, the viewpoint image 30 can also be displayed to be oriented toward a viewpoint P at which the screen 12z is viewed from above or below. Further, this configuration makes it possible to increase the resolution in the circumferential direction, compared to when a horizontally situated video is oriented in different directions, as in the case of A of Fig. 35. This makes it possible to perform stereoscopic display with high quality.

In B of Fig. 35, the division regions 23 arranged in a grid obtained by division being performed circumferentially and longitudinally, where different elevation components of emission angles are set for the division regions 23. However, the configuration is not limited thereto. For example, the division regions 23 arranged in a houndstooth pattern or the division regions 23 arranged in a random pattern to be slightly shifted from each other may be provided. In this case, the division regions 23 are arranged to be slightly shifted from each other. Thus, unevenness of brightness and the like in an inner portion of the division region 23 and in a border of the division regions 23 are resolved to provide the brightness uniformity. This results in improving transparency.

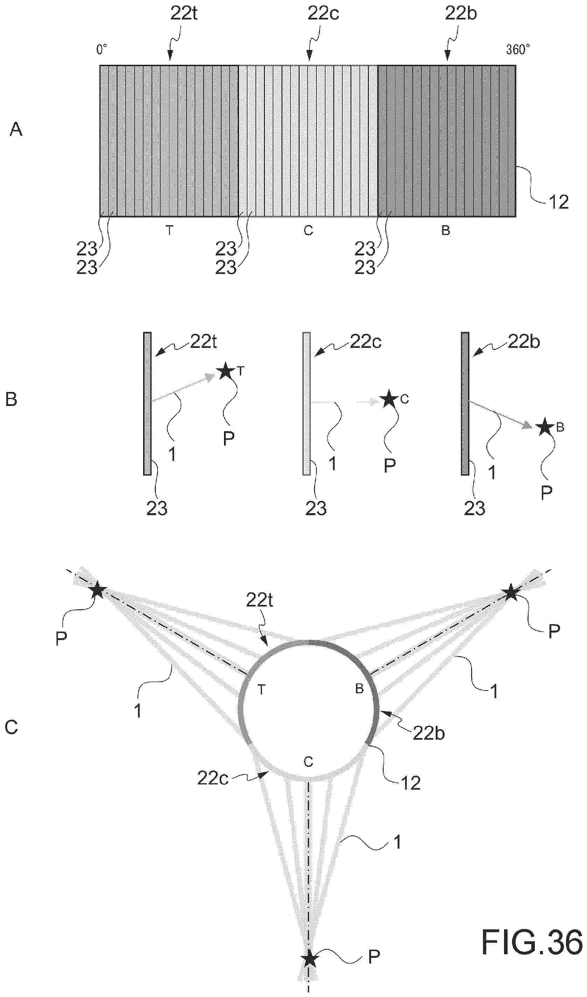

Fig. 36 schematically illustrates another example of the screen 12 for which the emission angle is changed in the up-and-down direction.

As illustrated in A of Fig. 36, three angle controllers 22t, 22c, and 22b are formed on the screen 12. Here, the angle controllers 22 are respectively formed in angle ranges of an angle of 120 degrees with no space between the angle controllers 22. However, there may be a space between the angle controllers 22.

B of Fig. 36 schematically illustrates an elevation component of an emission angle at which the image light 1 incident on each of the angle controllers 22t, 22c, and 22b is emitted. A plurality of division regions 23 for which the elevation component T oriented diagonally upward relative to the horizontal plane is set is formed on the angle controller 22t. A plurality of division regions 23 for which the elevation component C parallel to the horizontal plane is set is formed on the angle controller 22c. A plurality of division regions 23 for which the elevation component B oriented diagonally downward relative to the horizontal plane is set is formed on the angle controller 22b.

Further, as illustrated in C of Fig. 36, each of the angle controllers 22t, 22c, and 22b is configured to converge the image light 1 incident on each division region 23.

The use of the screen 12 illustrated in Fig. 36 makes it possible to display, for example, a 3D image that can be viewed at three different elevation angles relative to one direction (one viewpoint P). As described above, an image can also be oriented toward vertically situated viewpoints for each angle controller 22. In such a configuration, it is sufficient if three angle controllers 22 having different elevation components are respectively formed. This makes it possible to easily expose an HOE to light.

Stereoscopic display depending on an actual viewpoint of a viewer may be performed using, for example, a system that detects a viewing position at which the viewer performs viewing (the viewpoint P). For example, a system such as a face-tracking sensing system (face tracking) or eye-tracking sensing system (line-of-sight tracking) that performs sensing on all of the peripheral surface of a screen, may be introduced.

For example, an all-around camera that includes, for example, a fish-eye lens is provided to an image display apparatus, and a video captured by the all-around camera is analyzed as appropriate. This makes it possible to perform face tracking or line-of-sight tracking. On the basis of a result of the tracking, a 3D object or the like that moves interactively is displayed on a screen according to a current viewpoint P of a viewer. This enables a viewer to view a natural stereo image associated with his/her own motion.

Further, an amount of transmission of a video signal that corresponds to the image data 31 can be reduced using a system that detects a viewing position at which a viewer performs viewing (the viewpoint P). In other words, processing such as not displaying an image in a direction in which a viewer is not looking makes it possible to reduce the entirety of data amount, and to reduce processing burdens necessary to perform image processing.

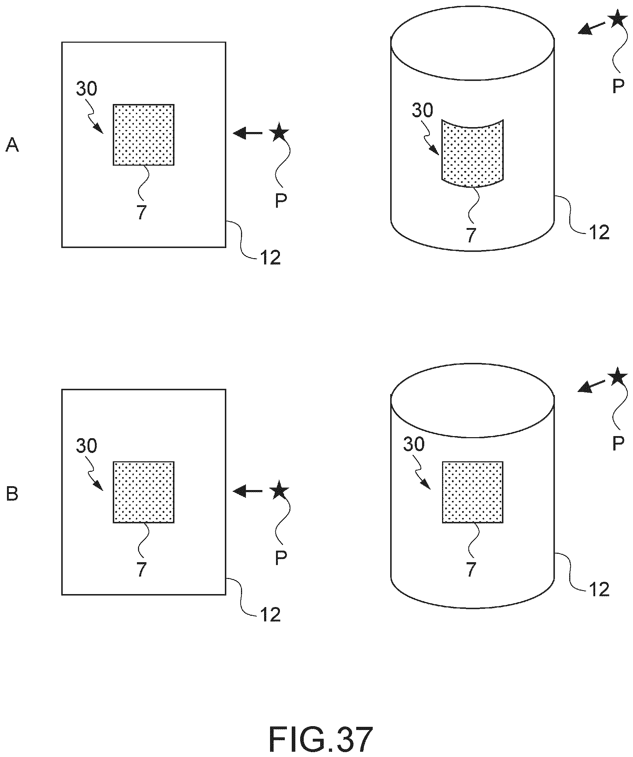

Fig. 37 is a schematic diagram used to describe how a viewpoint image looks according to a change in a position of the viewpoint P in the up-and-down direction. When there is a change in a position of the viewpoint P in the up-and-down direction, a motionparallax video with motion parallax in the up-and-down direction may be displayed in real time.

In A of Fig. 37, the same viewpoint image 30 is displayed regardless of the position of the viewpoint P in the up-and-down direction. Here, the viewpoint image 30 including a 3D object 7 that appears to be rectangular when the screen 12 is viewed from the front is displayed, as on the left in A of Fig. 37. It is assumed that the viewpoint P is moved upward in this state and the screen 12 is seen from diagonally above, as on the right in A of Fig. 37. In this case, a position at which the 3D object 7 is displayed is shifted if the viewpoint image 30 is changed. This may result in distortion in the form of a circular arc being noticeable.

As a method for reducing such a shift of a display position and such distortion, there is a method for correcting, using a system that detects the viewpoint P of a viewer, the 3D object 7 (the viewpoint image 30) such that motion parallax in the up-and-down direction is reflected.

In B of Fig. 37, the viewpoint image 30 is corrected according to the position of the viewpoint P in the up-and-down direction. Here, the position and the shape of the viewpoint image 30 are corrected in real time such that the 3D object 7 having a correct shape is localized in a real space, as viewed from diagonally above.

For example, the 3D object 7 is moved upward when the screen 12 is viewed from above, and the 3D object 7 is moved downward when the screen 12 is viewed from below. Further, the 3D object 7 is corrected according to an angle corresponding to the position of the viewpoint P in the up-and-down direction, such that the distortion in the form of a circular arc disappears.

Such a correction results in there being no change in a position at which the 3D object 7 is displayed between the case in which the screen 12 is viewed from the front (on the left in B of Fig. 37) and the case in which the screen 12 is viewed from diagonally above (on the right in B of Fig. 37), and also results in no occurrence of unnatural distortion. This makes it possible to perform natural stereoscopic display with a sense of realism.

A reflective mirror that includes a reflecting surface that is a paraboloid is used in the description above. A shape and the like of the reflecting surface are not limited, and, for example, any reflecting surface off which image light can be reflected according to, for example, a shape of a screen, may be used. For example, the reflecting surface may be an aspheric surface (such as a freeform surface) that is different from a paraboloid. For example, the freeform surface is configured such that an angle of incidence of image light on a screen is substantially constant. Such a curved surface can be designed according to, for example, light-path simulation.

Further, the reflecting surface is not limited to being configured such that the incident angle is substantially constant, and image light may be reflected off the reflecting surface such that the incident angle is distributed in a specified angle range. In this case, for example, pieces of image light are incident on a screen in the up-and-down direction at different angles of incidence.

Further, image light may be incident on a screen using, for example, an optical element that refracts image light, instead of using a reflective mirror off which image light is reflected. For example, the use of a transmissive optical element such as a Fresnel lens makes it possible to control a traveling direction of image light such that the image light is incident on a screen.

The method for controlling rotation of the screen that is performed by the rotational mechanism has been described above as a method for synchronizing display of an image made up by image light with rotation of a screen. For example, a timing of displaying a viewpoint image may be controlled according to rotation of a screen. Further, for example, both the timing of displaying a viewpoint image and the rotation of a screen may be controlled such that the viewpoint image is displayed properly.

The following are examples of image display apparatuses.

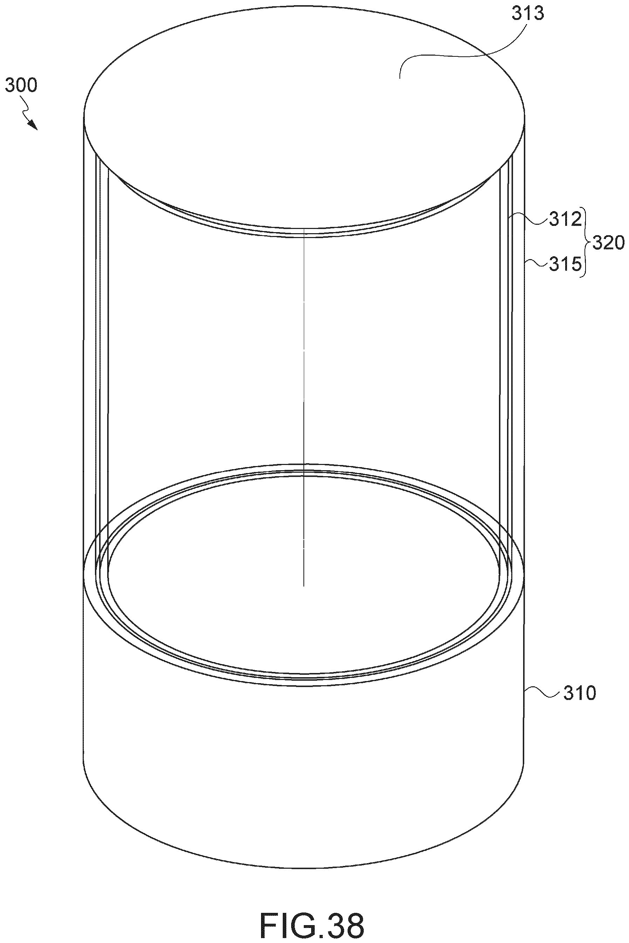

Fig. 38 is a perspective view illustrating an example of a configuration of an image display apparatus.

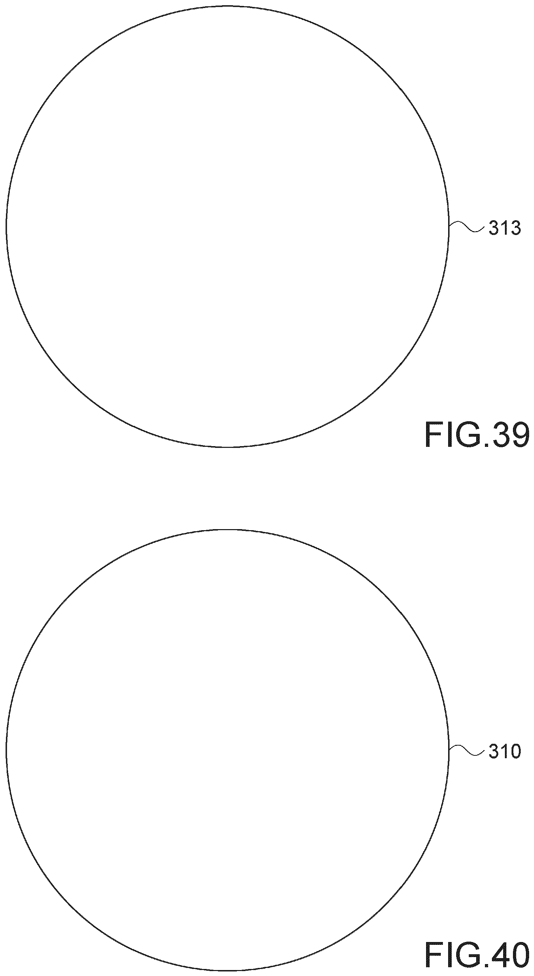

Fig. 39 is a plan view of the image display apparatus illustrated in Fig. 38.

Fig. 40 is a bottom view of the image display apparatus illustrated in Fig. 38.

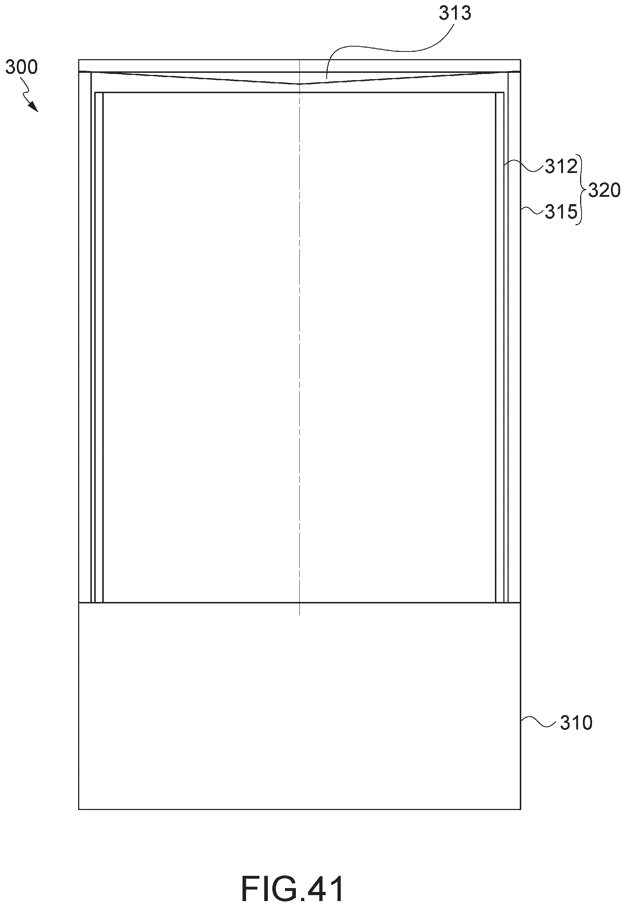

Fig. 41 is a side view of the image display apparatus illustrated in Fig. 38.

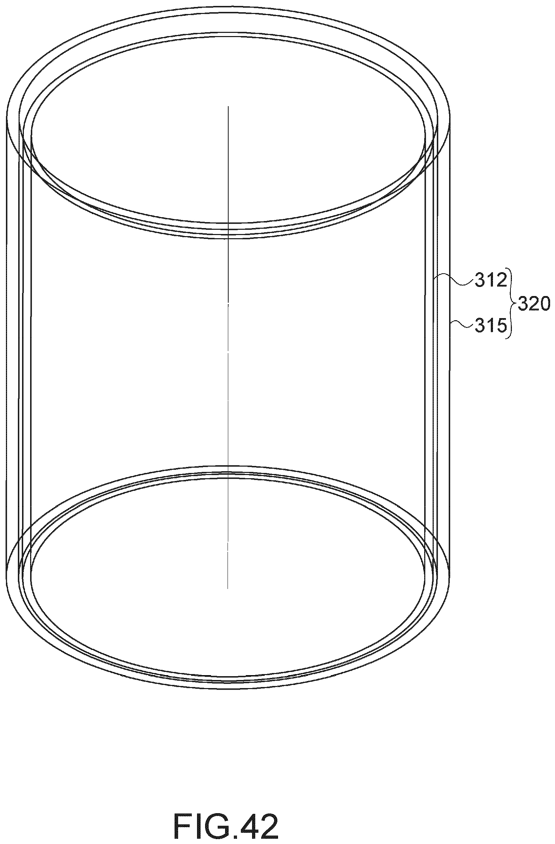

Fig. 42 is a perspective view of a screen unit that is provided to the image display apparatus illustrated in Fig. 38.

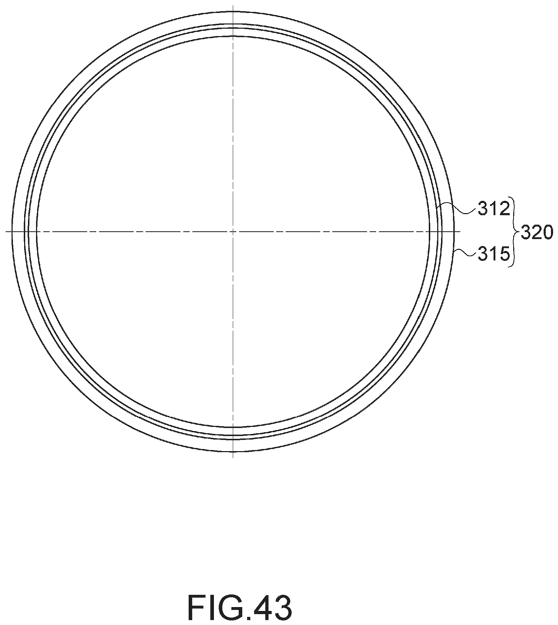

Fig. 43 is a plan view of the screen unit illustrated in Fig. 42.

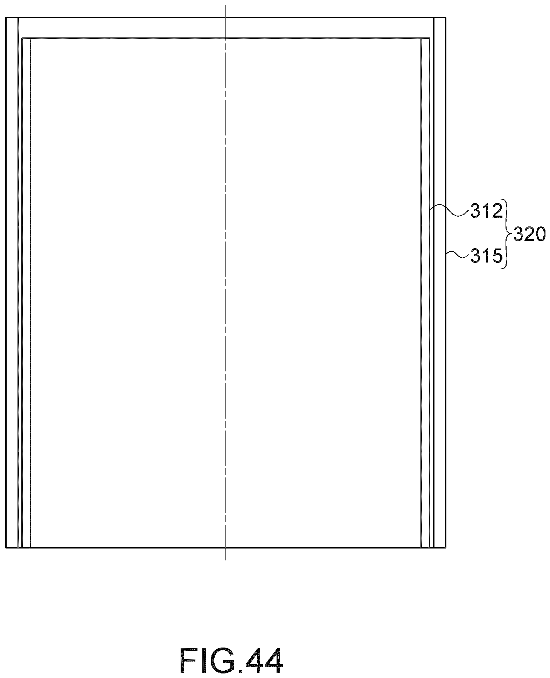

Fig. 44 is a side view of the screen unit illustrated in Fig. 42.

An image display apparatus 300 illustrated in Fig. 38 includes a base 310, a screen 312, a reflective mirror 313, and a cover portion 315. Further, an emitter (not illustrated) and a rotational mechanism (not illustrated) are provided inside of the image display apparatus 301. The base 310, the screen 312, the reflective mirror 313, and the cover portion 315 are respectively have configurations similar to respective configurations of, for example, the base 10, screen 12, reflective mirror 12, and cover portion 15 described above.

In the image display apparatus 300, a screen unit 320 is formed by the screen 312 and the cover portion 315. The screen unit 320 is a portion on which an image is displayed to a viewer who is viewing the image display apparatus 301, where the screen 312 in the form of a cylinder and the cover portion 315 in the form of a cylinder are arranged about the same axis. Two ends of the screen 312 are opened, and two ends of the cover portion 315 are opened.

Further, the screen 312 and the cover portion 315 are transparent members. The screen 312 is rotated by the rotational mechanism, and the cover portion 315 is fixed to the base 310 in order to protect the rotated screen 312. The reflective mirror 313 is fixed to the cover portion 315 included in the screen unit 320. However, the reflective mirror 313 may be fixed to the screen 312.

Examples of dimensions of the image display apparatus 300 (the screen unit 320) are described. The screen 312 has an outer diameter of 100 mm, and has a thickness of 2 mm. The cover portion 315 has an outer diameter of 108 mm, and has a thickness of 3 mm. A space between the screen 312 and the cover portion 315 is 1 mm. In this case, the screen unit 320 is less likely to appear to be a two-layered unit since the space between the screen 312 and the cover portion 315 is small. This enables the screen 312 and the cover portion 315 to exhibit a more attractive appearance of oneness, and thus to enhance the aesthetic appearance of the screen unit 320.

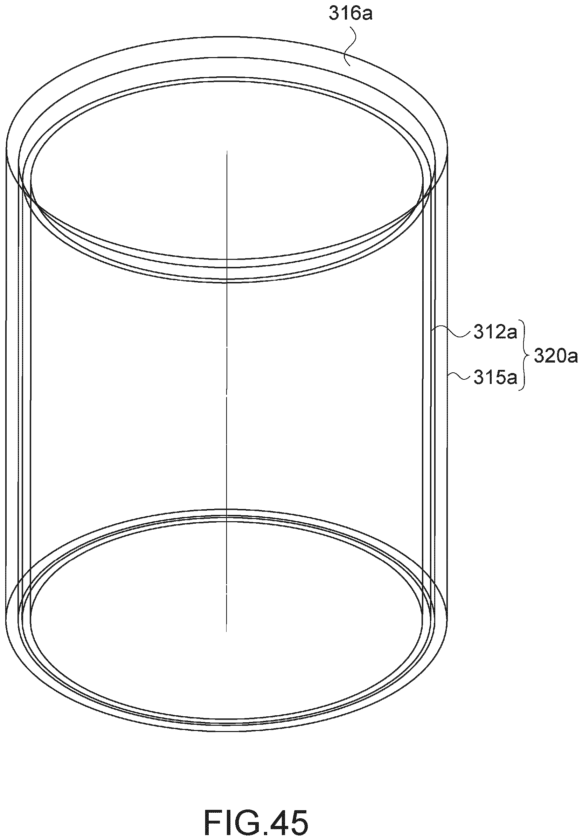

Fig. 45 is a perspective view illustrating another example of a configuration of a screen unit.

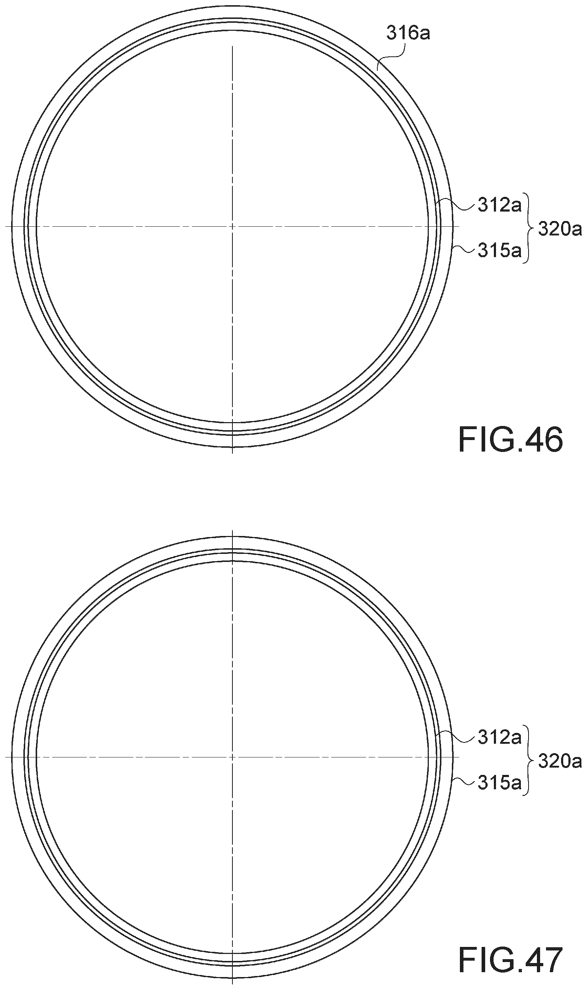

Fig. 46 is a plan view of the screen unit illustrated in Fig. 45.

Fig. 47 is a bottom view of the screen unit illustrated in Fig. 45.

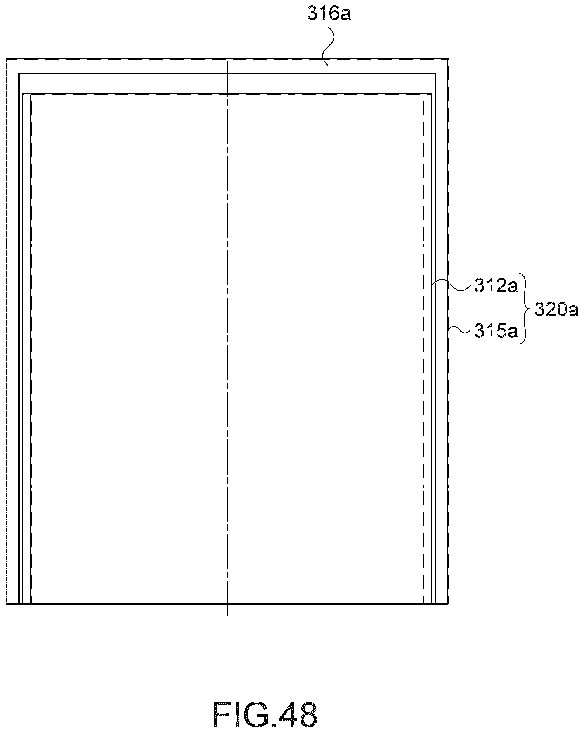

Fig. 48 is a side view of the screen unit illustrated in Fig. 45.

A screen unit 320a illustrated in Fig. 45 is a modification of the screen unit 320 illustrated in Fig. 42, where a screen 312a in the form of a cylinder and a cover portion 315a in the form of a cylinder are arranged about the same axis to form the screen unit 320a. Two ends of the screen 312a are opened, an upper end of the cover portion 315a is closed, and a lower end of the cover portion 315a is opened. A lid portion 316a that has a circular flat-plate shape and covers the upper end of the cover portion 315a may be transparent or opaque.

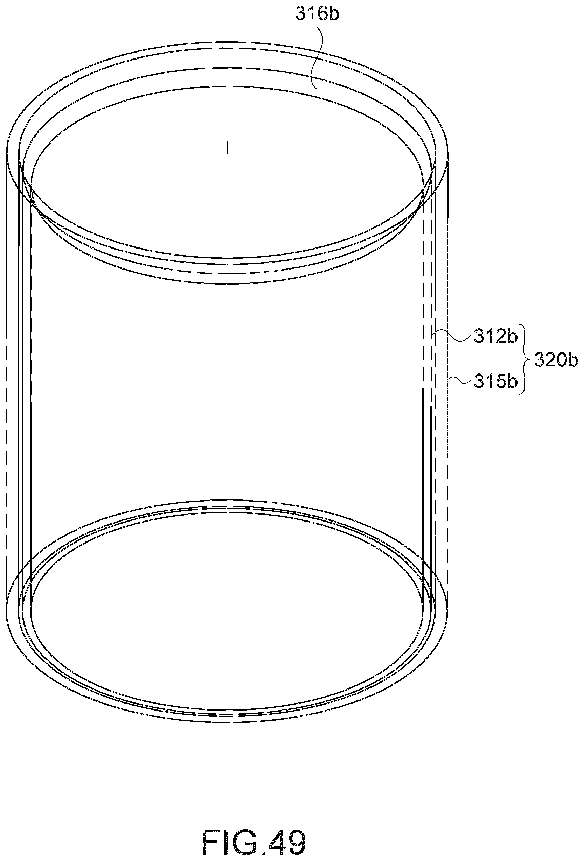

Fig. 49 is a perspective view illustrating another example of a configuration of a screen unit.

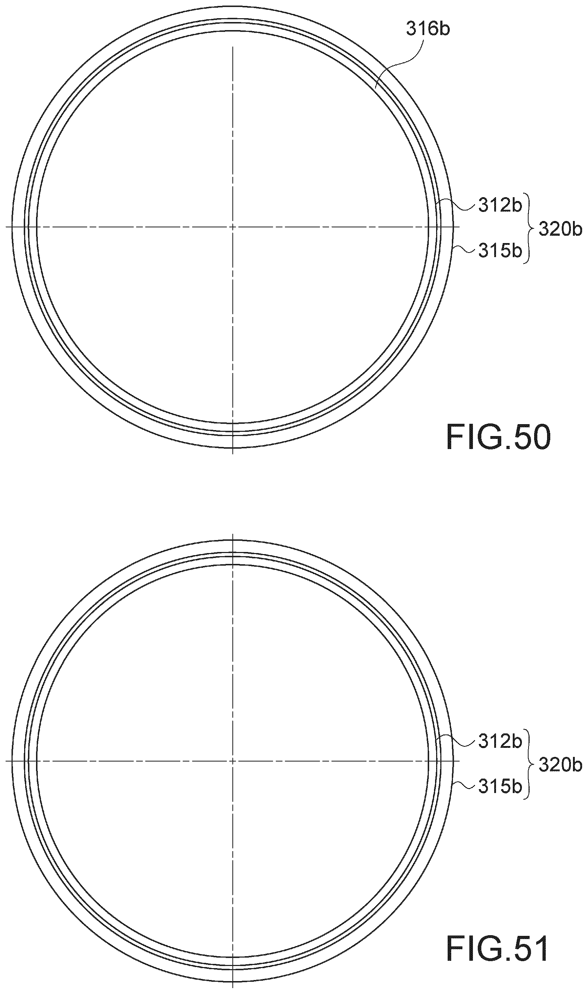

Fig. 50 is a plan view of the screen unit illustrated in Fig. 49.

Fig. 51 is a bottom view of the screen unit illustrated in Fig. 49.

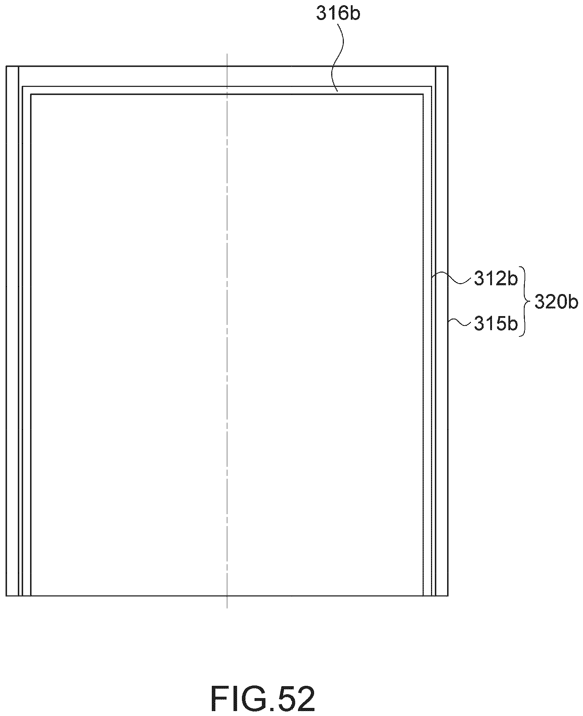

Fig. 52 is a side view of the screen unit illustrated in Fig. 49.

A screen unit 320b illustrated in Fig. 49 is a modification of the screen unit 320 illustrated in Fig. 42, where a screen 312b in the form of a cylinder and a cover portion 315b in the form of a cylinder are arranged about the same axis to form the screen unit 320b. An upper end of the screen 312b is closed, a lower end of the screen 312b is opened, and two ends of the cover portion 315b are opened. A lid portion 316b that has a circular flat-plate shape and covers the upper end of the screen 312b is transparent when, for example, the reflective mirror is fixed to the cover portion 315b. Further, the lid portion 316b may be opaque when, for example, the reflective mirror is fixed to the screen 312b.

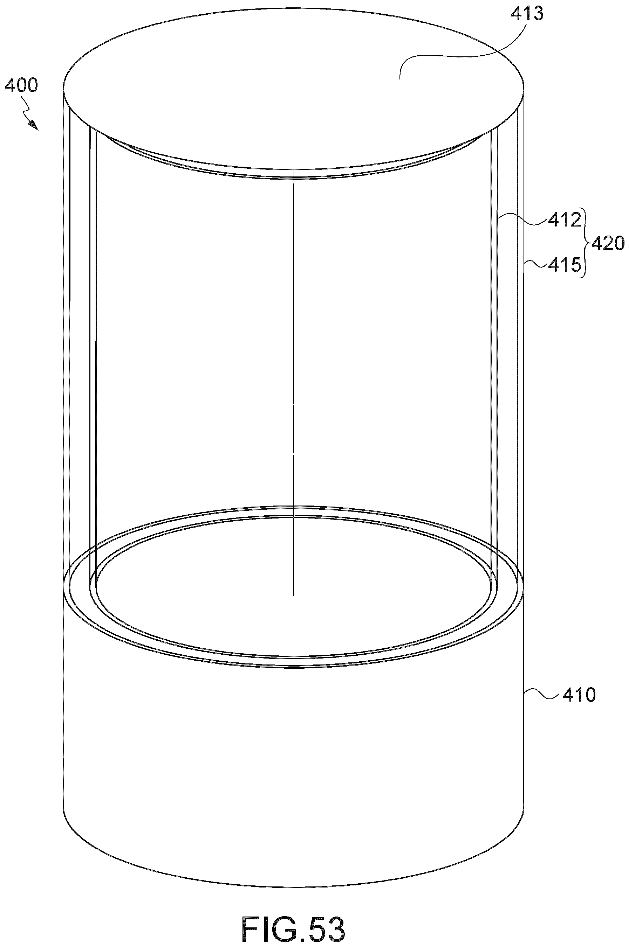

Fig. 53 is a perspective view illustrating another example of a configuration of an image display apparatus.

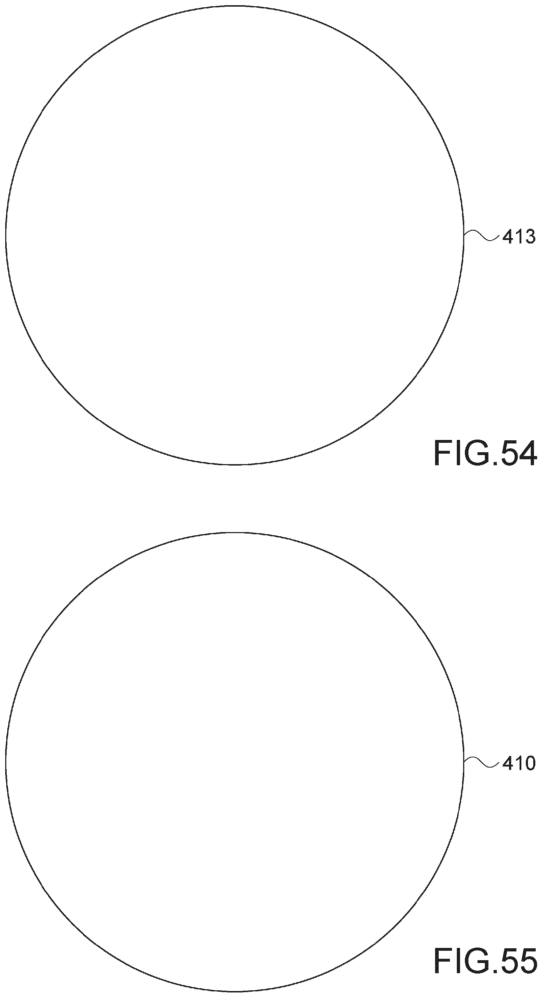

Fig. 54 is a plan view of the image display apparatus illustrated in Fig. 53.

Fig. 55 is a bottom view of the image display apparatus illustrated in Fig. 53.

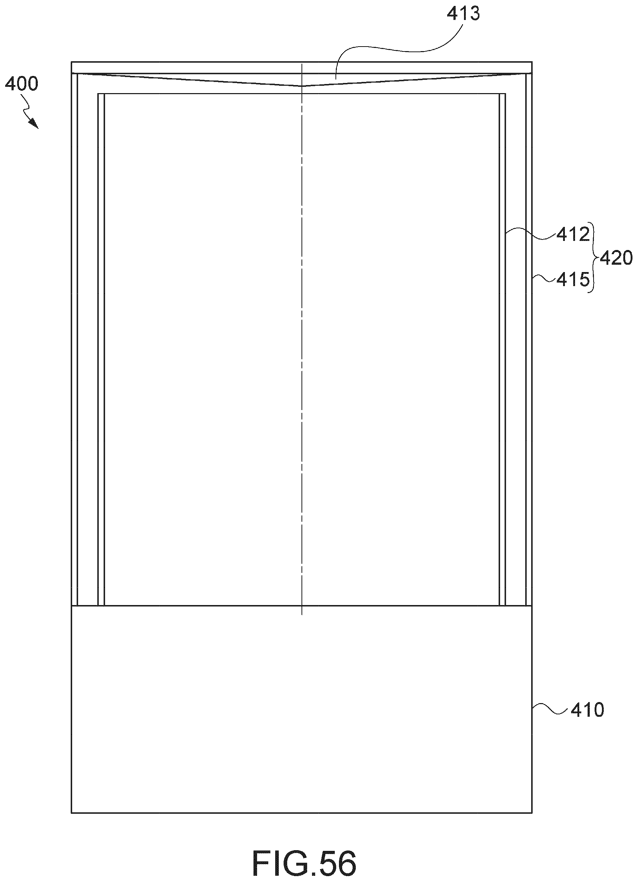

Fig. 56 is a side view of the image display apparatus illustrated in Fig. 53.

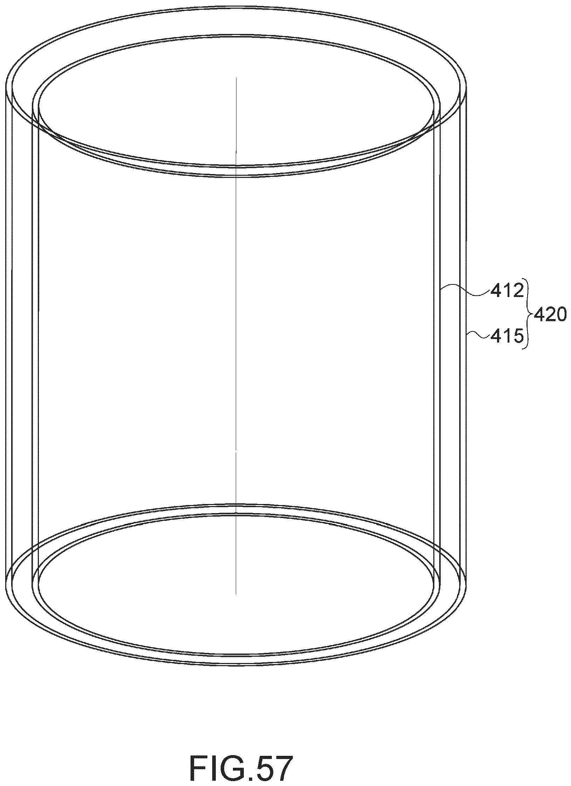

Fig. 57 is a perspective view of a screen unit that is provided to the image display apparatus illustrated in Fig. 53.

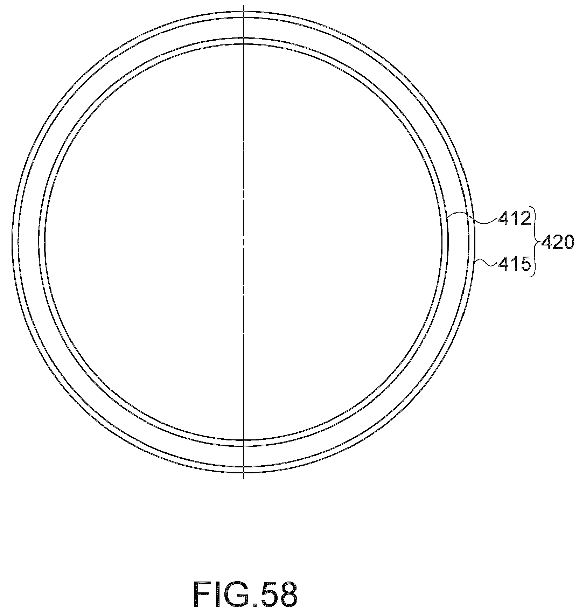

Fig. 58 is a plan view of the screen unit illustrated in Fig. 57.

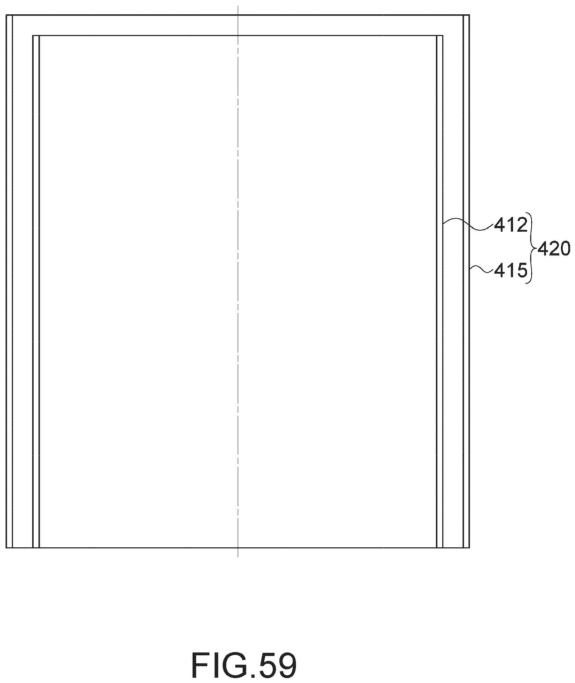

Fig. 59 is a side view of the screen unit illustrated in Fig. 57.

An image display apparatus 400 illustrated in Fig. 53 includes a base 410, a screen 412, a reflective mirror 413, and a cover portion 415. Further, an emitter (not illustrated) and a rotational mechanism (not illustrated) are provided inside of the image display apparatus 401. The base 410, the screen 412, the reflective mirror 413, and the cover portion 415 are respectively have configurations similar to respective configurations of, for example, the base 10, screen 12, reflective mirror 12, and cover portion 15 described above.

In the image display apparatus 400, a screen unit 420 is formed by the screen 412 and the cover portion 415. The screen unit 420 is a portion on which an image is displayed to a viewer who is viewing the image display apparatus 401, where the screen 412 in the form of a cylinder and the cover portion 415 in the form of a cylinder are arranged about the same axis. Two ends of the screen 412 are opened, and two ends of the cover portion 415 are opened.

Further, the screen 412 and the cover portion 415 are transparent members. The screen 412 is rotated by the rotational mechanism, and the cover portion 415 is fixed to the base 410 in order to protect the rotated screen 412. The reflective mirror 413 is fixed to the cover portion 415 included in the screen unit 420. However, the reflective mirror 413 may be fixed to the screen 412.

Examples of dimensions of the image display apparatus 400 (the screen unit 420) are described. The screen 412 has an outer diameter of 200 mm, and has a thickness of 3 mm. The cover portion 415 has an outer diameter of 226 mm, and has a thickness of 3 mm. A space between the screen 412 and the cover portion 415 is 10 mm. In this case, there is room for rotational wobble of the screen 412 since the space between the screen 412 and the cover portion 415 is large. This enables the screen 412 to easily avoid coming into contact with the cover portion 415, and thus to easily manufacture the image display apparatus 400.

At least two of the features of the present technology described above can also be combined. In other words, the various features described in the respective embodiments may be combined discretionarily regardless of the embodiments. Further, the various effects described above are not limitative but are merely illustrative, and other effects may be provided.

In the present disclosure, expressions such as "same", "equal", and "orthogonal" include, in concept, expressions such as "substantially the same", "substantially equal", and "substantially orthogonal". For example, the expressions such as "same", "equal", and "orthogonal" also include states within specified ranges (such as a range of +/-10%), with expressions such as "exactly the same", "exactly equal", and "completely orthogonal" being used as references.

Note that the present technology may also take the following configurations.
(1) An image display apparatus, including:
   an irradiation target that is arranged at least partially about a specified axis and onto which image light is irradiated, the irradiation target including at least one angle controller that emits the pieces of image light at different emission angles for respective regions that are on the irradiation target and in which the pieces of image light are incident on the irradiation target, and/or for respective positions that are on the irradiation target and at which the pieces of image light are incident on the irradiation target;
   a rotational mechanism that rotates the irradiation target about the specified axis;
   an emitter that emits the image light along the specified axis, the emitter being capable of switching between the pieces of image light for at least a period of time shorter than a period of rotation performed by the rotational mechanism;
   an optical section that is arranged to face the emitter on the specified axis, the optical section controlling an incident angle at which the image light emitted by the emitter is incident on the irradiation target; and
   a control section that synchronizes display of an image made up by the image light with the rotation of the irradiation target.
(2) The image display apparatus according to (1), in which
   the angle controller includes a plurality of division regions splitting the image light incident on the angle controller through the optical section to respectively emit, at the different emission angles, the pieces of image light obtained by the split.
(3) The image display apparatus according to (2), in which
   the plurality of division regions extends on the irradiation target in parallel with a direction along the specified axis.
(4) The image display apparatus according to (2) or (3), in which
   the emission angles are respectively set for the plurality of division regions such that the emission angles include different components of angles formed in an orthogonal plane that is orthogonal to the specified axis.
(5) The image display apparatus according to (4), in which
   the emission angles are respectively set for the plurality of division regions such that the image light emitted from each of the plurality of division regions is converged or diverged in the orthogonal plane.
(6) The image display apparatus according to at least one of (2) to (5), in which
   each of the plurality of division regions is capable of diffusing the image light to emit the diffused light at the emission angle set for the division region, and
   with respect to an angle range of an angle at which each of the plurality of division regions diffuses the image light, an angle range of the angle formed in the orthogonal plane orthogonal to the specified axis is smaller than an angle range of the angle formed with the orthogonal plane.
(7) The image display apparatus according to at least one of (2) to (6), in which
   the angle controller includes a non-diffusive region that is formed between division regions of the plurality of division regions that are adjacent to each other, the non-diffusive region not diffusing the image light.
(8) The image display apparatus according to at least one of (2) to (7), in which
   the irradiation target includes a plurality of the angle controllers that corresponds to the at least one angle controller.
(9) The image display apparatus according to (8), in which
   the plurality of the angle controllers includes an angle controller for red light, an angle controller for green light, and an angle controller for blue light.
(10) The image display apparatus according to at least one of (2) to (9), in which
   the control section synchronizes display of a viewpoint image made up by the image light with the rotation of the irradiation target such that the viewpoint images are viewable at respectively corresponding viewpoints of a plurality of viewpoints set around the irradiation target.
(11) The image display apparatus according to (10), in which
   the plurality of viewpoints is set annularly about the specified axis,
   the angle controller includes a non-diffusive region that is formed between division regions of the plurality of division regions that are adjacent to each other, the non-diffusive region not diffusing the image light,
   when a border between projection ranges and the division region overlap each other, the control section turns off the display of the image made up by the image light, each projection range being obtained by division being performed with an angle pitch set correspondingly to the plurality of viewpoints, and
   when the border between the projection ranges and the non-diffusive region overlap each other, the control section turns on the display of the image made up by the image light.
(12) The image display apparatus according to (10), in which
   the plurality of viewpoints is set annularly about the specified axis,
   the viewpoint image is an image in which a display region and a non-display region are set in a region provided on the basis of an angle pitch set correspondingly to the plurality of viewpoints, the display region being a region on which an image is displayed, the non-display region being a region on which no image is displayed,
   when a border of the division region and the display region overlap each other, the control section turns off the display of the image made up by the image light, and
   when the border of the division region and the display region do not overlap each other, the control section turns on the display of the image made up by the image light.
(13) The image display apparatus according to at least one of (1) to (12), in which
   the irradiation target is a screen that uses a holographic optical element.
(14) The image display apparatus according to at least one of (1) to (13), in which
   the irradiation target has light-transmissive properties.
(15) The image display apparatus according to at least one of (1) to (14), in which
   the optical section performs control such that the incident angle at which the image light is incident on the irradiation target is substantially constant.
(16) The image display apparatus according to at least one of (1) to (15), further including
   a cover portion that is arranged to surround the irradiation target, the cover portion having light-transmissive properties.
(17) The image display apparatus according to (16), in which
   the optical section is fixed to the cover portion.
(18) The image display apparatus according to at least one of (1) to (17), in which
   the emitter and the rotational mechanism are arranged on the same side, as viewed from the irradiation target.
(19) The image display apparatus according to at least one of (1) to (18), in which
   the rotational mechanism includes a hollow motor that rotates about the specified axis, and
   at least a portion of the emitter is arranged in an opening of the hollow motor.
(20) The image display apparatus according to at least one of (1) to (19), in which
   the irradiation target is in the form of a cylinder of which a substantially central axis is the specified axis.

### Reference Signs List

O optical axis
P viewpoints
1 image light
2 viewer
11 emitter
12, 12a to 12z, 312, 312a, 312b, 412 screen
13, 313, 413 reflective mirror
14 rotational mechanism
15, 315, 415 cover portion
19 controller
20 transmissive HOE
21 reflective HOE
22, 22R, 22G, 22B angle controller
23, 23R, 23G, 23B division region
24 non-diffusive region
30 viewpoint image
37 display region
38 non-display region
55 hollow motor
100, 200, 201, 202, 203, 300, 400 image display apparatus

## Claims

1. An image display apparatus, comprising:
an irradiation target that is arranged at least partially about a specified axis and onto which image light is irradiated, the irradiation target including at least one angle controller that emits the pieces of image light at different emission angles for respective regions that are on the irradiation target and in which the pieces of image light are incident on the irradiation target, and/or for respective positions that are on the irradiation target and at which the pieces of image light are incident on the irradiation target;
a rotational mechanism that rotates the irradiation target about the specified axis;
an emitter that emits the image light along the specified axis, the emitter being capable of switching between the pieces of image light for at least a period of time shorter than a period of rotation performed by the rotational mechanism;
an optical section that is arranged to face the emitter on the specified axis, the optical section controlling an incident angle at which the image light emitted by the emitter is incident on the irradiation target; and
a control section that synchronizes display of an image made up by the image light with the rotation of the irradiation target.

2. The image display apparatus according to claim 1, wherein
the angle controller includes a plurality of division regions splitting the image light incident on the angle controller through the optical section to respectively emit, at the different emission angles, the pieces of image light obtained by the split.

3. The image display apparatus according to claim **2,** wherein
the plurality of division regions extends on the irradiation target in parallel with a direction along the specified axis.

4. The image display apparatus according to claim 2, wherein
the emission angles are respectively set for the plurality of division regions such that the emission angles include different components of angles formed in an orthogonal plane that is orthogonal to the specified axis.

5. The image display apparatus according to claim 4, wherein
the emission angles are respectively set for the plurality of division regions such that the image light emitted from each of the plurality of division regions is converged or diverged in the orthogonal plane.

6. The image display apparatus according to claim 2, wherein
each of the plurality of division regions is capable of diffusing the image light to emit the diffused light at the emission angle set for the division region, and
with respect to an angle range of an angle at which each of the plurality of division regions diffuses the image light, an angle range of the angle formed in the orthogonal plane orthogonal to the specified axis is smaller than an angle range of the angle formed with the orthogonal plane.

7. The image display apparatus according to claim 2, wherein
the angle controller includes a non-diffusive region that is formed between division regions of the plurality of division regions that are adjacent to each other, the non-diffusive region not diffusing the image light.

8. The image display apparatus according to claim 2, wherein
the irradiation target includes a plurality of the angle controllers that corresponds to the at least one angle controller.

9. The image display apparatus according to claim 8, wherein
the plurality of the angle controllers includes an angle controller for red light, an angle controller for green light, and an angle controller for blue light.

10. The image display apparatus according to claim 2, wherein
the control section synchronizes display of a viewpoint image made up by the image light with the rotation of the irradiation target such that the viewpoint images are viewable at respectively corresponding viewpoints of a plurality of viewpoints set around the irradiation target.

11. The image display apparatus according to claim 10, wherein
the plurality of viewpoints is set annularly about the specified axis,
the angle controller includes a non-diffusive region that is formed between division regions of the plurality of division regions that are adjacent to each other, the non-diffusive region not diffusing the image light,
when a border between projection ranges and the division region overlap each other, the control section turns off the display of the image made up by the image light, each projection range being obtained by division being performed with an angle pitch set correspondingly to the plurality of viewpoints, and
when the border between the projection ranges and the non-diffusive region overlap each other, the control section turns on the display of the image made up by the image light.

12. The image display apparatus according to claim 10, wherein
the plurality of viewpoints is set annularly about the specified axis,
the viewpoint image is an image in which a display region and a non-display region are set in a region provided on a basis of an angle pitch set correspondingly to the plurality of viewpoints, the display region being a region on which an image is displayed, the non-display region being a region on which no image is displayed,
when a border of the division region and the display region overlap each other, the control section turns off the display of the image made up by the image light, and
when the border of the division region and the display region do not overlap each other, the control section turns on the display of the image made up by the image light.

13. The image display apparatus according to claim 1, wherein
the irradiation target is a screen that uses a holographic optical element.

14. The image display apparatus according to claim 1, wherein
the irradiation target has light-transmissive properties.

15. The image display apparatus according to claim 1, wherein
the optical section performs control such that the incident angle at which the image light is incident on the irradiation target is substantially constant.

16. The image display apparatus according to claim 1, further comprising
a cover portion that is arranged to surround the irradiation target, the cover portion having light-transmissive properties.

17. The image display apparatus according to claim 16, wherein
the optical section is fixed to the cover portion.

18. The image display apparatus according to claim 1, wherein
the emitter and the rotational mechanism are arranged on the same side, as viewed from the irradiation target.

19. The image display apparatus according to claim 1, wherein
the rotational mechanism includes a hollow motor that rotates about the specified axis, and
at least a portion of the emitter is arranged in an opening of the hollow motor.

20. The image display apparatus according to claim 1, wherein
the irradiation target is in the form of a cylinder of which a substantially central axis is the specified axis.
